(19) Europäisches Patentamt
European Patent Office
Office européen des brevets

(11) EP 3 401 760 B1

(12) **EUROPEAN PATENT SPECIFICATION**

(45) Date of publication and mention of the grant of the patent:
**25.11.2020 Bulletin 2020/48**

(21) Application number: **16883632.8**

(22) Date of filing: **08.01.2016**

(51) Int Cl.:
***G09B 21/00*** *(2006.01)* ***G06F 3/01*** *(2006.01)*
***G06F 3/16*** *(2006.01)* ***G06F 3/0488*** *(2013.01)*

(86) International application number:
**PCT/JP2016/050558**

(87) International publication number:
**WO 2017/119129 (13.07.2017 Gazette 2017/28)**

(54) **ELECTRONIC DEVICE AND DRIVE CONTROL METHOD FOR ELECTRONIC DEVICE**

ELEKTRONISCHE VORRICHTUNG UND ANTRIEBSSTEUERUNGSVERFAHREN FÜR EINE ELEKTRONISCHE VORRICHTUNG

DISPOSITIF ÉLECTRONIQUE ET PROCÉDÉ DE COMMANDE DE PILOTAGE POUR UN DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.11.2018 Bulletin 2018/46**

(73) Proprietor: **Fujitsu Limited**
**Kawasaki-shi, Kanagawa 211-8588 (JP)**

(72) Inventors:
- **ENDO, Yasuhiro**
  **Kawasaki-shi**
  **Kanagawa 212-8554 (JP)**
- **KAMATA, Yuichi**
  **Kawasaki-shi**
  **Kanagawa 211-8588 (JP)**
- **TANINAKA, Kiyoshi**
  **Kawasaki-shi**
  **Kanagawa 211-8588 (JP)**
- **MIYAMOTO, Akinori**
  **Kawasaki-shi**
  **Kanagawa 211-8588 (JP)**
- **YOSHIMOTO, Koji**
  **Kawasaki-shi**
  **Kanagawa 211-8588 (JP)**

(74) Representative: **Haseltine Lake Kempner LLP**
**138 Cheapside**
**London EC2V 6BJ (GB)**

(56) References cited:
**EP-A1- 2 778 856**
**EP-A1- 2 801 967**
**EP-A2- 2 590 067**
**JP-A- 2015 207 242**
**JP-A- 2015 228 054**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 401 760 B1

## Description

[Technical Field]

The present disclosure relates to an electronic device, and a method of driving the electronic device.

[Background Art]

Conventionally, there has been an information processing apparatus that includes a touch panel to generate positional information within an operation area depending on a position touched with a touch operation in the operation area; a sound generation means to generate sound; and a control means configured to cause the sound generation means to generate a predetermined sound depending on the positional information input from the touch panel.

The control means includes a division processing means configured, when first positional information is input from the touch panel, to divide the operation area into multiple areas by multiple lines connecting a position in the operation area obtained depending on the first positional information and edges of the operation area; and a correspondence processing means configured to associate each of the areas with an executable process and a sound corresponding to the process.

The control means further includes a sound generation processing means configured, when second positional information different from the first positional information is input from the touch panel, to cause the sound generating means to generate the sound corresponding to an area among the areas that includes the position obtained depending on the second positional information (see, for example, Patent Document 1).

[Related-Art Documents]

[Patent Documents]

[Patent Document 1] Japanese Laid-Open Patent Publication No. 2012-123689

[Patent Document 2] EP2801967 (A1) discloses an electronic device and a method which may visually provide information to a user, and notify the user of the information through other senses (e.g., a tactile sense, a hearing sense, etc.). The method includes performing voice guidance of information displayed on the touch screen in a predetermined order, detecting a user's input through the touch screen, and changing the order and performing the voice guidance in the changed order, when the detected user's input is a direction change input. The voice guidance can be combined with haptic output to allow a user to recognize the location on the screen. The haptic output unit close to the location of the interaction is activated to generate the haptic output.

[Patent Document 3] EP2590067 (A2) discloses systems and methods for multi-pressure interaction on touch-sensitive surfaces. One disclosed embodiment of a method comprises receiving a first sensor signal from a touch-sensitive input device in response to a first contact of a first object on the touch-sensitive input device, the first sensor signal comprising a first location and a first pressure of the first contact, receiving a second sensor signal from the touch-sensitive input device in response to a second contact of a second object on the touch-sensitive input device substantially simultaneously with the first contact, the second sensor signal comprising a second location of the second contact and a second pressure of the second contact, generating a signal based at least in part on the first sensor signal and the second sensor signal, the signal configured to cause a haptic effect, and outputting the signal. The system disclosed outputs acoustic feedback combined with haptic feedback, the haptic output depending on the velocity of the detected input.

[Patent Document 4] EP2778856 (A1) discloses systems and methods for haptic and gesture-driven paper simulation. For example, one disclosed method includes the steps of receiving an electronic document; receiving metadata associated with the electronic document, the metadata comprising a characteristic indicating a type of paper; generating and transmitting a display signal configured to cause display of the at least a portion of the document; and generating and transmitting a haptic signal based on the type of paper, the haptic signal configured to cause a haptic output device to generate a haptic effect The system also generates audible information, whereby the audible information depends on the velocity of the input motion. The metadata can also comprise audio information, such as a synthesized voice.

Meanwhile, such a conventional information processing apparatus vibrates the entire touch panel, and as a vibration element, uses an eccentric motor or a voice coil motor.

Because of this, it cannot vibrate one of the multiple areas that partition the operation area, and when the user touches the touch panel with both hands or multiple fingers, the user cannot distinguish an area by vibration. For example, it is difficult for a visually handicapped user to distinguish an area based on vibration. Also, it is difficult to distinguish an area based on vibration without visual observation.

[Summary of the Invention]

[Problem to be Solved by Invention]

Thereupon, it is an object to provide an electronic device with which multiple areas can be distinguished by sound and vibration, and a method of driving the electronic device.

[Means to Solve the Problem]

The present invention is defined by the appended independent claim(s), to which reference should now be made. Specific embodiments are defined in the dependent claims.

[Advantage of the Invention]

It is possible to provide an electronic device with which multiple areas can be distinguished by sound and vibration, and a method of driving the electronic device.

[Brief Description of Drawings]

FIG. 1 is a perspective view illustrating an electronic device in an embodiment;
FIG. 2 is a plan view illustrating an electronic device in an embodiment;
FIG. 3 is a cross-sectional view of an electronic device along a line designated with arrows A-A in FIG. 2;
FIG. 4 includes diagrams illustrating a wave crest formed in parallel with a short side of a top panel 120 among standing waves generated on a top panel by natural vibration in an ultrasonic range;
FIG. 5 includes diagrams illustrating how dynamic frictional force acting on a fingertip performing an input operation changes with natural vibration in an ultrasonic range generated on a top panel of an electronic device;
FIG. 6 is a diagram illustrating a configuration of an electronic device in an embodiment;
FIG. 7 is a diagram illustrating an amplitude of a standing wave generated on a top panel;
FIG. 8 is a diagram illustrating an amplitude of a standing wave generated on a top panel;
FIG. 9 is a diagram illustrating an amplitude of a standing wave generated on a top panel;
FIG. 10 is a diagram illustrating three areas where vibration is generated autonomously on a top panel;
FIG. 11 is a diagram illustrating three areas where vibration is generated autonomously on a top panel;
FIG. 12 is a diagram illustrating three areas where vibration is generated autonomously on a top panel;
FIG. 13 is a diagram illustrating a drive pattern of a vibration element when a user performs an input operation on an electronic device of an embodiment;
FIG. 14 is a diagram illustrating a display on a display panel in a summary guidance mode of an electronic device;
FIG. 15 is a diagram illustrating a state in which a vibration is being generated on a top panel;
FIG. 16 is a diagram illustrating a state in which a vibration is being generated on a top panel;
FIG. 17 is a diagram illustrating a state in which a vibration is being generated on a top panel;
FIG. 18 is a diagram illustrating a display on a display panel in a detailed guidance mode of an electronic device;
FIG. 19 is a diagram illustrating an example of an operation in a detailed guidance mode of an electronic device;
FIG. 20 is a diagram illustrating an example of a drive signal in a detailed guidance mode of an electronic device;
FIG. 21 is a diagram illustrating an example of a drive signal in a detailed guidance mode of an electronic device;
FIG. 22 is a diagram illustrating an example of an operation in a detailed guidance mode of an electronic device;
FIG. 23 is a diagram illustrating an example of an operation in a detailed guidance mode of an electronic device;
FIG. 24 is a diagram illustrating an example of an operation in a detailed guidance mode of an electronic device;
FIG. 25 is a diagram illustrating an example of a drive signal in a detailed guidance mode of an electronic device;
FIG. 26 is a diagram illustrating a data structure used in a summary guidance mode;
FIG. 27 is a diagram illustrating a data structure used in a detailed guidance mode;
FIG. 28 is a flowchart illustrating a process executed by a controller of an electronic device;
FIG. 29 is a diagram illustrating a modified example of a display on a display panel in a summary guidance mode of an electronic device;
FIG. 30 is a diagram illustrating a modified example of an operation in a detailed guidance mode of an electronic device;
FIG. 31 is a diagram illustrating a modified example of a drive signal in a detailed guidance mode of an electronic device;
FIG. 32 is a diagram illustrating a modified example of a drive signal in a detailed guidance mode of an electronic device;
FIG. 33 is a diagram illustrating a modified example of a display on a display panel of an electronic device;
FIG. 34 is a diagram illustrating a top panel, a touch panel, and a display panel of an in-vehicle electronic device;
FIG. 35 is a diagram illustrating an example of an operating state in a summary guidance mode of an electronic device illustrated in FIG. 34;

FIG. 36 is a diagram illustrating a display on a display panel in a detailed guidance mode of the electronic device illustrated in FIG. 34;

FIG. 37 is a diagram illustrating another display on a display panel in a detailed guidance mode of the electronic device illustrated in FIG. 34;

FIG. 38 is a diagram illustrating another display on a display panel in a detailed guidance mode of the electronic device illustrated in FIG. 34;

FIG. 39 is a diagram illustrating a modified example of a display on a display panel in a summary guidance mode of the electronic device illustrated in FIG. 34;

FIG. 40 is a diagram illustrating a modified example of a display on a display panel in a detailed guidance mode of the electronic device illustrated in FIG. 34;

FIG. 41 is a diagram illustrating a modified example of a display on a display panel in a detailed guidance mode of the electronic device illustrated in FIG. 34;

FIG. 42 is a diagram illustrating a modified example of a display on a display panel in a summary guidance mode of an electronic device;

FIG. 43 is a diagram illustrating a display on a display panel in a summary guidance mode of an electronic device;

FIG. 44 is a diagram illustrating a display on a display panel in a summary guidance mode of an electronic device;

FIG. 45 is a diagram illustrating a display on a display panel in a detailed guidance mode of the electronic device illustrated in FIG. 43;

FIG. 46 is a diagram illustrating another display on a display panel in a detailed guidance mode of the electronic device illustrated in FIG. 43;

FIG. 47 is a diagram illustrating another display on a display panel in a detailed guidance mode of the electronic device illustrated in FIG. 43;

FIG. 48 is a diagram illustrating a modified example of a display on a display panel in a summary guidance mode of an electronic device;

FIG. 49 is a diagram illustrating a display on a display panel in a summary guidance mode of an electronic device;

FIG. 50 is a diagram illustrating a display on a display panel in a summary guidance mode of an electronic device;

FIG. 51 is a diagram illustrating a display on a display panel in a detailed guidance mode of the electronic device illustrated in FIG. 49;

FIG. 52 is a diagram illustrating another display on a display panel in a detailed guidance mode of the electronic device illustrated in FIG. 49;

FIG. 53 is a diagram illustrating another display on a display panel in a detailed guidance mode of the electronic device illustrated in FIG. 49;

FIG. 54 is a cross-sectional view of an electronic device;

FIG. 55 is a cross-sectional view illustrating an electronic device in a modified example of an embodiment;

FIG. 56 is a plan view illustrating an electronic device in a modified example of an embodiment;

FIG. 57 is a diagram illustrating an area where vibration is generated autonomously on a top panel of an electronic device;

FIG. 58 is a diagram illustrating an area where vibration is generated autonomously on a top panel of an electronic device;

FIG. 59 is a diagram illustrating an area where vibration is generated autonomously on a top panel of an electronic device;

FIG. 60 is a diagram illustrating an area where vibration is generated autonomously on a top panel of an electronic device;

FIG. 61 is a diagram illustrating an area where vibration is generated autonomously on a top panel of an electronic device;

FIG. 62 is a plan view illustrating an electronic device in a modified example of an embodiment;

FIG. 63 is a plan view illustrating an electronic device in a modified example of an embodiment;

FIG. 64 is a diagram illustrating an area where vibration is generated autonomously on a top panel of an electronic device;

FIG. 65 is a diagram illustrating an area where vibration is generated autonomously on a top panel of an electronic device; and

FIG. 66 is a diagram illustrating an area where vibration is generated autonomously on a top panel of an electronic device.

[Mode for Carrying Out the Invention]

In the following, embodiments of an electronic device and a method of driving the electronic device will be described.

It is possible to provide an electronic device with which multiple areas can be distinguished by sound and vibration, and a method of driving the electronic device.

<Embodiments>

FIG. 1 is a perspective view illustrating an electronic device 100 in an embodiment.

The electronic device 100 is a smart phone or a tablet computer that includes, for example, a touch panel as an input operation part. Since the electronic device 100 simply needs to be a device that includes a touch panel as an input operation part, it may be, for example, a mobile information terminal or a device that is installed and used in a specific place, such as an ATM (Automatic Teller Machine).

An input operation part 101 of the electronic device 100 has a display panel placed under a touch panel, on which various buttons 102A, sliders 102B, and the like (referred to as a GUI operation part 102, below) of GUI (Graphic User Interface) are displayed.

Normally, the user of the electronic device 100 touches the input operation part 101 with a fingertip in order to operate the GUI operation part 102. Also, the electronic device 100 includes the speaker 103. The speaker 103 is an example of a sound outputter.

Next, by using FIG. 2, a specific configuration of the electronic device 100 will be described.

FIG. 2 is a plan view illustrating the electronic device 100 in the embodiment, and FIG. 3 is a cross-sectional view of the electronic device 10 along a line designated with arrows A-A in FIG. 2. Note that in FIG. 2 and FIG. 3, an XYZ coordinate system is defined as an orthogonal coordinate system as illustrated.

The electronic device 100 includes a housing 110, a top panel 120, a double-sided tape 130, vibration elements 140A1, 140A2, 140A3, a touch panel 150, a display panel 160, and a substrate 170.

The housing 110 is made of, for example, resin, and as illustrated in FIG. 3, has the substrate 170, the display panel 160, and the touch panel 150 placed in a depressed portion 110A, on which the top panel 120 is adhered by the double-sided tape 130.

The top panel 120 is a thin, plate-shaped member that is rectangular in plan view, and is made of a transparent glass or a reinforced plastic such as polycarbonate. The surface of the top panel 120 (a surface on the side in the positive direction of the Z-axis) is an example of an operation surface on which the users of the electronic device 100 performs an input operation.

The top panel 120 has the vibration elements 140A1, 140A2, and 140A3 (referred to as 140A1-140A3, below) adhered on a surface on the side in the negative direction of the Z-axis, and has four sides in plan view adhered to the housing 110 with the double-sided tape 130. Note that the double-sided tape 130 simply needs to be capable of having the four sides of the top panel 120 adhered to the housing 110, and does not need to be rectangular and toroidal as illustrated in FIG. 3.

The touch panel 150 is placed on the side in the negative direction of the Z-axis of the top panel 120. The top panel 120 is provided in order to protect the surface of the touch panel 150. Note that another panel, a protective film, or the like may be provided on the surface of the top panel 120.

In a state where the vibration elements 140A1-140A3 are adhered to the surface on the side in the negative direction of the Z-axis, the top panel 120 vibrates when the vibration elements 140A1-140A3 are driven. In the embodiment, the top panel 120 is vibrated with the natural vibration frequency of the top panel 120, to generate a standing wave on the top panel 120. However, in practice, since the vibration elements 140A1-140A3 are adhered to the top panel 120, it is desirable to determine the natural vibration frequency taking the weight of the vibration elements 140 and the like into consideration.

On the surface of the top panel 120 on the side in the negative direction of the Z-axis, the vibration elements 140A1-140A3 are adhered along the short side that extends in the Y-axis direction on the side in the negative direction of the X-axis. The vibration elements 140A1-140A3 simply need to be elements that can generate vibration in an ultrasonic range, for example, a device including a piezo-electric element may be used.

Here, any one of the vibration elements 140A1-140A3 is an example of a first vibration element, and any one of the other vibration elements 140A1-140A3 is an example of a second vibration element.

The vibration elements 140A1-140A3 are driven by a drive signal output from a drive controller, which will be described later. The amplitude (strength) and the frequency of a vibration generated by the vibration elements 140A1-140A3 are set by the drive signal. Also, the drive signal controls turning on and off the vibration elements 140A1-140A3. The vibration elements 140A1-140A are turned on and off independently from each other.

Note that the ultrasonic range here means a frequency band of, for example, approximately over 20 kHz. In the electronic device 100 in the embodiment, since the frequency at which the vibration elements 140A1-140A3 vibrate is equivalent to the vibration frequency of the top panel 120, the vibration elements 140A1-140A3 are driven by the drive signal so as to vibrate at the natural frequency of the top panel 120. This is the same in the case of driving all the vibration elements 140A1-140A3, in the case of driving any two of these, and in the case of driving any one of these.

The touch panel 150 is placed above the display panel 160 (on the side in the positive direction of the Z-axis) and under the top panel 120 (on the side in the negative direction of the Z-axis). The touch panel 150 is an example of a position detector to detect a position at which the user of the electronic device 100 touches the top panel 120 (referred to as the position of an input operation, below).

Various buttons and the like of the GUI (referred to as GUI operation parts, below) are displayed on the display panel 160 under the touch panel 150. Therefore, the user of the electronic device 100 normally touches the top panel 120 with a fingertip, in order to operate a GUI operation part.

The touch panel 150 simply needs to be a position detector that can detect the position of an input operation performed by the user on the top panel 120, and may be a position detector of, for example, an electrostatic capacitance type or a resistance film type. Here, the embodiment will be described with the touch panel 150 being a position detector of an electrostatic capacitance type. Even if a space lies between the touch panel 150 and the top panel 120, the electrostatic-capacitance-type touch panel 150 can detect an input operation on the top panel 120.

Also, although the embodiment will be described here in which the top panel 120 is placed on the input surface side of the touch panel 150, the top panel 120 may be uniformly formed with the touch panel 150. In this case, the surface of the touch panel 150 corresponds to the surface of the top panel 120 illustrated in FIG. 2 and FIG. 3, which constitutes the operation surface. Also, a configuration is possible in which the top panel 120 illustrated in FIG. 2 and FIG. 3 is omitted. Also in this case, the surface of the touch panel 150 constitutes the operation surface. Also, in any case, it is simply necessary to vibrate the member having the operation surface at the natural vibration of the member.

Also, in the case of the touch panel 150 being an electrostatic capacitance type, the touch panel 150 may be placed above the top panel 120. Also in this case, the surface of the touch panel 150 constitutes the operation surface. Also, in the case of the touch panel 150 being an electrostatic capacitance type, a configuration is possible in which the top panel 120 illustrated in FIG. 2 and FIG. 3 is omitted. Also in this case, the surface of the touch panel 150 constitutes the operation surface. Also, in any case, it is simply necessary to vibrate the member having the operation surface at the natural vibration of the member.

The display panel 160 simply needs to be a display that can display an image, for example, a liquid crystal display panel or an organic EL (Electroluminescence) panel. The display panel 160 is installed in the depressed portion 110A of the housing 110, and on the substrate 170 (on the side in the positive direction of the Z-axis) with a holder or the like (not illustrated).

The display panel 160 is driven and controlled by a driver IC (Integrated Circuit), which will be described later, to display GUI operation parts, images, characters, marks, figures, and the like depending on an operational state of the electronic device 100.

The substrate 170 is placed inside of the depressed portion 110A of the housing 110. On the substrate 170, the display panel 160 and the touch panel 150 are placed. The display panel 160 and the touch panel 150 are fixed to the substrate 170 and the housing 110 with a holder and the like (not illustrated).

The substrate 170 mounts a drive controller, which will be described later, and in addition, various circuits and the like that are necessary to drive the electronic device 100.

When the user touches the top panel 120 with a finger, and a movement of the fingertip is detected, the electronic device 100 configured as above causes the drive controller mounted on the substrate 170 to drive at least one of the vibration elements 140A1-140A3, so as to vibrate the top panel 120 at a frequency in the ultrasonic range. This frequency in the ultrasonic range is a resonance frequency of a resonance system including the top panel 120 and the vibration elements 140A1-140A3, and generates a standing wave on the top panel 120.

The electronic device 100 provides the user with a tactile sensation through the top panel 120 by generating the standing wave in the ultrasonic range.

Next, by using FIGs. 4(a)-4(b), a standing wave generated on the top panel 120 will be described. The electronic device 100 in the embodiment drives the vibration elements 140A1-140A3 depending on the position of an input operation on the top panel 120. The vibration elements 140A1-140A3 are placed at a portion on one side of the top panel 120 along the long side in the back of the top panel 120 as described above.

FIGs. 4(a)-4(b) are diagrams illustrating a wave crest formed in parallel with a short side of the top panel 120 among standing waves generated on the top panel 120 by natural vibration in the ultrasonic range; FIG. 4(a) is a side view and FIG. 4(b) is a perspective view. In FIGs. 4(a)-4(b), XYZ coordinates are defined similarly as in FIG. 2 and FIG. 3. Note that the amplitude of the standing wave is exaggerated in FIGs. 4(a)-4(b) for the sake of understandability. Also, with FIGs. 4(a)-4(b), a standing wave will be described that is generated in the case where one vibration element 140, which is of the same type as the vibration elements 140A1-140A3, is placed along one short side of the top panel 120. The short side of the top panel 120 is a side that extends in the X-axis direction in FIG. 2, and the standing wave to be described is a wave generated in the case where one vibration element 140C is placed at a portion on one side of the top panel 120.

By using the Young's modulus E, the density $\rho$, the Poisson ratio $\delta$, the long side dimension, and the thickness t of the top panel 120, and the number of cycles k of the standing wave that exist in the direction of the long side, the natural frequency (resonance frequency) f of the top panel 120 is represented by the following Expressions (1) and (2). Since the same waveform appears in a standing wave in the units of 1/2 cycles, the number of cycles k takes a value in the units of 0.5, which may be 0.5, 1, 1.5, 2, and so on.

$$f = \frac{\pi k^2 t}{l^2}\sqrt{\frac{E}{3\rho(1-\delta^2)}} \qquad (1)$$

$$f = \alpha k^2 \qquad (2)$$

Note that the coefficient $\alpha$ in Expression (2) collectively represents coefficients other than $k^2$ in Expression (1).

The standing wave illustrated in FIGs. 4(a)-4(b) is a waveform in the case of the number of cycles k being, for example, 10. For example, as the top panel 120, in the case of using a Gorilla glass (registered trademark) having the long-side length 1 of 140 mm, the short-side length of 80 mm, and the thickness the of 0.7 mm, the natural frequency f turns out to be 33.5 kHz in the case of the number of cycles k being 10. In this case, it is simply necessary to use the drive signal having the frequency of 33.5 kHz.

Although the top panel 120 is a plate-shaped member, when the vibration element 140 is driven to generate the natural vibration in the ultrasonic range, the top panel 120 is bent to generate a standing wave on the surface as illustrated in FIGs. 4(a)-4(b).

Note that although in the embodiment described here, a vibration element 140 is adhered along the short side that extends in the X-axis direction on the side in the positive direction of the Y-axis on the surface of the top panel 120 on the side in the negative direction of the Z-axis, two vibration elements 140 may be used. In the case of using two vibration elements 140, the other vibration element 140 may be adhered along the short side that extends in the X-axis direction on the side in the negative direction of the Y-axis on the surface of the top panel 120 on the side in the negative direction of the Z-axis. In this case, the two vibration elements 140 may be placed to be axially symmetric with respect to the central line parallel to the two short sides of the top panel 120 as the axis of symmetry.

Also, in the case of driving the two vibration elements 140, the elements are driven in phase if the number of cycles k is an integer, or driven in reverse phase if the number of cycles k is a fraction (a number including an integer part and a fractional part).

Next, by using FIG. 5, natural vibration in the ultrasonic range will be described, which is generated on the top panel 120 of the electronic device 100.

FIGs. 5(a)-5(b) are diagrams illustrating how dynamic frictional force acting on a fingertip performing an input operation changes with the natural vibration in the ultrasonic range generated on the top panel 120 of the electronic device 100. In FIGs. 5(a)-5(b), the user is performing an input operation by moving a finger from the far side to the closer side of the top panel 120 while touching the top panel 120 with the fingertip. Note that a vibration is turned on and off by turning on and off the vibration elements 140A1-140A3.

Also, in FIGs. 5(a)-5(b), along the depth direction of the top panel 120, a range touched with a finger while vibration is turned off is illustrated in gray, and a range touched with the finger while vibration is turned on is illustrated in white.

The natural vibration in the ultrasonic range is generated on the entire top panel 120 as illustrated in FIGs. 4(a)-4(b), which may be turned on and off; FIGs. 5(a)-5(b) illustrate operational patterns in which vibration is switched between on and off while the user moves the finger from the far side to the closer side of the top panel 120.

To clarify this, in FIGs. 5(a)-5(b), along the depth direction of the top panel 120, the range touched with the finger while vibration is turned off is illustrated in gray, and the range touched with the finger while vibration is turned on is illustrated in white.

In the operational pattern illustrated in FIG. 5(a), vibration is turned off when the user's finger is located in the far side of the top panel 120, and vibration is turned on during the course of moving the finger to the closer side.

On the other hand, in the operational pattern illustrated in FIG. 5(b), vibration is turned on when the user's finger is located in the far side of the top panel 120, and vibration is turned off during the course of moving the finger to the closer side.

Here, when the top panel 120 is caused to generate the natural vibration in the ultrasonic range, the squeeze effect generates an air layer between the surface of the top panel 120 and a finger, and the dynamic friction coefficient decreases when the surface of the top panel 120 is traced with the finger.

Therefore, in FIG. 5(a), in the range on the far side of the top panel 120 illustrated in gray, the dynamic frictional force acting on the fingertip is greater, and the dynamic frictional force acting on the fingertip becomes smaller in the range on the closer side of the top panel 120 illustrated in white.

Therefore, as illustrated in FIG. 5(a), once the vibration is turned on, the user who performs an input operation on the top panel 120 senses that the dynamic frictional force acting on the fingertip declines, and perceives that it has become easier to slide the fingertip. At this moment, a smoother surface of the top panel 120 and a declining dynamic frictional force cause the user to feel as if a concavity existed on the surface of the top panel 120.

On the other hand, in FIG. 5(b), in the range on the far side of the top panel 120 illustrated in white, the dynamic frictional force acting on the fingertip is smaller, and the dynamic frictional force acting on the fingertip becomes greater in the range on the closer side of the top panel 120 illustrated in gray.

Therefore, as illustrated in FIG. 5(b), once the vibration is turned off, the user who performs an input operation on the top panel 120 senses that the dynamic frictional force acting on the fingertip increase, and perceives difficulty in sliding the fingertip or a sense of being checked. Then, such difficulty in sliding the fingertip and an increasing dynamic frictional force cause the user to feel as if a convexity existed on the surface of the top panel 120.

As described above, in the cases of FIGs. 5(a)-5(b), the user can sense a convexity or a concavity with a fingertip. Such a capability of the human being to sense a convexity or a concavity is described in, for example, "Printed-matter Typecasting Method for Haptic Feel Design and Sticky-band Illusion" in Proceedings of the eleventh lecture meeting held by the system integration division of the Society of Instrument and Control Engineers (SI2010 in Sendai), pp. 174-177, December, 2010. See also the description in "Fishbone Tactile Illusion" in Proceedings of the tenth convention of the Virtual Reality Society of Japan, September, 2005.

Note that although it has been described here change of the dynamic frictional force in the case of switching on and off a vibration, the same is applied to the case where the amplitude (strength) of the vibration elements 140A1-140A3 are changed.

Next, by using FIG. 6, a configuration of the electronic device 100 in the embodiment will be described.

FIG. 6 is a diagram illustrating a configuration of the electronic device 100 in the embodiment.

The electronic device 100 includes the vibration elements 140A1-140A3, an amplifier 141, the touch panel 150, a driver IC (Integrated Circuit) 151, the display panel 160, a driver IC 161, an amplifier 181, a speaker 103, a control unit 200, a sinusoidal wave generator 310, and an amplitude modulator 320.

The control unit 200 includes an application processor 220, a communication processor 230, a controller 240, and a memory 250. The control unit 200 is implemented with, for example, an IC chip. The controller 240 has a drive controller 240A built in.

Also, the drive controller 240A, the sinusoidal wave generator 310, and the amplitude modulator 320 constitute a drive control unit 300.

In FIG. 6, the housing 110, the top panel 120, the double-sided tape 130, and the substrate 170 (see FIG. 2) are not illustrated. Also, here, the amplifiers 141A1, 141A2, 141A3, the driver IC 151, the driver IC 161, the drive controller 240A, the memory 250, the sinusoidal wave generator 310, and the amplitude modulator 320 will be described.

The amplifiers 141A1, 141A2, and 141A3 (referred to as 141A1-141A3, below) are placed between the drive control unit 300 and the vibration elements 140A1-140A3, respectively, to amplify drive signals output from the drive control unit 300 so as to drive the vibration elements 140A1-140A3, respectively.

The driver IC 151 is connected to the touch panel 150 to detect positional data representing a position at which an input operation is performed on the touch panel 150, to output the positional data to the control unit 200. Consequently, the positional data is input into the application processor 220 and the drive controller 240A. Note that inputting positional data into the drive controller 240A is equivalent to inputting the positional data into the drive control unit 300.

The driver IC 161 is connected to the display panel 160, to input graphical data output from the drive control unit 300 into the display panel 160 so as to display images based on the graphical data on the display panel 160. Thus, GUI operation parts, images, and the like based on the graphical data are displayed on the display panel 160.

The amplifier 181 is connected to the application processor 220, amplifies an audio signal input from the application processor 220, and outputs the signal to the speaker 103. The speaker 103 outputs an audio signal input from the amplifier 181 as a voice.

Depending on an input operation performed on the top panel 120, the application processor 220 reads voice data stored in the memory 250, and outputs the data to the amplifier 181. Consequently, a voice depending on the input operation performed on the top panel 120 is output from the speaker 103.

The application processor 220 executes various applications of the electronic device 100.

The controller 240 of the application processors 220 executes drive control of the vibration elements 140A1-140A3, and a voice guidance. The controller 240 includes the drive controller 240A. Among control processes executed by the controller 240, drive control of the vibration elements 140A1-140A3 is executed by the drive controller 240A, and voice guidance control is executed by parts other than drive controller 240A in the controller 240. The controller 240 is an example of a first controller and a second controller.

The voice guidance control by the controller 240, and the drive control of the vibration elements 140A1-140A3 executed along with the voice guidance control will be described later using FIG. 10 to FIG. 25.

The communication processor 230 executes processing necessary for the electronic device 100 to perform communication compliant with 3G (Generation), 4G (Generation), LTE (Long Term Evolution), WiFi, or the like.

The drive controller 240A outputs amplitude data to the amplitude modulator 320 in the case where two predetermined conditions are satisfied. The amplitude data is data representing an amplitude value for adjusting the strength of a drive signal used for driving the vibration elements 140A1-140A3. The amplitude value is set depending on a change rate in time of the positional data. Here, as the change rate in time of the positional data, the speed of a fingertip of the user moving along the surface of the top panel 120 is used. The moving speed of a fingertip of the user is calculated by the drive controller 240A based on a change rate in time of the positional data input from the driver IC 151.

In order to constantly generate tactile sensations perceived by a user with a fingertip irrespective of the moving speed of the fingertip, for example, the drive control unit 300 in the embodiment sets the amplitude value smaller when the moving speed is higher, and sets the amplitude value greater when the moving speed is lower.

Data representing such a relationship between the amplitude data representing the amplitude value and the moving speed is stored in the memory 250.

Note that although a form will be described here in which the amplitude value is set depending on the moving speed by using the data stored in the memory 250, the amplitude value A may be calculated by using the following Expression (3). The amplitude value A calculated by Expression (3) is smaller when the moving speed is higher, and is greater when the moving speed is lower.

$$A = A_0 / \sqrt{|V| / a} \qquad (3)$$

where A0 is a reference value of the amplitude; V is the moving speed of a fingertip; and a is a predetermined constant. In the case of calculating the amplitude value A by using Expression (3), the memory 250 may store data representing Expression (3), and data representing the reference value A0 of the amplitude and the predetermined constant a.

Also, when a fingertip of the user moves along the surface of the top panel 120, the drive control unit 300 in the embodiment vibrates the top panel 120 in order to change the dynamic frictional force acting on the fingertip. Since the dynamic frictional force is generated while a fingertip is moving, the drive controller 240A causes the vibration elements 140A1-140A3 to vibrate when the moving speed becomes greater than or equal to a predetermined threshold speed. The moving speed becoming greater than or equal to the predetermined threshold speed is the first predetermined condition.

Therefore, the amplitude value represented by the amplitude data output by the drive controller 240A is zero when the moving speed is less than the predetermined threshold speed, and once the moving speed has become greater than or equal to the predetermined threshold speed, is set to the predetermined amplitude value depending on the moving speed. When the moving speed is greater than or equal to the predetermined threshold speed, the amplitude value is set smaller when the moving speed is higher, and is set greater when the moving speed is lower.

Also, the drive control unit 300 in the embodiment outputs the amplitude data to the amplitude modulator 320 in the case where the position of a fingertip performing an input operation is located in a predetermined area where a vibration is to be generated. The position of a fingertip performing an input operation being located in a predetermined area where a vibration is to be generated is the second predetermined condition.

Whether the position of a fingertip performing an input operation is located in the predetermined area where a vibration is to be generated is determined based on whether the position of the fingertip performing the input operation is located inside of the predetermined area where a vibration is to be generated.

Here, positions on the display panel 160 of GUI operation parts, areas to display images, and an area to display a whole page, which are displayed on the display panel 160, are identified by area data representing these areas. The area data exists for all the GUI operation parts, the areas to display images, and the area to display a whole page, which are displayed on the display panel 160, for all applications.

Because of this, determining as the second predetermined condition whether the position of a fingertip performing an input operation is located in a predetermined area where a vibration is to be generated, relates to the type of an application being activated in the electronic device 100. This is because a display on the display panel 160 varies depending on the type of the application.

This is also because depending on the type of the application, types of input operations that involve a fingertip touching and moving on the surface of the top panel 120 vary. Types of input operations that involve a fingertip touching and moving on the surface of the top panel 120 include, for example, what is called a "flick operation" in the case of operating a GUI operation part. A flick operation is an operation to move a fingertip by a comparatively short distance along the surface of the top panel 120 as if to bounce the fingertip on the surface.

Also, in the case of turning over a page, for example, a swipe operation is performed. A swipe operation is an operation to move a fingertip by a comparatively long distance along the surface of the top panel 120 as if to sweep the surface by the fingertip. In addition to the case of turning a page, a swipe operation is also performed, for example, in the case of turning over a photograph. Also, in the case of sliding a slider (see the slider 102B in FIG. 1) among the GUI operation parts, a drag operation is performed to drag the slider.

Input operations that involve a fingertip touching and moving on the surface of the top panel 120, such as a flick operation, a swipe operation, and a drag operation cited here as examples, are selectively used by the type of a display provided by an application. Because of this, determining whether the position of a fingertip performing an input operation is located in a predetermined area where a vibration is to be generated, relates to the type of an application being activated in the electronic device 100.

The drive controller 240A determines whether a position represented by positional data input from the driver IC 151 is located inside of a predetermined area where a vibration is to be generated by using the area data.

Second data, in which data representing a type of an application; an area data representing a GUI operation part or the like on which an input operation is performed; and a pattern data representing a vibration pattern are associated with each other, is stored in the memory 250.

Also, in order to interpolate a change of the position of a fingertip during a time period required for calculating a drive signal based on positional data after the positional data has been input into the drive control unit 300 from the driver IC 151, the drive controller 240A executes the next process.

The drive control unit 300 executes calculation for each predetermined control cycle. This is the same for the drive controller 240A. Because of this, representing a time period required for calculating a drive signal based on positional data after the positional data has been input into the drive control unit 300 from the driver IC 151, by Δt, the required time Δt is equivalent to the control cycle.

Here, the moving speed of a fingertip can be obtained as speed of a vector that has the starting point at a point (x1, y1) represented by positional data input into the drive control unit 300 from the driver IC 151, and the ending point (x2, y2) at the position of a fingertip after the required time Δt elapses.

The drive controller 240A obtains a vector that has the starting point at a point (x2, y2) represented by positional data input into the drive control unit 300 from the driver IC 151, and the ending point (x3, y3) at the position of a fingertip after the required time Δt elapses, to estimate coordinates (x3, y3) after the required time Δt elapses.

The electronic device 100 in the embodiment estimates coordinates after the required time Δt elapses as described above, to interpolate the change of the position of a fingertip during the required time Δt.

Such calculation to estimate coordinates after the required time Δt elapses is performed by the drive controller 240A. The drive controller 240A determines whether estimated coordinates are located inside of a predetermined area where a vibration is to be generated, to generate a vibration in the case where the coordinates are located inside of the predetermined area where the vibration is to be generated. Therefore, the second predetermined condition is that estimated coordinates are located inside of a predetermined area where a vibration is to be generated.

As described above, the two predetermined necessary conditions for the drive controller 240A to output amplitude data to the amplitude modulator 320 are constituted with the moving speed of the fingertip greater than or equal to the predetermined threshold speed, and the estimated coordinates being located inside of a predetermined area where a vibration is to be generated.

In the case where the moving speed of the fingertip is greater than or equal to the predetermined threshold speed, and the estimated coordinates are located inside of a predetermined area where a vibration is to be generated, the drive controller 240A reads amplitude data representing an amplitude value in accordance with the moving speed from the memory 250, and outputs the data to the amplitude modulator 320.

The memory 250 stores data that represents a relationship between the amplitude data representing the amplitude value and the moving speed, and data in which data representing a type of an application; an area data representing a GUI operation part or the like on which an input operation is performed; and a pattern data representing a vibration pattern are associated with each other.

The memory 250 also stores data that is necessary to perform drive control of the vibration elements 140A1-1403, and the voice guidance. This data will be described later using FIG. 26 and FIG. 27.

The memory 250 also stores data and programs necessary for the application processor 220 to execute applications, and data and programs necessary for the communication processor 230 to execute communication-processing.

The sinusoidal wave generator 310 generates a sinusoidal wave necessary to generate a drive signal for vibrating the top panel 120 at the natural frequency. For example, in the case of vibrating the top panel 120 at the natural frequency f of 33.5 kHz, the frequency of the sinusoidal wave is set to 33.5 kHz. The sinusoidal wave generator 310 inputs the sinusoidal wave signal in the ultrasonic range into the amplitude modulator 320.

Note that although a form of using the sinusoidal wave generator 310 will be described here, instead of the sinusoidal wave generator 310, a clock generator to generate a clock may be used here. For example, the slew rate of a clock generated by the clock generator may be set small to make the waveform of rising and falling edges of the clock less sharp. A clock having the slew rate set to a small value in this way may be used instead of a sinusoidal wave generated by the sinusoidal wave generator 310. In other words, instead of a sinusoidal wave, a waveform signal whose amplitude changes periodically may be used.

The amplitude modulator 320 modulates the amplitude of a sinusoidal wave signal input from the sinusoidal wave generator 310 by using amplitude data input from the drive controller 240A, to generate a drive signal. The amplitude modulator 320 modulates only the amplitude of the sinusoidal wave signal in the ultrasonic range input from the sinusoidal wave generator 310, without modulating the frequency and the phase, to generate the drive signal.

Therefore, the drive signal output by the amplitude modulator 320 is a sinusoidal wave signal in the ultrasonic range, in which only the amplitude of the sinusoidal wave signal in the ultrasonic range input from the sinusoidal wave generator 310 is modulated. Note that in the case of the amplitude data being zero, the amplitude of the drive signal becomes zero. This is equivalent to not outputting a drive signal from the amplitude modulator 320.

FIG. 7 to FIG. 9 are diagrams each illustrating the amplitude of a standing wave generated on the top panel 120. Here, the amplitude of a standing wave is presented in the case where vibration elements 140B1, 140B2, and 140B3 are provided along a short side of the top panel 120, instead of the vibration elements 140A1, 140A2, and 140A3. The vibration elements 140B1, 140B2, and 140B3 are substantially the same as the vibration elements 140A1, 140A2, and 140A3.

FIG. 7 illustrates a standing wave in the case of driving the vibration element 140B1; FIG. 8 illustrates a standing wave in the case of driving only the vibration element 140B2; and FIG. 9 illustrates a standing wave in the case of driving only the vibration element 140B3.

In FIG. 7 to FIG. 9, a part having a greater amplitude of the standing wave is presented in darker gray, and a part having a smaller amplitude is presented in a whiter shade.

As illustrated in FIG. 7, when only the vibration element 140B1 is driven, on the side in the negative direction of the X-axis with respect to the short side of the top panel 120, over the span in the long-side direction, it can be understood that an area appears where the amplitude of the standing wave is greater. This illustrates that the standing wave having a greater amplitude is generated over the span in the long-side direction, with the width in the short-side direction of the top panel 120 being approximately equivalent to the width of the vibration element 140B1. Also, at this time, the amplitude of the standing wave is extremely smaller in a part corresponding to the vibration elements 140B2 and 140B3 in the short-side direction.

As illustrated in FIG. 8, when only the vibration element 140B2 is driven, in a central part with respect to the short side of the top panel 120, over the span in the long-side direction, it can be understood that an area appears where the amplitude of the standing wave is greater. This illustrates that the standing wave having a greater amplitude is generated over the span in the long-side direction, with the width in the short-side direction of the top panel 120 being approximately equivalent to the width of the vibration element 140B2. Also, at this time, the amplitude of the standing wave is extremely smaller in a part corresponding to the vibration elements 140B1 and 140B3 in the short-side direction.

As illustrated in FIG. 9, when only the vibration element 140B3 is driven, on the side in the positive direction of the X-axis with respect to the short side of the top panel 120, over the span in the long-side direction, it can be understood that an area appears where the amplitude of the standing wave is greater. This illustrates that the standing wave having a greater amplitude is generated over the span in the long-side direction, with the width in the short-side direction of the top panel 120 being approximately equivalent to the width of the vibration element 140B3. Also, at this time, the amplitude of the standing wave is extremely smaller in a part corresponding to the vibration elements 140B1 and 140B2 in the short-side direction.

As can be understood from FIG. 7 to FIG. 9, substantially the same amplitude of the standing wave is obtained in any case of driving only the single vibration element 140B1, 140B2, or 140B.

When the vibration element 140B1 is driven, an area on the side in the negative direction of the X-axis with respect to the short side of the top panel 120 over the span in the long-side direction, is obtained where the amplitude of the standing wave is greater. At this time, the amplitude of the standing wave is extremely smaller in an area over the span in the long-side direction on the central part and on the side in the positive direction of the X-axis with respect to the short side of the top panel 120.

Because of this, when a fingertip is moved while touching the top panel 120 in an area over the span in the long-side direction on the side in the negative direction of the X-axis with respect to the short side of the top panel 120, a reduction effect of the dynamic frictional force is obtained sufficiently by the squeeze effect; whereas when a fingertip is moved while touching the top panel 120 in an area over the span in the long-side direction on the central part and on the side in the positive direction of the X-axis with respect to the short side of the top panel 120, virtually no reduction effect of the dynamic frictional force is obtained by the squeeze effect.

Also, when the vibration element 140B2 is driven, an area is obtained on the central part with respect to the short side of the top panel 120 over the span in the long-side direction where the amplitude of the standing wave is greater. At this time, the amplitude of the standing wave is extremely smaller in an area over the span in the long-side direction on the side in the negative direction of the X-axis and on the side in the positive direction of the X-axis with respect to the short side of the top panel 120.

Because of this, when a fingertip is moved while touching the top panel 120 in an area over the span in the long-side direction on the central part with respect to the short side of the top panel 120, a reduction effect of the dynamic frictional force is obtained sufficiently by the squeeze effect; whereas when a fingertip is moved while touching the top panel 120 in an area over the span in the long-side direction on the side in the negative direction and on the side in the positive direction of the X-axis with respect to the short side of the top panel 120, virtually no reduction effect of the dynamic frictional force is obtained by the squeeze effect.

When the vibration element 140B3 is driven, an area is obtained on the side in the positive direction of the X-axis with respect to the short side of the top panel 120 over the span in the long-side direction where the amplitude of the standing wave is greater. At this time, the amplitude of the standing wave is extremely smaller in an area over the span in the long-side direction on the central part and on the side in the negative direction of the X-axis with respect to the short side of the top panel 120.

Because of this, when a fingertip is moved while touching the top panel 120 in an area over the span in the long-side direction on the side in the positive direction of the X-axis with respect to the short side of the top panel 120, a reduction effect of the dynamic frictional force is obtained sufficiently by the squeeze effect; whereas when a fingertip is moved while touching the top panel 120 in an area over the span in the long-side direction on the central part and on the side in the negative direction of the X-axis with respect to the short side of the top panel 120, virtually no reduction effect of the dynamic frictional force is obtained by the squeeze effect.

As such, by selecting one of the vibration elements 140B1, 140B2, and 140B3 to be driven, it is possible to select an area in the short-side direction (X-axis direction) of the top panel 120 where a standing wave having a great amplitude is generated. In other words, it is possible to select an area in the short-side direction (X-axis direction) of the top panel 120 where a reduction effect of the dynamic frictional force is obtained by the squeeze effect.

Therefore, as illustrated in FIG. 7 to FIG. 9, by selecting one of the vibration elements 140B1, 140B2, and 140B3 arranged along the long side of the top panel 120, and driving the selected element, it is possible to select an area in the long-side direction (Y-axis direction) of the top panel 120 where a standing wave having a great amplitude is generated.

In other words, by driving the vibration elements 140B1, 140B2, and 140B3 one by one, it is possible to have partitioned three areas on each of which a vibration is generated autonomously on the top panel 120.

FIG. 10, FIG. 11, and FIG. 12 are diagrams illustrating three areas on each of which a vibration is generated autonomously on the top panel 120.

As illustrated in FIG. 10, driving the vibration element 140A1 enlarges the amplitude of a standing wave in an area 120A1 on the side in the negative direction of the Y-axis of the top panel 120 over the span in the short-side direction.

Also, as illustrated in FIG. 11, driving the vibration element 140A2 enlarges the amplitude of a standing wave in an area 120A2 on a center part in the Y-axis of the top panel 120 over the span in the short-side direction.

Also, as illustrated in FIG. 12, driving the vibration element 140A3 enlarges the amplitude of a standing wave in an area 120A3 on the side in the positive direction of the Y-axis of the top panel 120 over the span in the short-side direction.

As described above, by selecting and driving one of the vibration elements 140A1, 140A2, and 140A3, it is possible to select the area 120A1, 120A2, or 120A3 in the long-side direction (Y-axis direction) of the top panel 120 where a standing wave having a great amplitude is generated.

Therefore, when driving the vibration element 140A1, it is possible to obtain a reduction effect of the dynamic frictional force by the squeeze effect in the area 120A1, and not to sufficiently obtain a reduction effect of the dynamic frictional force by the squeeze effect in the areas 120A2 and 120A3. Because of this, for example, the user touching the entire top panel 120 with both hands can distinguish the area 120A1 from the areas 120A2 and 120A3 by tactile sensations.

Similarly, when driving the vibration element 140A2, it is possible to distinguish the area 120A2 from the areas 120A1 and 120A3 by tactile sensations; and when driving the vibration element 140A3, it is possible to distinguish the area 120A3 from the areas 120A1 and 120A2 by tactile sensations.

Also, when driving all of the vibration elements 140A1, 140A2, and 140A3 simultaneously, it is possible to generate a standing wave having a great amplitude on the areas 120A1, 120A2, and 120A3.

FIG. 13 is a diagram illustrating a drive pattern of the vibration elements 140A1-140A3 when the user performs an input operation on the electronic device 100 in the embodiment. The drive pattern represents a waveform of a drive signal that changes the amplitude based on amplitude data.

Here, for example, assume that the electronic device 100 drives each of the vibration elements 140A1-140A3 for two seconds in turn. Also, for example, the frequency of the drive signal is set to 35 kHz. Also, in (A) to (C) of FIG. 13, the vertical axis represents the amplitude of the drive signal and the horizontal axis represents time in seconds.

First, at time t=0 s, the electronic device 100 drives the vibration element 140A1. A drive pattern to drive the vibration element 140A1 is a pattern to periodically increase and decrease the amplitude of a sinusoidal wave at 35 kHz (in the ultrasonic range) between A2 and A1 while time elapses. Compared with a smaller amplitude, a greater amplitude decreases the dynamic frictional force lower by the squeeze effect.

Because of this, increasing and decreasing the amplitude between A2 and A1 while time elapses enables the user to perceive, with a fingertip or a palm, a tactile sensation of smoothness changing in time.

Also, at time t=2 s, the electronic device 100 stops the vibration element 140A1, and drives the vibration element 140A2. A drive pattern to drive the vibration element 140A2 is a pattern to periodically increase and decrease the amplitude of a sinusoidal wave at 35 kHz (in the ultrasonic range) between A12 and A11 while time elapses. The amplitudes A12 and A11 are greater than the amplitudes A2 and A1.

Also, at time t=4 s, the electronic device 100 stops the vibration element 140A2, and drives the vibration element 140A3. A drive pattern to drive the vibration element 140A3 is a pattern to periodically increase and decrease the amplitude of a sinusoidal wave at 35 kHz (in the ultrasonic range) between A22 and A21 while time elapses. The amplitudes A22 and A21 are smaller than the amplitudes A2 and A1.

At time t=6 s, the electronic device 100 stops the vibration element 140A3.

In this way, when the electronic device 100 drives each of the vibration elements 140A1-140A3 for two seconds in turn, if the user moves a fingertip or a palm touching the top panel 120, the user can perceive a tactile sensation of smoothness on each of the areas 120A1, 120A2, and 120A3 in turn. Also, since the different amplitudes of the vibration are generated in the respective areas 120A1, 120A2, and 120A3, it is possible to perceive transitions among the areas 120A1, 120A2, and 120A3 by tactile sensations.

Next, operations of the electronic device 100 will be described by using FIG. 14 to FIG. 25.

FIG. 14 to FIG. 16 are diagrams each illustrating a display on the display panel 160 in a summary guidance mode of the electronic device 100. In FIG. 14, the top panel 120, the touch panel 150, and the display panel 160 are illustrated in a simplified way.

Images 160A1, 160A2, and 160A3 are displayed on the display panel 160. Areas where the images 160A1, 160A2, and 160A3 are displayed are substantially the same as the areas 120A1, 120A2, and 120A3 on the top panel 120 (see FIG. 10 to 12), respectively. In the following, with respect to a display on the display panel 160, the side in the negative direction of the X-axis will be referred to as the upper part, and the side in the positive direction of the X-axis will be referred to as the lower part. Also, the side in the positive direction of the Y-axis will be referred to as the right side, and the side in the negative direction of the Y-axis will be referred to as the left side.

Also, an area obtained by converting one of the three areas where the images 160A1, 160A2, and 160A3 are displayed into coordinates of the touch panel 150 is an example of a first area, and an area obtained by converting another of the three areas where the images 160A1, 160A2, and 160A3 are displayed into coordinates of the touch panel 150 is an example of a second area.

On the upper parts of the images 160A1, 160A2, and 160A3, characters representing classification of "noodles", "bowls", and "drinks" are displayed, respectively. The electronic device 100 is an input device that enables the user to order a food or a drink as desired, by performing an input operation on the top panel 120.

The electronic device 100 is also an input device that enables to input without visual observation, with vibration of the top panel 120 caused by driving the vibration elements 140A1-140A3 (see FIG. 6), and a voice guidance output from the speaker 103 (see FIGs. 1 and 6).

The images 160A1, 160A2, and 160A3 displayed on the display panel 160 illustrated in FIG. 14 constitute an initial screen for inputting an order, which are displayed on the display panel 160 when the user performs a multi-touch. Therefore, in a state before the user performs a multi-touch, the images 160A1, 160A2, and 160A3 are not displayed on the display panel 160.

The state illustrated in FIG. 14 is a state immediately after the user has performed a multi-touch, and the vibration elements 140A1-140A3 are not driven. The vibration elements 140A1-140A3 are driven for two seconds in turn, after the user has performed a multi-touch and a predetermined time (for example, one second) has elapsed.

Here, a multi-touch means that the user touches the top panel 120 with both hands, or touches the top panel 120 with multiple fingers. A multi-touch is detected when multiple input operations are performed on the top panel 120, and multiple pairs of coordinates are detected by the touch panel 150.

In FIG. 15, a standing wave is generated on the area 120A1 of the top panel 120, and the user touches the entire top panel 120 with both hands, and moves both hands in a reciprocating motion rightward and leftward. In this state, only driving the vibration element 140A1 reduces the dynamic frictional force on the area 120A1, and the user perceives a tactile sensation of smoothness with the left index finger, the middle finger, the third finger, and the little finger of the left hand.

At this time, since the dynamic frictional force is not reduced in the areas 120A2 and 120A3, the user does not perceive a tactile sensation of smoothness with the right hand.

In such a state, the electronic device 100 outputs a voice guidance of "Smooth part corresponds to noodles" from the speaker 103.

In this way, in a state where the area 120A1 of noodles has been recognized, if the user performs a confirmation operation in the area 120A1, a detailed input mode for inputting a noodle can be activated.

The confirmation operation means, for example, pressing the top panel 120 strongly, and performing a confirmation operation enables the electronic device 100 to receive input. Such a function to receive a confirmation operation may be implemented by an OS (Operation System) of the application processor 220 (see FIG. 6). The confirmation operation is not limited to pressing the top panel 120 strongly, and may be received based on an increase of the surface area of a fingertip or the like touching the top panel 120 (performing an input operation).

In FIG. 16, a standing wave is generated on the area 120A2 of the top panel 120, and the user touches the entire top panel 120 with both hands, and moves both hands in a reciprocating motion rightward and leftward. In this state, only driving the vibration element 140A2 reduces the dynamic frictional force on the area 120A2, and the user perceives a tactile sensation of smoothness with the left index finger and the thumb of the left hand, and the thumb of the right hand.

At this time, since the dynamic frictional force is not reduced in the areas 120A1 and 120A3, the user does not perceive a tactile sensation of smoothness with the middle finger, the third finger, and the little finger of the left hand, and the index finger, the middle finger, the third finger, and the little finger of the right hand.

In such a state, the electronic device 100 outputs a voice guidance of "Smooth part corresponds to bowls" from the speaker 103.

In this way, in a state where the area 120A2 of noodles has been recognized, if the user performs a confirmation operation in the area 120A2, a detailed input mode for inputting a bowl can be activated.

In FIG. 17, a standing wave is generated on the area 120A3 of the top panel 120, and the user touches the entire top panel 120 with both hands, and moves both hands in a reciprocating motion rightward and leftward. In this state, only driving the vibration element 140A3 reduces the dynamic frictional force in the area 120A3, and the user perceives a tactile sensation of smoothness with the index finger, the middle finger, the third finger, and the little finger of the right hand.

At this time, since the dynamic frictional force is not reduced in the areas 120A2 and 120A3, the user does not perceive a tactile sensation of smoothness with the left hand and the thumb of the right hand.

In such a state, the electronic device 100 outputs a voice guidance of "Smooth part corresponds to drinks" from the speaker 103.

In this way, in a state where the area 120A3 of noodles has been recognized, if the user performs a confirmation operation in the area 120A3, a detailed input mode for inputting a drink can be activated.

FIG. 18 is a diagram illustrating a display on the display panel 160 in a detailed guidance mode of the electronic device 100. FIG. 18 illustrates, as an example of a detailed guidance mode, a display on the display panel 160 in a detailed input mode of noodles.

In FIG. 18, the display panel 160 displays six buttons 161A, 162A, 163A, 164A, 165A, and 166A (referred to as 161A-166A, below) that correspond to five menus of "plain udon", "meat udon", "tempura udon", "nabeyaki udon", and "plain soba", and "return" operation, respectively. The buttons 161A-166A are buttons displayed by the GUI.

Assist areas 161B-166B are placed around the buttons 161A-166A, respectively. When an input operation is performed, different drive patterns are used for the buttons 161A-166A and for the assist areas 161B-166B when driving the vibration elements 140A1-140A3. The assist areas 161B-166B are provided in order to help (assist) guidance of a fingertip to the buttons 161A-166A.

Also, above the buttons 161A, 162A, and 163A, areas 167A1, 167A2, and 167A3 are provided, and below the buttons 164A, 165A, and 166A, areas 168A1, 168A2, and 168A3 are provided.

An area obtained by converting the area where the buttons 161A-166A are displayed into coordinates of the touch panel 150 is an example of a third area. An area obtained by converting the area where the assist areas 161B-166B are displayed into coordinates of the touch panel 150 is an example of a fourth area. An area obtained by converting the area where the areas 167A1, 167A2, 167A3, 168A1, 168A2, and 168A3 are displayed into coordinates of the touch panel 150 is an example of a fifth area.

FIG. 19 is a diagram illustrating an example of an operation in a detailed guidance mode of the electronic device 100. FIG. 20 and FIG. 21 are diagrams illustrating examples of drive signals in a detailed guidance mode of the electronic device 100.

As illustrated in FIG. 19, assume that the index finger of the user's right hand touches the top panel 120 in the area 168A2 on the lower side of the button 165A "plain soba".

In such a case, if the user moves the index finger of the right hand upward, the electronic device 100 drives the vibration elements 140A1-140A3, and outputs a voice guidance of "Plain soba is located above" from the speaker 103.

The drive pattern of the vibration elements 140A1-140A3 at this time is, for example, as illustrated in FIG. 20. When the index finger starts moving upward, the vibration elements 140A1-140A3 are driven by the drive signal having the amplitude A3, and when the index finger stops moving, the amplitude of the drive signal becomes zero.

Above the index finger of the right hand illustrated in FIG. 19, since the button 165A "plain soba" exists, even in the area 168A2, in order to transition into a state where the fingertip can be easily moved to the button 165A, the vibration elements 140A1-140A3 are driven. In other words, the vibration elements 140A1-140A3 are driven to transition into a state where the dynamic frictional force acting on the fingertip is reduced by the squeeze effect (low friction), so as to guide the fingertip of the user located in the area 168A2 to the button 165A.

Also, if the user moves the index finger of the right hand leftward (in the negative direction of the Y-axis) from the state illustrated in FIG. 19, the electronic device 100 outputs a voice guidance of "No button is located left" from the speaker 103, without driving the vibration elements 140A1-140A3. This is because the buttons 161A-166A do not exist on the right and left of the index finger of the right hand illustrated in FIG. 19.

The drive pattern of the vibration elements 140A1-140A3 at this time is, for example, as illustrated in FIG. 21. Even if the index finger starts moving upward, the amplitude of the drive signal is zero, and even if the index finger stops moving, the amplitude of the drive signal is still zero.

In this way, since the electronic device 100 does not drive the vibration elements 140A1-140A3 if the user moves a fingertip in a direction where the buttons 161A-166A do not exist, a state appears where the dynamic frictional force acting on the fingertip is greater (higher friction). This enables not to guide the fingertip of the user in the direction where the buttons 161A-166A do not exist. Note that the same is also applied to the case where the user moves the index finger of the right hand rightward (in the positive direction of the Y-axis), or downward from the state illustrated in FIG. 19.

Also, although the operation of the electronic device 100 described here assumes that the fingertip of the user is touching the top panel 120 in the area 168A2, an operation of the electronic device 100 is substantially the same when the fingertip of the user is touching the top panel 120 in the area 167A1, 167A2, 167A3, 168A1, or 168A3.

FIG. 22 to FIG. 24 are diagrams illustrating examples of operations in a detailed guidance mode of the electronic device 100. FIG. 25 is a diagram illustrating an example of a drive signal in a detailed guidance mode of the electronic device 100.

As illustrated in FIG. 22, assume that the index finger of the user's right hand is moving rightward in the assist area 165B while touching the top panel 120.

In such a case, the electronic device 100 drives the vibration elements 140A1-140A3, and outputs a voice guidance of "Plain soba is located right" from the speaker 103.

The drive pattern of the vibration elements 140A1-140A3 at this time is, for example, as illustrated in FIG. 25.

At time t1, when the index finger starts moving rightward in the assist area 165B, as illustrated in FIG. 25, the vibration elements 140A1-140A3 are driven by a drive signal having the amplitude A3. This enables to guide the index finger to the button 165A on the right. Since the amplitude of the drive signal at this time is constant at A3, a tactile sensation of smoothness is brought to the fingertip of the user.

At time t2, when the index finger enters the button 165A as illustrated in FIG. 23, the vibration elements 140A1-140A3 are driven by the drive signal whose amplitude varies periodically while time elapses as illustrated in FIG. 25, and a voice guidance of "It is plain soba" is output from the speaker 103.

Since the amplitude of this drive signal periodically varies in a sinusoidal waveform between A4 and A5, a tactile sensation of roughness is brought to the fingertip of the user. Also, the amplitudes A4 and A5 are smaller than the amplitude A3. Because of this, when the index finger enters the button 165A, the user perceives a change of the tactile sensation being sensed at the fingertip. Also, the user is informed that the current position of the fingertip is located in the button 165A of "plain soba" by the voice guidance.

Because of this, the user can recognize that the current position of the fingertip is located in the button 165A of "plain soba" with the tactile sensation and the voice guidance without visual observation.

When the user moves the index finger further rightward, and enters the assist area 165B at time t3 as illustrated in FIG. 24, the vibration elements 140A1-140A3 are driven by the drive signal having the amplitude A3. No voice guidance is executed at this time because of the direction moving away from the button 165A, even in the assist area 165B.

This enables the user to recognize that the current position of the fingertip is located in the assist area 165B, and has gone out of the button 165A of "plain soba" without visual observation.

At time t4, when the user stops moving the index finger in the assist area 165B, the drive of the vibration elements 140A1-140A3 is stopped. Note that it is substantially the same in the case where the user separates the index finger from the top panel 120 in the assist area 165B at time t4.

In this way, the electronic device 100 guides a fingertip of the user in a direction where one of the buttons 161A-166A is located by using the areas 167A1, 167A2, 167A3, 168A1, 168A2, and 168A3, a tactile sensation using the squeeze effect, and a voice guidance.

Also, the electronic device 100 guides the fingertip of the user on the inside of the buttons 161A-166A by using the assist areas 161B-166B placed around the buttons 161A-166A, a tactile sensation using the squeeze effect, and a voice guidance.

Because of this, the user can precisely recognize the respective positions of the buttons 161A-166A without visual observation, and can precisely order the menu associated with one of the buttons 161A-166A by performing a confirmation operation.

FIG. 26 is a diagram illustrating a data structure used in a summary guidance mode. Data used in a summary guidance mode is stored in the memory 250. Data illustrated in FIG. 26 is an example of first data.

Data used in a summary guidance mode has a configuration in which coordinates, a vibration element ID (Identifier), a drive pattern, an image ID, and voice data are associated with each other.

Here, f1(X, Y), f2(X, Y), and f3(X, Y) represent the areas 120A1, 120A2, and 120A3, respectively.

The vibration element ID represents the identifier of a vibration element to be driven when generating a vibration in one of the areas 120A1, 120A2, and 120A3. Here, the codes of the vibration elements are used as the identifiers. The areas 120A1, 120A2, and 120A3 are assigned to the vibration elements 140A1, 140A2, and 140A3, respectively.

The drive pattern is data in which amplitudes of a drive signal to drive the vibration element 140A1, 140A2, or 140A3 are arranged in a time series, and drive patterns P1, P2, and P3 are assigned to the vibration elements 140A1, 140A2, and 140A3, respectively.

The image ID represents an identifier of an image displayed on the position that overlaps the area 120A1, 120A2, or 120A3 of the top panel 120. Here, the codes of the images are used as the identifiers. The images 160A1, 160A2, and 160A3 are assigned to the areas 120A1, 120A2, and 120A3.

The voice data is voice data to be output from the speaker 103 when generating a vibration in the area 120A1, 120A2, or 120A3, and "These are noodles", "These are bowls", and "These are drinks" are assigned to the areas 120A1, 120A2, and 120A3, respectively.

By using the data as illustrated in FIG. 26 in a summary guidance mode, operations as illustrated in FIG. 15 to FIG. 17 can be implemented.

FIG. 27 is a diagram illustrating a data structure used in a detailed guidance mode. Data used in a detailed guidance mode is stored in the memory 250. Data illustrated in FIG. 27 is data for implementing, for example, a display in a detailed guidance mode illustrated in FIG. 18 and operations and drive signals that are illustrated in FIG. 19 to FIG. 25. The data illustrated in FIG. 27 is an example of second data.

Data used in a detailed guidance mode includes coordinates, a vibration element ID, a moving direction, a drive pattern, an image ID, and voice data.

The coordinates f11 (X, Y) and f12 (X, Y), ...,

f21 (X, Y), f22 (X, Y), and f23 (X, Y) are data that represent areas where the buttons 161A-166A, the assist areas 161B-166B, the areas 167A1-167A3, and the areas 168A1-168A3 are displayed by coordinate values of the coordinate system of the touch panel 150.

The vibration element ID represents an identifier of a vibration element to be driven in the case where the position of a fingertip has been moved in response to an input operation performed in the button 161A, the assist area 161B, the area 167A1, or the like. For example, the button 161A has the vibration elements 140A1-140A3 assigned.

Also, the area 167A1 has the vibration elements 140A1-140A3 assigned only in the case where the moving direction approaches the button 161A from the top, and has no vibration element assigned in the case where the moving direction is rightward and leftward.

This is because, as in the case of the operation illustrated in FIG. 19, in the case where a fingertip is located inside of the area 167A1, a vibration is generated only if the position of an input operation moves toward the button 161A on the lower side of the area 167A1.

Note that a vibration element ID is not assigned to an operation that generates no vibration. For example, the area 167A1 has no vibration element assigned in the case where the moving direction is rightward and leftward.

The moving direction represents a direction in which a fingertip or a hand performing an input operation moves. A moving direction is detected by the application processor 220 based on detected values on the touch panel 150. Here, the moving direction is designated with upward, downward, leftward, or rightward for the sake of description.

Note that if a moving direction turns out to be diagonal when determining whether it is upward, downward, leftward, or rightward, it may be determined as follows. For example, in the case where the moving direction is a lower-right direction, a boundary between the downward direction (in the positive direction of the X-axis) and the rightward direction (in the positive direction of the Y-axis) may be defined with a straight line tilted 45 degrees in the positive direction of the X-axis and tilted 45 degrees in the positive direction of the Y-axis, to determine whether the lower-right direction is downward or rightward. This is the same for a lower-left direction, an upper-right direction, and an upper-left direction. Also, the boundary is not limited to be defined as above; the direction of the boundary may be biased upward, downward, leftward or rightward.

The drive pattern is data in which amplitudes of a drive signal to drive the vibration element 140A1, 140A2, or 140A3 are arranged in a time series, and drive patterns P11, P12, ..., P21, P22, P23, and so on are assigned to the buttons 161A-166A, the assist areas 161B-166B, and the areas 167A1-167A3 and 168A1-168A3.

The image ID represents an identifier of an image of one of the buttons 161A-166A, the assist areas 161B-166B, and the areas 167A1-167A3 and 168A1-168A3. Here, the codes such as the button 161A are used as the identifiers.

The voice data is voice data to be output from the speaker 103 when the position of an input operation moves within the display area of one of the buttons 161A-166A, the assist areas 161B-166B, and the areas 167A1-167A3 and 168A1-168A3.

For example, the button 161A has voice data of "This is plain udon" assigned. Also, the assist area 161B has voice data of "Plain udon is located right" assigned in the case where the position of an input operation approaches the button 161A from the left, and has voice data of "Plain udon is located left" assigned in the case where the position of an input operation approaches the button 161A from the right. Also, the assist area 161B has voice data of "Plain udon is located above" assigned in the case where the position of an input operation approaches the button 161A from the bottom, and has voice data of "Plain udon is located below" assigned in the case where the position of an input operation approaches the button 161A from the top.

Also, the area 167A1 has voice data of "No button is located right" assigned in the case where the position of an input operation moves rightward toward the button 161A, and does not have the vibration elements 140A1-140A3 assigned.

Also, the area 167A1 has voice data of "No button is located left" assigned in the case where the position of an input operation moves leftward toward the button 161A, and does not have the vibration elements 140A1-140A3 assigned.

Also, the area 167A1 has voice data of "Plain udon is located below" assigned in the case where the position of an input operation approaches the button 161A from the top, and has the vibration elements 140A1-140A3 assigned.

By using the data as illustrated in FIG. 27 in a detailed guidance mode, operations as illustrated in FIG. 19 to FIG. 25 and generation of drive signals can be implemented.

FIG. 28 is a flowchart illustrating a process executed by the control unit 200 of the electronic device 100.

The control unit 200 determines whether an input operation is performed (Step S1). The control unit 200 determines whether an input operation is performed by determining whether the touch panel 150 detects coordinates.

If having determined that an input operation is performed (YES at Step S1), the control unit 200 determines whether the input operation is a multi-touch (Step S2). The control unit 200 determines whether two or more pairs of coordinates have been detected by the touch panel 150, to determine whether it is a multi-touch.

Note that if having determined that the input operation is not a multi-touch (NO at Step S2), the control unit 200 returns the flow to Step S1.

If having determined that the input operation is a multi-touch (YES at Step S2), the control unit 200 displays images of a summary guidance mode (Step S3). The control unit 200 displays the images 160A1, 160A2, and 160A3 illustrated in FIG. 14 on the display panel 160.

The control unit 200 drives the vibration element 140A1 (Step S4). The control unit 200 drives the vibration element 140A1 based on data used in the summary guidance mode (see FIG. 26). This generates a natural vibration in the ultrasonic range on the area 120A1 of the top panel 120.

The control unit 200 executes a voice guidance (Step S5). The control unit 200 executes the voice guidance based on data used in the summary guidance mode (see FIG. 26). For example, when driving the vibration element 140A1, the control unit 200 executes the voice guidance by using the voice data of "These are noodles".

The control unit 200 determines whether a confirmation operation has been performed (Step S6). Since whether a confirmation operation has been performed is detected by the application processor 220, the control unit 200 determines whether a confirmation operation has been detected by the application processor 220, to determine whether a confirmation operation has been performed.

If having determined that no confirmation operation is performed (NO at Step S6), the control unit 200 determines whether two seconds has elapsed since having started driving the vibration element 140A1 (Step S7). This is because the time period to drive the vibration element 140A1 is two seconds.

If having determined that two seconds has not elapsed since having started driving the vibration element 140A1 (NO at Step S7), the control unit 200 returns the flow to Step S1. Thus, Steps S1 to S7 are repeated, and in the case where a confirmation operation is not performed, the vibration element 140A1 is driven for two seconds after having started driving the vibration element 140A1.

If having determined that two seconds has elapsed since having started driving the vibration element 140A1 (YES at Step S7), the control unit 200 determines whether an input operation is performed (Step S8). The control unit 200 determines whether an input operation is performed by determining whether the touch panel 150 detects coordinates.

If having determined that an input operation is performed (YES at Step S8), the control unit 200 determines whether the input operation is a multi-touch (Step S9). The control unit 200 determines whether two or more pairs of coordinates have been detected by the touch panel 150, to determine whether it is a multi-touch.

Note that if having determined that the input operation is not a multi-touch (NO at Step S9), the control unit 200 returns the flow to Step S8.

If having determined that the input operation is a multi-touch (YES at Step S9), the control unit 200 displays images of a summary guidance mode (Step S10). The control unit 200 displays the images 160A1, 160A2, and 160A3 illustrated in FIG. 14 on the display panel 160.

The control unit 200 drives the vibration element 140A2 (Step S11). The control unit 200 drives the vibration element 140A2 based on data used in the summary guidance mode (see FIG. 26). This generates a natural vibration in the ultrasonic range on the area 120A2 of the top panel 120.

The control unit 200 executes a voice guidance (Step S12). The control unit 200 executes the voice guidance based on data used in the summary guidance mode (see FIG. 26). For example, when driving the vibration element 140A2, the control unit 200 executes the voice guidance by using the voice data of "These are bowls".

The control unit 200 determines whether a confirmation operation has been performed (Step S13). Since whether a confirmation operation has been performed is detected by the application processor 220, the control unit 200 determines whether a confirmation operation has been detected by the application processor 220, to determine whether a confirmation operation has been performed.

If having determined that no confirmation operation is performed (NO at Step S13), the control unit 200 determines whether two seconds has elapsed since having started driving the vibration element 140A2 (Step S14). This is because the time period to drive the vibration element 140A2 is two seconds.

If having determined that two seconds has not elapsed since having started driving the vibration element 140A2 (NO at Step S14), the control unit 200 returns the flow to Step S8. Thus, Steps S8 to S14 are repeated, and in the case where a confirmation operation is not performed, the vibration element 140A2 is driven for two seconds after having started driving the vibration element 140A2.

If having determined that two seconds has elapsed since having started driving the vibration element 140A2 (YES at Step S14), the control unit 200 determines whether an input operation is performed (Step S15). The control unit 200 determines whether an input operation is performed by determining whether the touch panel 150 detects coordinates.

If having determined that an input operation is performed (YES at Step S15), the control unit 200 determines whether the input operation is a multi-touch (Step S16). The control unit 200 determines whether two or more pairs of coordinates have been detected by the touch panel 150, to determine whether it is a multi-touch.

Note that if having determined that the input operation is not a multi-touch (NO at Step S16), the control unit 200 returns the flow to Step S15.

If having determined that the input operation is a multi-touch (YES at Step S16), the control unit 200 displays images of the summary guidance mode (Step S17). The control unit 200 displays the images 160A1, 160A2, and 160A3 illustrated in FIG. 14 on the display panel 160.

The control unit 200 drives the vibration element 140A3 (Step S18). The control unit 200 drives the vibration element 140A3 based on data used in the summary guidance mode (see FIG. 26). This generates a natural vibration in the ultrasonic range on the area 120A3 of the top panel 120.

The control unit 200 executes a voice guidance (Step S19). The control unit 200 executes the voice guidance based on data used in the summary guidance mode (see FIG. 26). For example, when driving the vibration element 140A3, the control unit 200 executes the voice guidance by using the voice data of "These are drinks".

The control unit 200 determines whether a confirmation operation has been performed (Step S20). Since whether a confirmation operation has been performed is detected by the application processor 220, the control unit 200 determines whether a confirmation operation has been detected by the application processor 220, to determine whether a confirmation operation has been performed.

If having determined that no confirmation operation is performed (NO at Step S20), the control unit 200 determines whether two seconds has elapsed since having started driving the vibration element 140A1 (Step S21). This is because the time period to drive the vibration element 140A3 is two seconds.

If having determined that two seconds has not elapsed since having started driving the vibration element 140A3 (NO at Step S21), the control unit 200 returns the flow to Step S15. Thus, Steps S15 to S21 are repeated, and in the case where a confirmation operation is not performed, the vibration element 140A3 is driven for two seconds after having started driving the vibration element 140A3.

If having determined that a confirmation operation has been performed at Step S6, S13 or S20 (YES at Step S20), the control unit 200 stops the vibration elements (Step S22), to transition into a detailed guidance mode.

The control unit 200 displays an image of a detailed guidance mode (Step S23). The control unit 200 displays the buttons 161A-166A, the assist areas 161B-166B, and the areas 167A1-167A3 and 168A1-168A3 illustrated in FIG. 18 on the display panel 160.

The control unit 200 determines whether an input operation is performed (Step S24). The control unit 200 determines whether an input operation is performed by determining whether the touch panel 150 detects coordinates. The control unit 200 detects coordinates of the position of an input operation at Step S24.

Note that if having determined that no input operation is performed (NO at Step S24), the control unit 200 returns the flow to Step S23.

If having determined that an input operation is performed (YES at Step S24), the control unit 200 determines whether the position of the input operation is moving (Step S25). This is because an effect that the dynamic frictional force is reduced by the squeeze effect is obtained when a fingertip or a hand touching the top panel 120 is moving.

The control unit 200 may determine whether the position of the input operation is moving by determining whether the coordinates detected by the touch panel 150 are changing.

If having determined that the position of the input operation is moving (YES at Step S25), the control unit 200 determines the moving direction of the position of the input operation (Step S26). This is because, for example, there is a case where the voice guidance differs depending on a direction approaching the button 161A as in the case of the assist area 161B (see FIG. 18). This is also because there is a case where depending on the moving direction, the vibration elements 140A1-140A3 may be driven or may not be driven, and the voice guidance differs as in the case of the area 167A1 (see FIG. 18).

The control unit 200 may determine the moving direction of the position of the input operation by determining a direction in which coordinates detected by the touch panel 150 change.

The control unit 200 drives the vibration element(s) based on the coordinates of the input operation detected at Step S24, the moving direction detected at Step S26, and the data of the detailed guidance mode illustrated in FIG. 27 (Step S27). For example, in the case where the position of the input operation is located inside of the assist area 161B and is approaching the button 161A from the left, the vibration elements 140A1-140A3 are driven by the drive pattern P12.

Note that at Step S27, for example, in the case where the position of the input operation is moving rightward or leftward in the area 167A1, since no vibration element is assigned according to the data illustrated in FIG. 27, the flow advances to Step S28, without driving the vibration elements 140A1-140A3.

The control unit 200 executes a voice guidance based on the coordinates of the input operation detected at Step S24, the moving direction detected at Step S26, and the data of the detailed guidance mode illustrated in FIG. 27 (Step S28). For example, in the case where the position of the input operation is located inside of the assist area 161B and is approaching the button 161A from the left, the control unit 200 outputs the voice data of "Plain udon is located right" from the speaker 103.

The control unit 200 determines whether a confirmation operation has been performed (Step S29).

If having determined that a confirmation operation has been performed (YES at Step S29), the control unit 200 determines whether the confirmed content is "return" (Step S30). The process at Step S30 may execute the determination based on, for example, whether the coordinates of the input operation used in the process at Step S27 or S28 are contained in the coordinates f21(X, Y) of the button 166A.

If having determined that the confirmed contents is not "return" (NO at Step S30), the control unit 200 confirms an ordered content on which the confirmation operation has been performed (Step S31). For example, in the case where "plain udon" has been ordered, the control unit 200 outputs data representing "plain udon".

The electronic device 100 completes the series of steps (END).

Note that the control unit 200 returns the flow to Step S23 at Step S25 if having determined that the position of the input operation is not moving (NO at Step S25).

Also, at Step S29, in the case where a confirmation operation is performed when the position of the input operation is not contained in any of the buttons 161A-166A, a voice guidance may be executed to indicate that, for example, "It is an area outside of buttons", to request the user to redo the operation. In this case, the flow may be returned from Step S29 to Step S23.

Also, at Step S24, in the case where it has been repeatedly determined for more than a predetermined number of times that an input operation is not performed, the series of steps may be terminated.

As described above, according to the embodiment, when the user performs a multi-touch on the top panel 120, the control unit 200 displays the images 160A1, 160A2, and 160A3 illustrated in FIG. 14, and as illustrated in FIG. 15 to FIG. 17, executes the summary guidance mode that vibrates the areas 120A1, 120A2, and 120A3 in turn, and executes the voice guidance.

Because of this, without visual observation, the user can grasp that the areas 120A1, 120A2, and 120A3 correspond to "noodles", "bowls", and "drinks", respectively, with a tactile sensation perceived with a fingertip, a palm, or the like, and by the voice guidance. Here, "noodles", "bowls", and "drinks" constitute a crude classification.

Also, if one of "noodles", "bowls", and "drinks" is selected by the user, the control unit 200 displays a detailed menu as illustrated in FIG. 18, and executes guidance on the menus based on tactile sensations and voice guidance.

Because of this, without visual observation, the user can be guided to one of the buttons 161A-166A to readily order a favorite menu with a tactile sensation perceived with a fingertip, a palm, or the like, and by the voice guidance.

Therefore, according to the embodiment, it is possible to provide an electronic device 100 with which multiple areas can be distinguished by sound and vibration, and a method of driving the electronic device.

Note that in the embodiment described above, three vibration elements 140A1-140A3 are used to selectively generate a vibration on the three areas 120A1 to 120A3 of the top panel 120. However, two or more vibration elements are acceptable so as to independently generate vibration on two or more areas on the top panel 120. This is because if it is possible to independently generate vibration on at least two or more areas, it is possible to provide an area where vibration is generated, and an area where vibration is not generated in a summary guidance mode.

Next, modified examples will be described by using FIG. 29 to FIG. 66. In the following, the same reference codes are assigned to the same elements that have been described by using FIG. 1 to FIG. 28, and the description may be omitted.

FIG. 29 is a diagram illustrating a modified example of a display on the display panel 160 in a summary guidance mode of the electronic device 100.

When displaying the images 160A1, 160A2, and 160A3 on the display panel 160, the buttons 160A11, 160A12, 160A13, 160A21, 160A22, 160A23, 160A31, 160A32, and 160A33 may be displayed.

The buttons 160A11, 160A12, and 160A13 are buttons to select "plain udon", "meat udon", and "tempura udon", respectively. These are noodles.

Also, the buttons 160A21, 160A22, and 160A23 are buttons to select "tempura bowl A", "tempura bowl B", and "sukiyaki bowl", respectively. These are bowls.

Also, the button 160A31, 160A32, and 160A33 are buttons to select drinks, such as "orange juice".

Such buttons 160A11-160A13, 160A21-160A23, and 160A31-160A33 may be displayed in the images 160A1, 160A2, and 160A3 so that the buttons 160A11-160A13, 160A21-160A23, and 160A31-160A33 become selectable when switching occurs from the summary guidance mode to the detailed guidance mode.

FIG. 30 is a diagram illustrating a modified example of an operation in a detailed guidance mode of the electronic device 100. FIG. 31 is a diagram illustrating a modified example of a drive signal in a detailed guidance mode of the electronic device 100.

In FIG. 30, assume that the index finger of the user's right hand is moving in the positive direction of the Y-axis through the assist area 161B, the button 161A, the assist area 161B, the assist area 162B, the button 162A, and the assist area 162B, in this order, as designated by an arrow.

More specifically, assume that the index finger of the user's right hand starts moving in the assist area 161B at time t11, enters the display area of the button 161A at time t12, and enters the assist area 161B at time t13. Furthermore, assume that it enters the assist area 162B from the assist area 161B at time t14, enters the button 162A at time t15, and enters the assist area 162B at time t16.

In such a case, the electronic device 100 drives the vibration elements 140A1-140A3 at time t11, and a voice guidance of "Plain udon is located right" is output from the speaker 103. The drive pattern of the vibration elements 140A1-140A3 at this time is, for example, as illustrated in FIG. 31, and it drives the vibration elements 140A1-140A3 by a drive signal whose amplitude is constant at A3 only for a predetermined short time. At this time, a tactile sensation of smoothness is brought to the fingertip of the user.

The predetermined short time is set to a time that is sufficiently shorter than the time required for the fingertip passing through the assist area 161B at an average moving speed of the fingertip. Note that instead of setting such a predetermined short time, the coordinates of the fingertip may be detected to stop driving the vibration elements 140A1-140A3 before the fingertip enters the display area of the button 162A from the assist area 161B.

The vibration elements 140A1-140A3 becomes not driven as the amplitude of the drive signal is forced to zero while the index finger of the user's right hand stays in the assist area 161B. At this time, since the dynamic frictional force acting on the fingertip of the user increases, a tactile sensation as if to touch a protrusion is brought.

When the index finger of the user's right hand enters the display area of the button 161A at time t12, the vibration elements 140A1-140A3 are driven by the drive signal whose amplitude changes periodically between A4 and A5, and a voice guidance of "This is plain udon" is output from the speaker 103. At this time, a tactile sensation of roughness is brought to the fingertip of the user.

When entering the assist area 161B at time t13, the drive of the vibration elements 140A1-140A3 is stopped only for the predetermined short time. Since the dynamic frictional force acting on the fingertip of the user increases at this time, a tactile sensation as if to touch a protrusion is brought. Also, since the fingertip of the user is moving in the direction away from the button 161A, no voice guidance is executed at this time.

Also, once the predetermined short time has elapsed since time t13, the vibration elements 140A1-140A3 are driven by a drive signal of the amplitude A3. At this time, a tactile sensation of smoothness is brought to the fingertip of the user.

When entering the assist area 162B from the assist area 161B at time t14, the vibration elements 140A1-140A3 are kept driven by the drive signal of the amplitude A3, and a voice guidance of "Meat udon is located right" is output from the speaker 103. At this time, a tactile sensation of smoothness is brought to the fingertip of the user.

When the predetermined short time has elapsed since time t14, the vibration elements 140A1-140A3 become not driven as the amplitude is forced to zero. Since the dynamic frictional force acting on the fingertip of the user increases at this time, a tactile sensation as if to touch a protrusion is brought.

When entering the button 162A at time t15, the vibration elements 140A1-140A3 are driven by the drive signal whose amplitude changes periodically between A5 and A6, and a voice guidance of "This is meat udon" is output from the speaker 103. At this time, a tactile sensation of roughness is brought to the fingertip of the user. Note that the amplitude A6 is a greater than the amplitude A5, and less than the amplitude A4. Therefore, on the button 162A and on the button 161A, the vibration elements 140A1-140A3 are driven by driving vibrations of different amplitudes.

When entering the assist area 162B at time t16, the drive of the vibration elements 140A1-140A3 is stopped only for the predetermined short time. Since the dynamic frictional force acting on the fingertip of the user increases at this time, a tactile sensation as if to touch a protrusion is brought. Also, since the fingertip of the user is moving in the direction away from the button 162A at this time, no voice guidance is executed.

Also, once the predetermined short time has elapsed since time t16, the vibration elements 140A1-140A3 are driven by the drive signal of the amplitude A3. At this time, a tactile sensation of smoothness is brought to the fingertip of the user.

As described above, sections may be provided between the button 161A and the assist area 161B, and between the button 162A and the assist area 162B, where the amplitude of the drive signal is forced to zero. Since a tactile sensation as if to touch a protrusion is brought, it becomes easier to perceive the boundaries between the button 161A and the assist area 161B, and between the button 162A and the assist area 162B with the tactile sensation.

Also, by driving the vibration elements 140A1-140A3 by drive vibrations of different amplitudes on the button 162A and on the button 161A, the difference between the button 162A and the button 161A becomes sensible with the tactile sensation.

This is also the same in the case where a fingertip is moved in any direction in the display areas of the buttons 161A-166A and the assist areas 161B-166B.

In this way, it is possible to guide a fingertip of the user in a direction where one of the buttons 161A-166A is located by using a tactile sensation using the squeeze effect, and a voice guidance. Because of this, the user can precisely recognize the positions of the buttons 161A-166A without visual observation, and can precisely order a menu associated with one of the buttons 161A-166A by performing a confirmation operation.

FIG. 32 is a diagram illustrating a modified example of a drive signal in a detailed guidance mode of the electronic device 100.

As illustrated between time t1 and time t2 in FIG. 32, while a fingertip is moving in the display area of the assist area 165B in the direction approaching the button 165A, the amplitude of the drive signal may be increased from zero to A3 gradually.

By changing the amplitude in time in this way, while the fingertip approaches the button 165A closer in the display area of the assist area 165B, a tactile sensation becoming smoother is brought to the fingertip of the user gradually. Because of this, it is possible to inform the user of the state of approaching the button 165A from the assist area 165B, through the tactile sensation.

Also, in contrast to this, as illustrated between time t3 and time t4 in FIG. 32, while the fingertip is moving in the display area of the assist area 165B in the direction away from the button 165A, the amplitude of the drive signal may be decreased from A3 to zero gradually.

By changing the amplitude in time in this way, while the fingertip moves away from the button 165A in the display area of the assist area 165B, a tactile sensation becoming less smooth is brought to the fingertip of the user gradually. Because of this, it is possible to inform the user of the state of moving away from the button 165A, through the tactile sensation.

FIG. 33 is a diagram illustrating a modified example of a display on the display panel 160 of the electronic device 100.

Images 160A41, 160A42, and 160A43 are displayed on the display panel 160. The size of the display areas of the images 160A41, 160A42, and 160A43 is the same as that of the display areas of the images 160A1, 160A2, and 160A3 illustrated in FIG. 14.

Characters of "plain udon", "meat udon", and "tempura udon" are displayed on the images 160A41, 160A42, and 160A43, respectively.

In a state where the images 160A41, 160A42, and 160A43 are displayed as illustrated in FIG. 33, the electronic device 100 may vibrate the areas 120A1, 120A2, and 120A3 (see FIG. 10 to FIG. 12) of the top panel 120, and may output voice guidances of "plain udon", "meat udon", and "tempura udon" from the speaker 103.

The user can select one of "plain udon", "meat udon", and "tempura udon" by performing a confirmation operation.

Note that such a guidance mode may be executed as a summary guidance mode. In this case, a detailed mode does not need to be executed. Alternatively, in a detailed mode, the buttons to select "plain udon", "meat udon", and "tempura udon" may be enlarged as the images 160A41, 160A42, and 160A43, respectively.

FIG. 34 is a diagram illustrating a top panel 120, a touch panel 150, and a display panel 160 of an in-vehicle electronic device. FIG. 35 is a diagram illustrating an example of an operating state in a summary guidance mode of the electronic device illustrated in FIG. 34. In FIG. 34, the same XYZ coordinate system is defined as in FIG. 2 and FIG. 3. Also, in FIG. 34, the top panel 120, the touch panel 150, and the display panel 160 are illustrated in a simplified way.

Also, in FIG. 34, the user is performing a multi-touch by touching the top panel 120 with the thumb, the index finger, the middle finger, the third finger, and the little finger of the left hand. Note that this may be a state where the palm touches the top panel 120 in addition to the thumb, the index finger, the middle finger, the third finger, and the little finger of the left hand; or two fingers among the thumb, the index finger, the middle finger, the third finger, and the little finger of the left hand touch the top panel 120.

The electronic device illustrated in FIG. 34 is used as, for example, a controller of an air-conditioner, audio, and navigation of the vehicle, and is placed, for example, on a central part of the indoor dashboard of the vehicle, or the like.

The display on the display panel 160 illustrated in FIG. 34 comes from a summary guidance mode, and characters representing classification among "air-conditioner", "audio", and "navigation" are displayed on upper parts of the image 160A51, 160A52, and 160A53, respectively.

In the electronic device illustrated in FIG. 34, when a vibration occurs on the area 120A1 as illustrated in FIG. 35, and a voice guidance of "Smooth part corresponds to air-conditioner" is executed, even without visual observation, the user can recognize the area 120A1 of "air-conditioner".

Having such an electronic device with a summary guidance mode to select air-conditioner, audio, or navigation installed in the vehicle enables the user, while driving the vehicle, to easily activate the summary guidance mode only by performing a multi-touch with a single hand without visually observing the display panel 160.

FIG. 36 is a diagram illustrating a display on the display panel 160 in a detailed guidance mode of the electronic device illustrated in FIG. 34.

In FIG. 36, buttons 360A61, 360A62, and 360A63 are displayed on the display panel 160. These buttons have a comparatively great size.

The buttons 360A61, 360A62, and 360A63 are buttons to select "turn up temperature", "turn down temperature", and "return", respectively.

Using such a detailed guidance mode to operate air-conditioner, audio, and navigation enables the user, while driving the vehicle, to select the button 360A61, 360A62, or 360A63 with a tactile sensation and a voice guidance, without visually observing the display panel 160.

FIG. 37 is a diagram illustrating another display on the display panel 160 in a detailed guidance mode of the electronic device illustrated in FIG. 34.

In FIG. 37, the display panel 160 displays nine buttons 261A, 262A, 263A, 264A, 265A, 266A, 267A, 268A, and 269A (referred to as 261A-269A, below) corresponding to eight menus of "circulate internal air", "mode", "zoom in", "turn up temperature", "turn up volume", "zoom out", "turn down temperature", and "turn down volume", and "return" operation. The buttons 261A-269A are buttons displayed by the GUI. Assist areas 261B-269B are placed around the buttons 261A-269A.

The buttons 261A, 264A, and 267A are buttons for operating the air-conditioner, the buttons 262A, 265A, and 268A are buttons for operating the audio, and the buttons 263A, 266A, and 269A are buttons for operating the navigation.

Also, above the buttons 261A, 262A, and 263A, areas 167A1, 167A2, and 167A3 are provided, and below the buttons 267A, 268A, and 269A, areas 168A1, 168A2, and 168A3 are provided.

Using such a detailed guidance mode to operate air-conditioner, audio, and navigation enables the user, while driving the vehicle, to select one of the buttons 261A-269A with a tactile sensation and a voice guidance, without visually observing the display panel 160.

FIG. 38 is a diagram illustrating another display on the display panel 160 in a detailed guidance mode of the electronic device illustrated in FIG. 34.

In FIG. 38, the display panel 160 displays nine buttons 261A1, 262A1, 263A1, 264A1, 265A1, 266A1, 267A1, 268A1, and 269A1 (referred to as 261A1-269A1, below) corresponding to eight menus of "AUTO", "mode", "A/C", "turn up temperature", "defroster", "REAR", "turn down temperature", and "circulate internal air", and "return" operation. The buttons 261A1-269A1 are buttons displayed by the GUI. The buttons 261A1-269A1 are buttons for operating an air-conditioner. Assist areas 261B1 to 269B1 are placed around the button 261A1 to 269A1.

Also, above the buttons 261A1, 262A1, and 263A1, areas 167A1, 167A2, and 167A3 are provided, and below the buttons 267A1, 268A1, and 269A1, the areas 168A1, 168A2, and 168A3 are provided.

Using such a detailed guidance mode to operate an air-conditioner enables the user, while driving the vehicle, to select one of the buttons 261A1-269A1 with a tactile sensation and a voice guidance, without visually observing the display panel 160.

FIG. 39 is a diagram illustrating a modified example of a display on the display panel 160 in a summary guidance mode of the electronic device illustrated in FIG. 34.

When displaying images 160A51, 160A52, and 160A53 on the display panel 160, buttons 261A-269A may be displayed. The buttons 261A-269A are substantially the same as those illustrated in FIG. 37.

FIG. 40 is a diagram illustrating a modified example of a display on the display panel 160 in a detailed guidance mode of the electronic device illustrated in FIG. 34.

In a state where a map is displayed on the display panel 160, buttons 263A2, 266A2, and 269A2 may be displayed. The buttons 263A2, 266A2, and 269A2 are size-enlarged buttons of 263A, 266A, and 269A illustrated in FIG. 37. Note that as illustrated in FIG. 40, it is not necessary to provide assist areas around the buttons 263A2, 266A2, and 269A2.

FIG. 41 is a diagram illustrating a modified example of a display on the display panel 160 in a detailed guidance mode of the electronic device illustrated in FIG. 34.

In a state where a map is displayed on the display panel 160, buttons 263A3, 266A3, and 269A3 may be displayed on lower parts in the display panel 160. Assist areas 263B3, 266B3, and 269B3 are provided around the buttons 263A3, 266A3, and 269A3.

The buttons 263A3, 266A3, and 269A3 are substantially the same as the buttons 263A, 266A, and 269A illustrated in FIG. 37, and the assist areas 263B3, 266B3, and 269B3 are substantially the same as the assist areas 263B3, 266B3, and 269B3 illustrated in FIG. 37.

FIG. 42 is a diagram illustrating a modified example of a display on the display panel 160 in a summary guidance mode of the electronic device 100. FIG. 42 illustrates an example of a display on the display panel 160 in the case where the electronic device 100 is placed as an operation unit of an ATM (Automated Teller Machine) of a bank, a post office, or the like. In FIG. 42, the top panel 120, the touch panel 150, and the display panel 160 are illustrated in a simplified way.

When displaying images 160A61, 160A62, and 160A63 on the display panel 160, buttons 261A63, 262A63, 263A63, 264A63, 265A63, and 266A63 may be displayed. The images 160A61, 160A62, and 160A63 are to classify "cash transactions", "bankbook/balance", and "wire transfer, etc.", and are displayed in a summary guidance mode.

The buttons 261A63, 262A63, 263A63, 264A63, 265A63, and 266A63 are buttons to select "withdrawal", "balance inquiry", "wire transfer", "deposit", "bankbook entry", and "return", respectively. Note that any one of the buttons 261A3, 262A3, 263A3, 264A3, 265A3, and 266A3 may be served as "return" button.

The buttons 261A3 and 264A3 are placed in the image 160A61, the buttons 262A3 and 265A3 are placed in the image 160A62, and the buttons 263A3 and 266A3 are placed in the image 160A63.

Such buttons 261A3, 262A3, 263A3, 264A3, 265A3, and 266A3 may be displayed in the image 160A61, 160A62, and 160A63, so that upon a transition from a summary guidance mode to a detailed guidance mode, the button 261A3, 262A3, 263A3, 264A3, 265A3, or 266A3 can be selected.

FIG. 43 and FIG. 44 are diagrams illustrating displays on the display panel 160 in a summary guidance mode of the electronic device 100. In FIG. 43, the top panel 120, the touch panel 150, and the display panel 160 are illustrated in a simplified way.

The images 160A61, 160A62, and 160A63 are displayed on the display panel 160. Areas where the images 160A61, 160A62, and 160A63 are displayed are substantially the same as the areas 120A1, 120A2, and 120A3 of the top panel 120 (see FIGs. 10 to 12), respectively.

Characters representing classification of "cash transactions", "bankbook/balance", and "wire transfer, etc." are displayed on upper parts of the images 160A61, 160A62, and 160A63, respectively. The electronic device 100 is an input device with which the user performs an input operation on the top panel 120 to execute a wire transfer and the like.

The images 160A61, 160A62, and 160A63 displayed on the display panel 160 illustrated in FIG. 43 are displays in a summary guidance mode, and are displayed on the display panel 160 when the user performs a multi-touch.

In FIG. 44, a standing wave is generated on the area 120A1 of the top panel 120, and the user touches the entire top panel 120 with both hands, and moves both hands in a reciprocating motion rightward and leftward. In this state, only driving the vibration element 140A1 reduces the dynamic frictional force in the area 120A1, and the user perceives a tactile sensation of smoothness with the index finger, the middle finger, the third finger, and the little finger of the left hand.

At this time, since the dynamic frictional force is not reduced in the areas 120A2 and 120A3, the user does not perceive a tactile sensation of smoothness with the right hand.

In such a state, the electronic device 100 outputs a voice guidance of "Smooth part corresponds to cash transactions" from the speaker 103.

In this way, in a state where the area 120A1 of cash transactions has been recognized, if the user performs a confirmation operation in the area 120A1, a detailed input mode of cash transactions can be activated.

FIG. 45 is a diagram illustrating a display on the display panel 160 in a detailed guidance mode of the electronic device illustrated in FIG. 43.

In FIG. 45, buttons 261A4 and 262A4 are displayed on the display panel 160. These buttons have a comparatively great size.

The buttons 261A4 and 262A4 are buttons to select "withdrawal" and "deposit", respectively.

Using such a detailed guidance mode enables the user, without visually observing the display panel 160, to select the button 261A4 or 262A4 with a tactile sensation and a voice guidance.

FIG. 46 is a diagram illustrating another display on the display panel 160 in a detailed guidance mode of the electronic device illustrated in FIG. 43.

In FIG. 46, the display panel 160 displays six buttons corresponding to five menus to select "withdrawal", "balance inquiry", "wire transfer", "deposit", and "bankbook entry", respectively, and "return" operation. Here, a button 261A5 and an assist area 261B5 for "withdrawal" are designated. Also, the area 267A5 is provided in the surroundings.

Using such a detailed guidance mode enables the user, without visually observing the display panel 160, to select the button 261A5 or the like with a tactile sensation and a voice guidance, and to easily execute a transaction on the ATM.

FIG. 47 is a diagram illustrating another display on the display panel 160 in a detailed guidance mode of the electronic device illustrated in FIG. 43.

In FIG. 47, the display panel 160 displays button 261A6 and the like, assist area 261B6 and the like for inputting an amount of money. Also, an area 267A6 is provided in the surroundings.

Using such a detailed guidance mode enables the user, without visually observing the display panel 160, to select the button 261A6 or the like with a tactile sensation and a voice guidance, and to easily execute a transaction on the ATM.

FIG. 48 is a diagram illustrating a modified example of a display on the display panel 160 in a summary guidance mode of the electronic device 100. FIG. 48 illustrates an example of a display on the display panel 160 in the case where the electronic device 100 is placed as an operation unit of a ticket machine for liquids or the like. In FIG. 48, the top panel 120, the touch panel 150, and the display panel 160 are illustrated in a simplified way.

When displaying images 160A71, 160A72, and 160A73 on the display panel 160, buttons 261A7 and the like may be displayed. The images 160A71, 160A72, and 160A73 classify "tickets", "transfer tickets", and "reservation/book tickets/season tickets", and are displayed in a summary guidance mode.

Nine buttons including the button 261A7 are buttons to select "below JPY 500", "below JPY 500", "reserved seat tickets", "JPY 500 to 1000", "JPY 500 to 1000", "book tickets", "over JPY 1000", "over JPY 1000", and "return", respectively.

Such buttons 261A7 and the like may be displayed in the images 160A71, 160A72, and 160A73, so that the buttons 261A7 or the like can be selected and when a summary guidance mode transitions to a detailed guidance mode.

FIG. 49 and FIG. 50 are diagrams illustrating displays on the display panel 160 in a summary guidance mode of the electronic device 100. In FIG. 49, the top panel 120, the touch panel 150, and the display panel 160 are illustrated in a simplified way.

Images 160A71, 160A72, and 160A73 are displayed on the display panel 160. Areas where the images 160A71, 160A72, and 160A73 are displayed are substantially the same as the areas 120A1, 120A2, and 120A7 of the top panel 120 (see FIG. 10 or 12 references), respectively.

Characters representing classification of "tickets", "transfer tickets", and "reservation/book tickets/season tickets" are displayed on upper parts of the image 160A71, 160A72, and 160A73. The electronic device 100 is an input device with which the user can perform an input operation on the top panel 120 to execute a reserved seat ticket and the like.

The image 160A71, 160A72, and 160A73 displayed on the display panel 160 illustrated in FIG. 49 are displays in a summary guidance mode, and are displayed on the display panel 160 when the user performs a multitouch.

In FIG. 50, a standing wave is generated on the area 120A1 of the top panel 120, and the user touches the entire top panel 120 with both hands, and moves both hands in a reciprocating motion rightward and leftward. In this state, only driving the vibration element 140A1 reduces the dynamic frictional force in the area 120A1, and the user perceives a tactile sensation of smoothness with the middle finger, the third finger, and the little finger of the left hand.

At this time, since the dynamic frictional force is not reduced in the areas 120A2 and 120A7, the user does not perceive a tactile sensation of smoothness with the thumb and the index finger of the left hand, and the right hand.

In such a state, the electronic device 100 outputs a voice guidance of "Smooth part corresponds to tickets" from the speaker 103.

In this way, in a state where the area 120A1 of tickets has been recognized, if the user performs a confirmation operation in the area 120A1, a detailed input mode of tickets can be activated.

FIG. 51 is a diagram illustrating a display on the display panel 160 in a detailed guidance mode of the electronic device illustrated in FIG. 49.

In FIG. 51, buttons 261A9, 262A9, and 263A9 are displayed on the display panel 160. These buttons have a comparatively great size.

The buttons 261A9, 262A9, and 263A9 are buttons to select "below JPY 500", "JPY 500 to 1000", and "over JPY 1000", respectively.

Using such a detailed guidance mode enables the user, without visually observing the display panel 160, to select the button 261A9, 262A9, or 263A9 with a tactile sensation and a voice guidance.

FIG. 52 is a diagram illustrating another display on the display panel 160 in a detailed guidance mode of the electronic device illustrated in FIG. 49.

In FIG. 52, the display panel 160 displays nine buttons corresponding to eight menus to select "below JPY 500", "below JPY 500", "reserved seat tickets", "JPY 500 to 1000", "JPY 500 to 1000", "book tickets", "over JPY 1000", and "over JPY 1000", respectively, and "return" operation. Here, the upper left button 261A7 for "below JPY 500s" and the assist area 261B7 are designated. Also, an area 270 is provided in the surroundings.

Using such a detailed guidance mode enables the user, without visually observing the display panel 160, to select the button 261A7 or the like with a tactile sensation and a voice guidance, and to easily execute a transaction on the ATM.

FIG. 53 is a diagram illustrating another display on the display panel 160 in a detailed guidance mode of the electronic device illustrated in FIG. 49.

In FIG. 53, the display panel 160 displays buttons 261A8 and the like for purchasing tickets, and assist areas 261B8 and the like. The buttons 261A8 and the like are provided as 13 buttons including 12 buttons according to the ticket prices, and one "return" button. Also, an area 270A is provided in the surroundings.

Using such a detailed guidance mode enables the user, without visually observing the display panel 160, to select the button 261A8 or the like with a tactile sensation and a voice guidance, and to easily purchase a ticket at a desired price.

Note that although the embodiment has been described in which the electronic device 100 includes the display panel 160, the electronic device 100 may include no display panel 160.

FIG. 54 is a cross-sectional view of an electronic device 100A. The cross section illustrated in FIG. 54 corresponds to the cross section illustrated in FIG. 3.

The electronic device 100A includes a housing 110, a top panel 120, a double-sided tape 130, vibration elements 140A1-140A3, a touch panel 150, and a substrate 170. Note that FIG. 54 illustrates only the vibration element 140A2 among the vibration elements 140A1-140A3. In the electronic device 100A, the touch panel 150 is directly mounted on the substrate 170.

Since the electronic device 100A includes no display panel 160, it does not need to include image data in data used in a summary guidance mode and a detailed guidance mode (see FIG. 26 and FIG. 27).

In response to an input operation performed on the top panel 120, similar to the electronic device 100, the electronic device 100A drives one of the vibration elements 140A1-140A3 in a summary guidance mode, and drives the vibration elements 140A1-140A3 in a detailed guidance mode.

FIG. 55 is a cross-sectional view illustrating an electronic device 100B in a modified example of the embodiment. The cross section illustrated in FIG. 55 corresponds to the cross section illustrated in FIG. 3.

The electronic device 100B includes a housing 110B, a top panel 120B, a double-sided tape 130B, vibration elements 140A1-140A3, a touch panel 150B, a display panel 160B, and a substrate 170B.

The electronic device 100B illustrated in FIG. 55 has substantially the same configuration as the electronic device 100 in the embodiment illustrated in FIG. 3 except for the top panel 120B being a curved surface glass.

The top panel 120B curves such that the central part in plan view projects toward the side in the positive direction of the Z-axis. Although a cross-sectional shape of the top panel 120B in the YZ plane is illustrated in FIG. 55, the cross-sectional shape in the XZ plane is substantially the same.

Using the top panel 120B of a curved surface glass as such enables to provide a satisfactory tactile sensation.

FIG. 56 is a plan view illustrating an electronic device 100C in a modified example of the embodiment. In FIG. 56, the same XYZ coordinates are defined as in FIG. 2 and FIG. 3.

The electronic device 100C includes a housing 110, a top panel 120, a double-sided tape 130, vibration elements 140A1, 140A2, 140A3, 140B1, 140B2, and 140B3, a touch panel 150, a display panel 160, and a substrate 170.

The electronic device 100C has a configuration in which the vibration elements 140B1, 140B2, and 140B3 are added to the electronic device 100 illustrated in FIG. 2 and FIG. 3. The vibration elements 140B1, 140B2, and 140B3 are attached to a surface on the side in the negative direction of the Z-axis of the top panel 120 as are the vibration elements 140A1, 140A2, and 140A3, and as illustrated in FIG. 56, arranged along the X-axis on the side in the positive direction of the Y-axis.

FIG. 57 to FIG. 61 are diagrams illustrating areas in each of which a vibration is generated autonomously on the top panel 120 of the electronic device 100C.

When the vibration element 140B1 is driven, as illustrated in FIG. 57, in the area 120B1 on the side in the negative direction of the X-axis of the top panel 120, the amplitude of a standing wave becomes great over the span in the short-side direction.

When the vibration element 140A1 is driven, as illustrated in FIG. 58, in the area 120A1 on the side in the negative direction of the Y-axis of the top panel 120, the amplitude of a standing wave becomes great over the span in the short-side direction.

When the vibration element 140B3 is driven, as illustrated in FIG. 59, in the area 120B3 of a side in the positive direction of the X-axis of the top panel 120, the amplitude of a standing wave becomes great over the span in the short-side direction.

Also, when the vibration elements 140A2 and 140A3 are driven, as illustrated in FIG. 60, in the area 120C of the top panel 120, the amplitude of a standing wave becomes great over the span in the short-side direction. The area 120C is an area where the areas 120A2 and 120A3 illustrated in FIG. 11 and FIG. 12 are combined.

FIG. 61 is a diagram illustrating an example of a display on the display panel 160 of the electronic device 100C. GUI buttons for information related to corporate information, stockholders, job opportunities, group companies, and the like are displayed on the area 120A1, and GUI buttons of services, solutions, products, approach, and support are displayed on the area 120B1.

Also, images of products such as a PC, cellular, and smart phone are displayed on the area 120C, and GUI buttons for individual customers, institutional customers, support information, announcements, and the like are displayed on the area 120B3.

Therefore, generating a vibration in the area 120A1, 120B1, 120C, or 120B3 in a summary guidance mode and executing a voice guidance enables the user to know various information items of a company without visual observation.

FIG. 62 is a plan view illustrating an electronic device 100D. The electronic device 100D is a smart phone terminal.

The top panel 120 has partitioned areas 120D1, 120D2, and 120D3. Images of the residual capacity of the battery, the reception state of a radio wave, and the like are displayed on the area 120D1. The area 120D2 is an area to display various contents. The area 120D3 is an area where a home button and the like are placed.

FIG. 63 is a plan view illustrating the electronic device 100D in the modified example of the embodiment. In FIG. 63, the same XYZ coordinates are defined as in FIG. 2 and FIG. 3.

The electronic device 100D includes a housing 110, a top panel 120, a double-sided tape 130, vibration elements 140D1, 140D2, 140D3, a touch panel 150, a display panel 160, and a substrate 170.

The electronic device 100D includes the vibration elements 140D1, 140D2, and 140D3 instead of the vibration elements 140A1, 140A2, and 140A3 of the electronic device 100 illustrated in FIG. 2 and FIG. 3. The respective lengths in the Y-axis direction of the vibration elements 140D1, 140D2, and 140D3 are different from the length of the vibration elements 140A1, 140A2, and 140A3.

FIG. 64 to FIG. 66 are diagrams illustrating areas in each of which a vibration is generated autonomously on the top panel 120 of the electronic device 100D.

When the vibration element 140D1 is driven, as illustrated in FIG. 64, in the area 120D1 on the side in the negative direction of the Y-axis of the top panel 120, the amplitude of a standing wave becomes great over the span in the short-side direction.

When the vibration element 140D2 is driven, as illustrated in FIG. 65, in the area 120D2 of the central part of the Y-axis direction of the top panel 120, the amplitude of a standing wave becomes great over the span in the short-side direction.

Also, when the vibration element 140D3 is driven, as illustrated in FIG. 66, in the area 120D3 on the side in the positive direction of the Y-axis of the top panel 120, the amplitude of a standing wave becomes great over the span in the short-side direction.

Therefore, generating a vibration in the area 120D1, 120D2, or 120D3 in a summary guidance mode and executing a voice guidance enables the user to operate the electronic device 100D as a smart phone terminal without visual observation.

As above, an electronic device and a method of driving the electronic device have been described according to exemplary embodiments, and note that the present invention is not limited to the embodiments specifically disclosed as above, but various modifications and changes can be made without deviating from the subject matters described in the claims. The foregoing description describes several embodiments, examples and/or aspects. However the described embodiments, examples and/or aspects are not to be regarded as necessarily defining the invention, unless they fall within the scope of the appended claims. Therefore the scope of protection of the present invention is solely defined by the appended claims.

[Description of Reference Symbols]

100, 100B, 100C, a 100D electronic device
110 housing
120 top panel

130 double-sided tape
140A1, 140A2, 140A3, 140B1, 140B2, 140B3 vibration element
150 touch panel
160 display panel
170 substrate
200 controller
220 application processor
230 communication processor
240 controller
240A drive controller
250 memory
300 drive controller
310 sinusoidal wave generator
320 amplitude modulator

## Claims

**1.** An electronic device (100) comprising:

a top panel (120) including an operation surface;
a position detector (150) configured to detect a position of an input operation performed on the operation surface;
a first vibration element (140A1) placed in a first area from among a plurality of areas partitioning the operation surface, and configured to generate a vibration selectively within the first area, in response to being driven by a first drive signal, the generated vibration being a natural vibration in an ultrasonic range, wherein the generated vibration vibrates at a resonance frequency of a resonance system including the top panel;
a second vibration element (140A2) placed in a second area from among the plurality of areas, and configured to generate a vibration selectively within the second area, in response to being driven by a second drive signal, the generated vibration being a natural vibration in the ultrasonic range, wherein the generated vibration vibrates at the resonance frequency of the resonance system including the top panel;
a sound outputter (103);
a storage (250) configured to store first data in which coordinates of the first area, the first vibration element (140A1), the first drive signal, and a first voice guidance assigned to the first area are associated with each other, and second data in which coordinates of the second area, the second vibration element (140A2), the second drive signal, and a second voice guidance assigned to the second area are associated with each other; and
a controller (240) configured to:
in response to a first input operation, from among a plurality of input operations, being detected in the first area by the position detector (150), drive the first vibration element (140A1) by the first drive signal based on the first data such that a strength of the vibration varies depending on a moving speed of the first input operation detected in the first area, and to cause the sound outputter (103) to output the first voice guidance, and in response to a second input operation,
from among the plurality of input operations, being detected in the second area by the position detector (150), drive the second vibration element (140A2) by the second drive signal based on the second data such that a strength of the vibration varies depending on a moving speed of the second input operation detected in the second area, and to cause the sound outputter (103) to output the second voice guidance, wherein
the controller (240) is configured to drive the first and second vibration elements (140A1, 140A2) such that a dynamic friction force acting on a fingertip of a user performing the first or second input operation is reduced so as to guide the fingertip of the user in a direction where one of a plurality of buttons (161A-164A) is located, and to cause the sound outputter (103) to output voice guidance comprising directional information to guide the fingertip of the user in the direction where the one of the plurality of buttons (161A-164A) is located.

**2.** The electronic device (100) as claimed in claim 1, wherein the storage (250) is further configured to store third data comprising:

coordinates of the plurality of buttons (161A-164A) located across the first area and
the second area;
a plurality of third voice guidances each of which is assigned to a corresponding one of the plurality of buttons (161A-164A)

**3.** The electronic device (100) as claimed in claim 2, wherein the third data stored in the storage (250) further comprises:

coordinates of fourth areas (161B-164B) each of which is placed around a corresponding one of the buttons (161A-164A), and
a plurality of fourth voice guidances each of which is assigned to a corresponding one of the fourth areas, and
wherein in response to one of the input operations detected by the position detector (150) in one of the fourth areas, based on the third data, the controller (240) drives the first vibration element (140A1) and the second vibration element (140A2), and causes the sound outputter (103) to a fourth voice guidances associated with the one of the fourth areas.

**4.** The electronic device (100) as claimed in claim 3, wherein an amplitude being associated with the plurality of buttons (161A-164A) is smaller than an amplitude being associated with the fourth areas (161B-164B).

**5.** The electronic device (100) as claimed in any one of claims 1 to 4, further comprising:
a display (160).

**6.** A method of driving an electronic device (100) that includes:

a top panel (120) including an operation surface;
a position detector (150) configured to detect a position of an input operation performed on the operation surface;
a first vibration element (140A1) placed in a first area from among a plurality of areas partitioning the operation surface, and configured to generate a vibration selectively within the first area, in response to being driven by a first drive signal, the generated vibration being a natural vibration in an ultrasonic range, wherein the generated vibration vibrates at a resonance frequency of a resonance system including the top panel;
a second vibration element (140A2) placed in a second area from among the plurality of areas, and configured to generate a vibration selectively within the second area, in response to being driven by a second drive signal, the generated vibration being a natural vibration in the ultrasonic range, wherein the generated vibration vibrates at the resonance frequency of the resonance system including the top panel;
a sound outputter (103); and
a storage (250) configured to store first data in which coordinates of the first area, the first vibration element (140A1), the first drive signal, and a first voice guidance assigned to the first area are associated with each other, and second data in which coordinates of the second area, the second vibration element (140A2), the second drive signal, and a second voice guidance assigned to the second area are associated with each other,
the method comprising:

driving, in response to a first input operation, from among a plurality of input operations, being detected in the first area by the position detector (150), the first vibration element (140A1) by the first drive signal based on the first data such that a strength of the vibration varies depending on a moving speed of the first input operation detected in the first area, and causing the sound outputter (103) to output the first voice guidance, and
driving, in response to a second input operation, from among the plurality of input operations, being detected in the second area by the position detector (150), the second vibration element (140A2) by the second drive signal based on the second data such that a strength of the vibration varies depending on a moving speed of the second input operation detected in the second area, and to causing the sound outputter (103) to output the second voice guidance, wherein the driving causes a dynamic friction force acting on a fingertip of a user performing the first or second input operation to be reduced so as to guide the fingertip of the user in a direction where one of a plurality of buttons (161A-164A) is located, and causes the sound outputter (103) to output voice guidance comprising directional information to guide the fingertip of the user in the direction where the one of the plurality of buttons (161A-164A) is located.

## Patentansprüche

**1.** Elektronische Vorrichtung (100), die Folgendes umfasst:

ein oberes Paneel (120), das eine Bedienoberfläche aufweist;
einen Positionsdetektor (150), der konfiguriert ist, um eine Position einer Eingabeoperation zu erkennen, die auf der Bedienoberfläche durchgeführt wird;
ein erstes Vibrationselement (140A1), das in einem ersten Bereich von einer Vielzahl an Bereichen, die die Bedienoberfläche teilen, platziert ist und konfiguriert ist, um eine Vibration selektiv innerhalb des ersten Bereichs als Reaktion darauf, dass es von einem ersten Ansteuersignal angesteuert wird, erzeugt, wobei die erzeugte Vibration eine natürliche Vibration in einem Ultraschallbereich ist, wobei die erzeugte Vibration mit einer Resonanzfrequenz eines Resonanzsystems, das das obere Paneel aufweist, vibriert;
ein zweites Vibrationselement (140A2), das in einem zweiten Bereich von der Vielzahl an Bereichen platziert ist und konfiguriert ist, um eine Vibration selektiv innerhalb des zweiten Bereichs als Reaktion darauf, dass es von einem zweiten Ansteuersignal angesteuert wird, zu erzeugen, wobei die erzeugte Vibration eine natürliche Vibration im Ultraschallbereich ist, wobei die erzeugte Vibration mit der Resonanzfrequenz des Resonanzsystems, das das obere Paneel aufweist, vibriert;
einen Schallausgeber (103);
einen Speicher (250), der konfiguriert ist, um erste Daten, in welchen Koordinaten des ersten Bereichs, das erste Vibrationselement (140A1), das erste Ansteuersignal und eine erste Sprachführung, die dem ersten Bereich zugewiesen sind, miteinander verknüpft sind, und zweite Daten, in welchen Koordinaten des zweiten Bereichs, das zweite Vibrationselement (140A2), das zweite Ansteuersignal und eine zweite Sprachführung, die dem zweiten Bereich zugewiesen sind, miteinander verknüpft sind, zu speichern; und
eine Steuerung (240), die konfiguriert ist, um:

als Reaktion auf eine erste Eingabeoperation von einer Vielzahl an Eingabeoperationen, die in dem ersten Bereich von dem Positionsdetektor (150) erkannt wird, das erste Vibrationselement (140A1) durch das erste Ansteuersignal basierend auf den ersten Daten anzusteuern, so dass eine Stärke der Vibration je nach einer Bewegungsgeschwindigkeit der ersten Eingabeoperation, die in dem ersten Bereich erkannt wird, variiert, und zu bewirken, dass der Schallausgeber (103) die erste Sprachführung ausgibt, und
als Reaktion auf eine zweite Eingabeoperation von der Vielzahl an Eingabeoperationen, die in dem zweiten Bereich von dem Positionsdetektor (150) erkannt wird, das zweite Vibrationselement (140A2) durch das zweite Ansteuersignal basierend auf den zweiten Daten anzusteuern, so dass eine Stärke der Vibration je nach einer Bewegungsgeschwindigkeit der zweiten Eingabeoperation, die in dem zweiten Bereich erkannt wird, variiert, und zu bewirken, dass der Schallausgeber (103) die zweite Sprachführung ausgibt, wobei
die Steuerung (240) konfiguriert ist, um das erste und das zweite Vibrationselement (140A1, 140A2) anzusteuern, so dass eine dynamische Reibungskraft, die auf eine Fingerspitze eines Benutzers wirkt, der die erste oder die zweite Eingabeoperation durchführt, verringert wird, um die Fingerspitze des Benutzers in einer Richtung zu führen, wo eine einer Vielzahl an Tasten (161A-164A) liegt, und zu bewirken, dass der Schallausgeber (103) eine Sprachführung ausgibt, die Richtungsinformationen umfasst, um die Fingerspitze des Benutzers in der Richtung zu führen, wo die eine der Vielzahl an Tasten (161A-164A) liegt.

**2.** Elektronische Vorrichtung (100) nach Anspruch 1, wobei der Speicher (250) ferner konfiguriert ist, um dritte Daten zu speichern, die Folgendes umfassen:

Koordinaten der Vielzahl an Tasten (161A-164A), die über dem ersten Bereich und dem zweiten Bereich liegen;
eine Vielzahl an dritten Sprachführungen, von welchen jede einer entsprechenden der Vielzahl an Tasten (161A-164A) zugewiesen ist.

**3.** Elektronische Vorrichtung (100) nach Anspruch 2, wobei die dritten Daten, die in dem Speicher (250) gespeichert sind, ferner Folgendes umfassen:

Koordinaten von vierten Bereichen (161B-164B), von welchen jeder um eine entsprechende der Tasten (161A-164A) herum platziert ist, eine Vielzahl an vierten Sprachführungen, von welchen jede einem entsprechenden der vierten Bereiche zugewiesen ist,
wobei als Reaktion auf eine der Eingabeoperationen, die von dem Positionsdetektor (150) in einem der vierten Bereiche erkannt wird, basierend auf den dritten Daten die Steuerung (240) das erste Vibrationselement (140A1) und das zweite Vibrationselement (140A2) ansteuert und bewirkt, dass der Schallausgeber (103) eine vierte Sprachführung ausgibt, die mit dem einen der vierten Bereiche verknüpft ist.

**4.** Elektronische Vorrichtung (100) nach Anspruch 3, wobei eine Amplitude, die mit der Vielzahl an Tasten (161A-164A) verknüpft ist, kleiner als eine Amplitude ist, die mit den vierten Bereichen (161B-164B) verknüpft ist.

**5.** Elektronische Vorrichtung (100) nach einem der Ansprüche 1 bis 4, die ferner Folgendes umfasst:
eine Anzeige (160).

**6.** Verfahren zum Ansteuern einer elektronischen Vorrichtung (100), die Folgendes umfasst:

ein oberes Paneel (120), das eine Bedienoberfläche aufweist;
einen Positionsdetektor (150), der konfiguriert ist, um eine Position einer Eingabeoperation zu erkennen, die auf der Bedienoberfläche durchgeführt wird;
ein erstes Vibrationselement (140A1), das in einem ersten Bereich von einer Vielzahl an Bereichen, die die Bedienoberfläche teilen, platziert ist und konfiguriert ist, um eine Vibration selektiv innerhalb des ersten Bereichs als Reaktion darauf, dass es durch ein erstes Ansteuersignal angesteuert wird, zu erzeugen, wobei die erzeugte Vibration eine natürliche Vibration in einem Ultraschallbereich ist, wobei die erzeugte Vibration mit einer Resonanzfrequenz eines Resonanzsystems, das das obere Paneel aufweist, vibriert;
ein zweites Vibrationselement (140A2), das in einem zweiten Bereich von der Vielzahl an Bereichen platziert ist und konfiguriert ist, um eine Vibration selektiv innerhalb des zweiten Bereichs als Reaktion darauf, dass es durch ein zweites Ansteuersignal angesteuert wird, zu erzeugen, wobei die erzeugte Vibration eine natürliche Vibration im Ultraschallbereich ist, wobei die erzeugte Vibration mit der Resonanzfrequenz des Resonanzsystems, das das obere Paneel aufweist, vibriert;
einen Schallausgeber (103); und
einen Speicher (250), der konfiguriert ist, um erste Daten, in welchen Koordinaten des ersten Bereichs, das erste Vibrationselement (140A1), das erste Ansteuersignal und eine erste Sprachführung, die dem ersten Bereich zugewiesen sind, miteinander verknüpft sind, und zweite Daten, in welchen Koordinaten des zweiten Bereichs, das zweite Vibrationselement (140A2), das zweite Ansteuersignal und eine zweite Sprachführung, die dem zweiten Bereich zugewiesen sind, miteinander verknüpft sind, zu speichern,
wobei das Verfahren Folgendes umfasst:

Ansteuern als Reaktion auf eine erste Eingabeoperation von einer Vielzahl an Eingabeoperationen, die in dem ersten Bereich von dem Positionsdetektor (150) erkannt wird, des ersten Vibrationselements (140A1) durch das erste Ansteuersignal basierend auf den ersten Daten, so dass eine Stärke der Vibration je nach einer Bewegungsgeschwindigkeit der ersten Eingabeoperation, die in dem ersten Bereich erkannt wird, variiert, und Bewirken, dass der Schallausgeber (103) die erste Sprachführung ausgibt, und
Ansteuern als Reaktion auf eine zweite Eingabeoperation von der Vielzahl an Eingabeoperationen, die in dem zweiten Bereich von dem Positionsdetektor (150) erkannt wird, des zweiten Vibrationselements (140A2) durch das zweite Ansteuersignal basierend auf den zweiten Daten, so dass eine Stärke der Vibration je nach einer Bewegungsgeschwindigkeit der zweiten Eingabeoperation, die in dem zweiten Bereich erkannt wird, variiert, und Bewirken, dass der Schallausgeber (103) die zweite Sprachführung ausgibt, wobei
das Ansteuern bewirkt, dass eine dynamische Reibungskraft, die auf eine Fingerspitze eines Benutzers wirkt, der die erste oder die zweite Eingabeoperation durchführt, verringert wird, um die Fingerspitze des Benutzers in einer Richtung zu führen, wo eine einer Vielzahl an Tasten (161A-164A) liegt, und bewirkt, dass der Schallausgeber (103) eine Sprachführung ausgibt, die Richtungsinformationen umfasst, um die Fingerspitze des Benutzers in der Richtung zu führen, wo die eine der Vielzahl an Tasten (161A-164A) liegt.

## Revendications

**1.** Dispositif électronique (100) comprenant :

un panneau supérieur (120) incluant une surface d'opération ;
un détecteur de position (150) configuré de manière à détecter une position d'une opération d'entrée mise en œuvre sur la surface d'opération ;
un premier élément de vibration (140A1) placé dans une première zone parmi une pluralité de zones partitionnant la surface d'opération, et configuré de manière à générer une vibration de manière sélective au sein de la première zone, en réponse au fait d'être piloté par un premier signal d'attaque, la vibration générée étant une vibration naturelle dans une plage ultrasonore, dans lequel la vibration générée vibre à une fréquence de résonance d'un système de résonance incluant le panneau supérieur ;
un second élément de vibration (140A2) placé dans une deuxième zone parmi la pluralité de zones, et configuré de manière à générer une vibration de manière sélective au sein de la deuxième zone, en réponse au fait d'être piloté par un second signal d'attaque, la vibration générée étant une vibration naturelle dans la plage ultrasonore, dans lequel la vibration générée vibre à la fréquence de résonance du système de résonance incluant le panneau supérieur ;
un module de sortie sonore (103) ;
un magasin de stockage (250) configuré de manière à stocker des premières données dans lesquelles des coordonnées de la première zone, le premier élément de vibration (140A1), le premier signal d'attaque, et un premier guidage vocal affecté à la première zone, sont associés les uns aux autres, et des deuxièmes données dans lesquelles des coordonnées de la deuxième zone, le second élément de vibration (140A2), le second signal d'attaque, et un deuxième guidage vocal affecté à la deuxième zone, sont associés les uns aux autres ; et
un contrôleur (240) configuré de manière à :

en réponse à la détection d'une première opération d'entrée, parmi une pluralité d'opérations d'entrée, au sein de la première zone, par le détecteur de position (150), piloter le premier élément de vibration (140A1) par le biais du premier signal d'attaque sur la base des premières données, de sorte qu'une intensité de la vibration varie en fonction d'une vitesse de déplacement de la première opération d'entrée détectée au sein de la première zone, et amener le module de sortie sonore (103) à fournir en sortie le premier guidage vocal ; et
en réponse à la détection d'une seconde opération d'entrée, parmi la pluralité d'opérations d'entrée, au sein de la deuxième zone, par le détecteur de position (150), piloter le second élément de vibration (140A2) par le biais du second signal d'attaque, sur la base des deuxièmes données, de sorte qu'une intensité de la vibration varie en fonction d'une vitesse de déplacement de la seconde opération d'entrée détectée au sein de la deuxième zone, et amener le module de sortie sonore (103) à fournir en sortie le deuxième guidage vocal, dans lequel

le contrôleur (240) est configuré de manière à piloter les premier et second éléments de vibration (140A1, 140A2), de sorte qu'une force de friction dynamique agissant sur le bout d'un doigt d'un utilisateur mettant en œuvre la première opération d'entrée ou la seconde opération d'entrée est réduite de manière à guider le bout du doigt de l'utilisateur dans une direction où un bouton d'une pluralité de boutons (161A-164A) est situé, et à amener le module de sortie sonore (103) à fournir en sortie un guidage vocal comprenant des informations directionnelles pour guider le bout du doigt de l'utilisateur dans la direction où ledit un bouton de la pluralité de boutons (161A-164A) est situé.

**2.** Dispositif électronique (100) selon la revendication 1, dans lequel le magasin de stockage (250) est en outre configurée de manière à stocker des troisièmes données comprenant :

des coordonnées de la pluralité de boutons (161A-164A) situés dans la première zone et dans la deuxième zone ;
une pluralité de troisièmes guidages vocaux dont chacun est affecté à un bouton correspondant de la pluralité de boutons (161A-164A).

**3.** Dispositif électronique (100) selon la revendication 2, dans lequel les troisièmes données stockées dans le magasin de stockage (250) comprennent en outre :

des coordonnées de quatrièmes zones (161B-164B) dont chacune est placée autour d'un bouton correspondant parmi la pluralité de boutons (161A-164A) ; et
une pluralité de quatrièmes guidages vocaux dont chacun est affecté à une zone correspondante parmi les quatrièmes zones ; et
dans lequel, en réponse à l'une des opérations d'entrée détectées par le détecteur de position (150) dans l'une des quatrièmes zones, sur la base des troisièmes données, le contrôleur (240) pilote le premier élément de vibration (140A1) et le second élément de vibration (140A2), et amène le module de sortie sonore (103) à fournir en sortie un quatrième guidage vocal associé à l'une des quatrièmes zones.

**4.** Dispositif électronique (100) selon la revendication 3, dans lequel une amplitude associée à la pluralité de boutons (161A-164A) est inférieure à une amplitude associée aux quatrièmes zones (161B-164B).

**5.** Dispositif électronique (100) selon l'une quelconque des revendications 1 à 4, comprenant en outre :
un écran d'affichage (160).

**6.** Procédé de pilotage d'un dispositif électronique (100) qui inclut :

un panneau supérieur (120) incluant une surface d'opération ;
un détecteur de position (150) configuré de manière à détecter une position d'une opération d'entrée mise en œuvre sur la surface d'opération ;
un premier élément de vibration (140A1) placé dans une première zone parmi une pluralité de zones partitionnant la surface d'opération, et configuré de manière à générer une vibration de manière sélective au sein de la première zone, en réponse au fait d'être piloté par un premier signal d'attaque, la vibration générée étant une vibration naturelle dans une plage ultrasonore, dans lequel la vibration générée vibre à une fréquence de résonance d'un système de résonance incluant le panneau supérieur ;
un second élément de vibration (140A2) placé dans une deuxième zone parmi la pluralité de zones, et configuré de manière à générer une vibration de manière sélective au sein de la deuxième zone, en réponse au fait d'être piloté par un second signal d'attaque, la vibration générée étant une vibration naturelle dans la plage ultrasonore, dans lequel la vibration générée vibre à la fréquence de résonance du système de résonance incluant le panneau supérieur ;
un module de sortie sonore (103) ;
un magasin de stockage (250) configuré de manière à stocker des premières données dans lesquelles des coordonnées de la première zone, le premier élément de vibration (140A1), le premier signal d'attaque, et un premier guidage vocal affecté à la première zone, sont associés les uns aux autres, et des deuxièmes données dans lesquelles des coordonnées de la deuxième zone, le second élément de vibration (140A2), le second signal d'attaque, et un deuxième guidage vocal affecté à la deuxième zone, sont associés les uns aux autres ; et
dans lequel le procédé comprend les étapes ci-dessous consistant à :

piloter, en réponse à la détection d'une première opération d'entrée, parmi une pluralité d'opérations d'entrée, au sein de la première zone, par le détecteur de position (150), le premier élément de vibration (140A1) par le biais du premier signal d'attaque sur la base des premières données, de sorte qu'une intensité de la vibration varie en fonction d'une vitesse de déplacement de la première opération d'entrée détectée au sein de la première zone, et amener le module de sortie sonore (103) à fournir en sortie le premier guidage vocal ; et
piloter, en réponse à la détection d'une seconde opération d'entrée, parmi la pluralité d'opérations d'entrée, au sein de la deuxième zone, par le détecteur de position (150), le second élément de vibration (140A2) par le biais du second signal d'attaque, sur la base des deuxièmes données, de sorte qu'une intensité de la vibration varie en fonction d'une vitesse de déplacement de la seconde opération d'entrée détectée au sein de la deuxième zone, et amener le module de sortie sonore (103) à fournir en sortie le deuxième guidage vocal, dans lequel le pilotage occasionne la réduction d'une force de friction dynamique agissant sur le bout d'un doigt d'un utilisateur mettant en œuvre la première opération d'entrée ou la seconde opération d'entrée de manière à guider le bout du doigt de l'utilisateur dans une direction où un bouton d'une pluralité de boutons (161A-164A) est situé, et amène le module de sortie sonore (103) à fournir en sortie un guidage vocal comprenant des informations directionnelles pour guider le bout du doigt de l'utilisateur dans la direction où ledit un bouton de la pluralité de boutons (161A-164A) est situé.

FIG.1

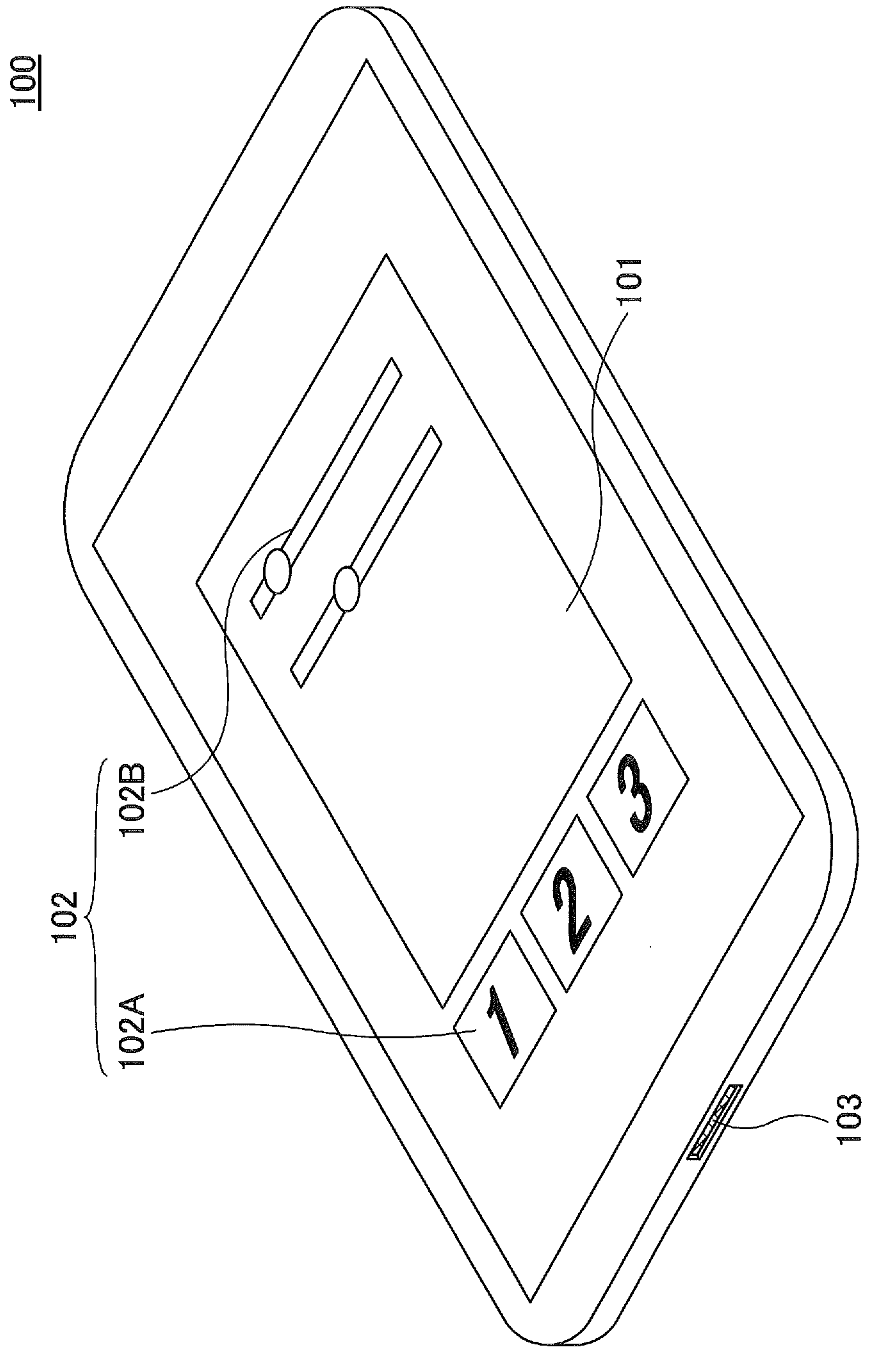

FIG.2

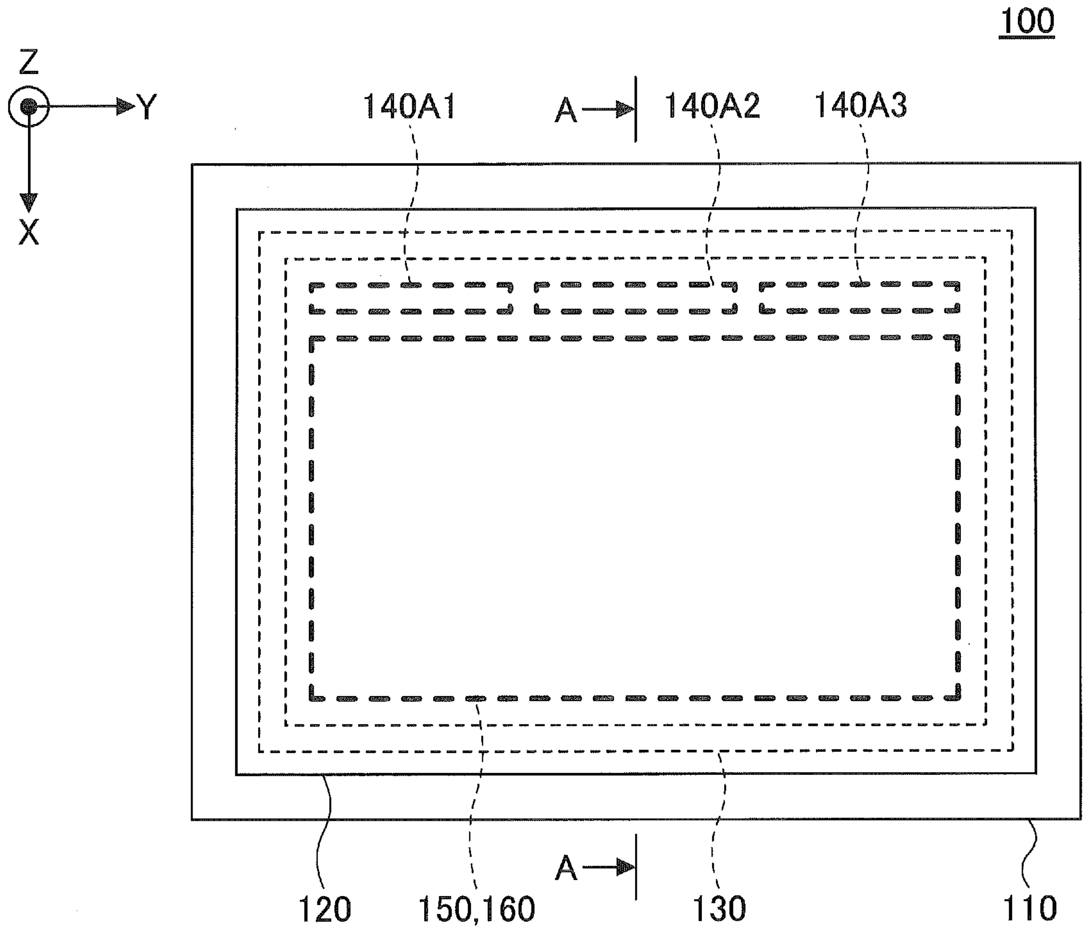

FIG.3

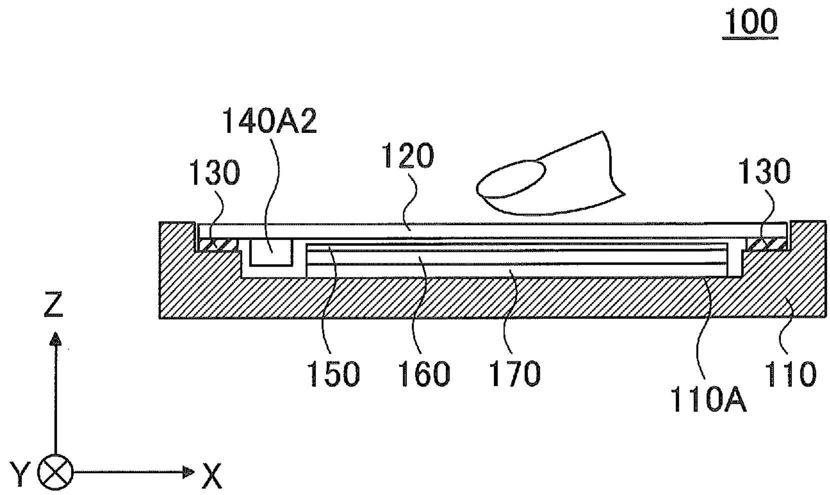

FIG.4

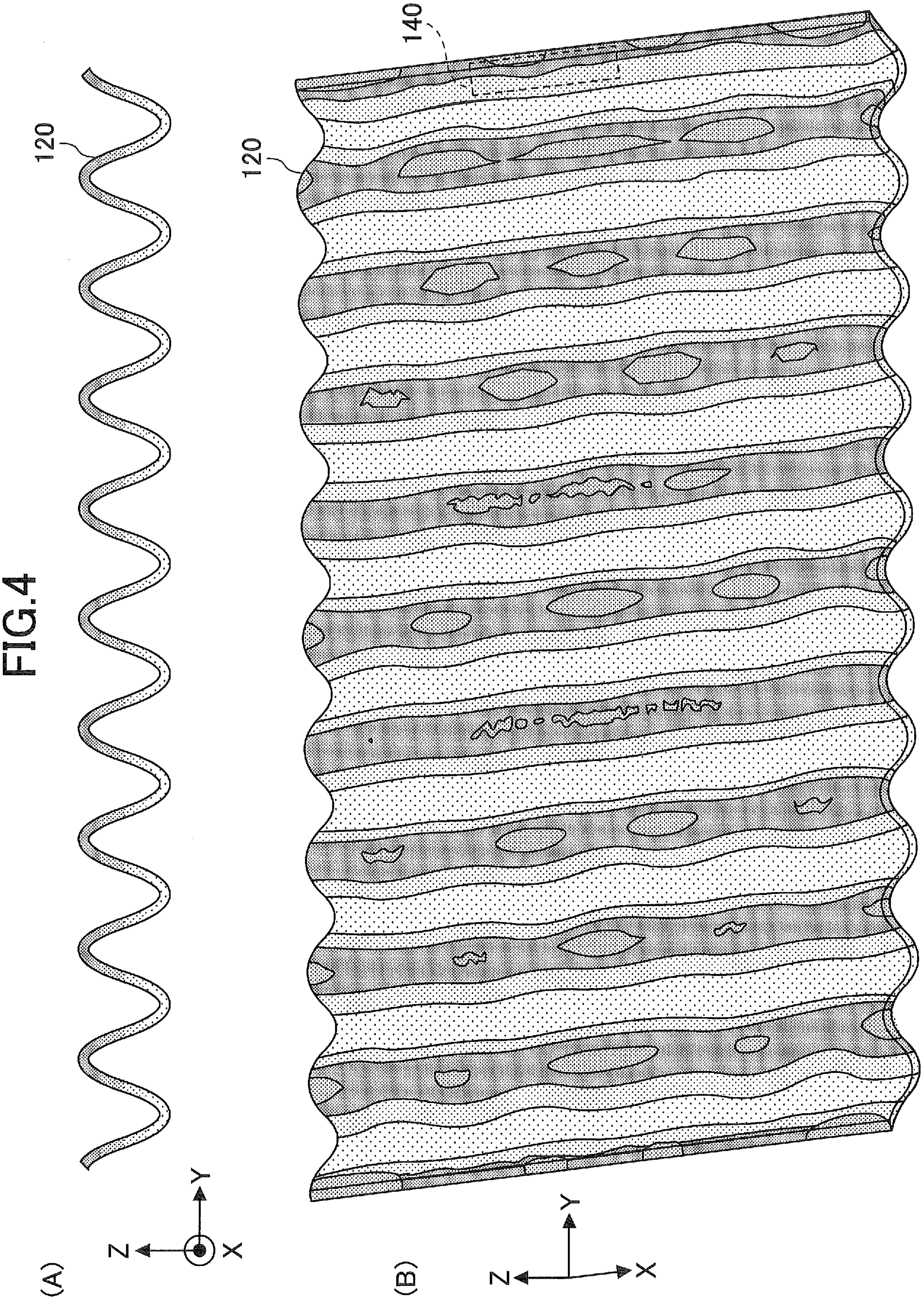

FIG.5

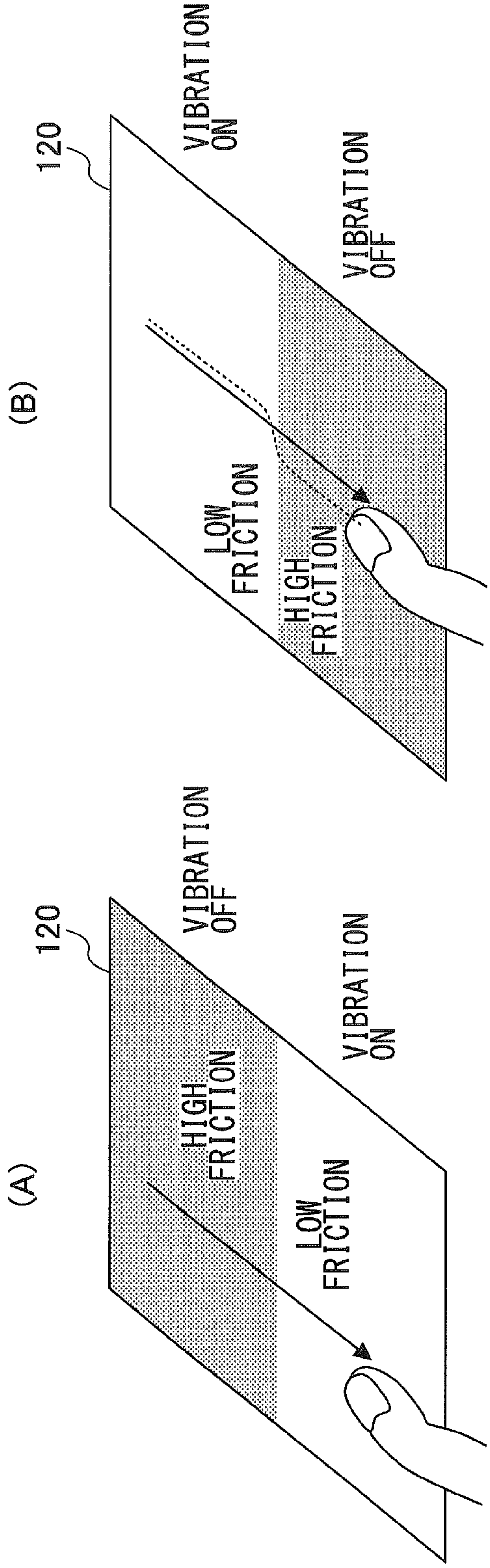
(A)
120
HIGH FRICTION
LOW FRICTION
VIBRATION OFF
VIBRATION ON
(B)
120
LOW FRICTION
HIGH FRICTION
VIBRATION ON
VIBRATION OFF

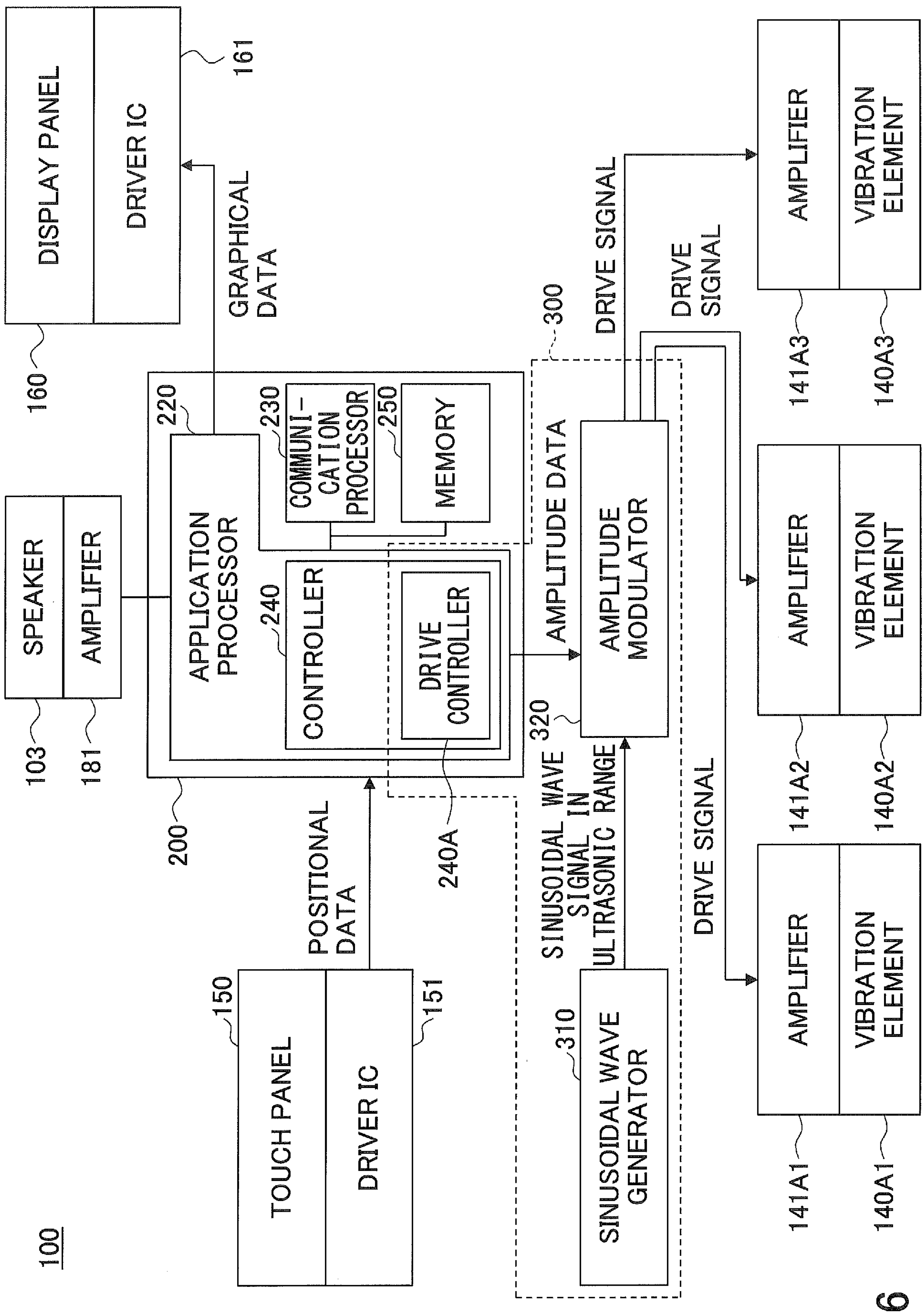
100
DISPLAY PANEL
DRIVER IC
160
161
GRAPHICAL DATA
SPEAKER
AMPLIFIER
103
181
APPLICATION PROCESSOR
220
COMMUNI- CATION PROCESSOR
230
MEMORY
250
CONTROLLER
240
DRIVE CONTROLLER
240A
200
300
AMPLITUDE DATA
AMPLITUDE MODULATOR
320
SINUSOIDAL WAVE SIGNAL IN ULTRASONIC RANGE
SINUSOIDAL WAVE GENERATOR
310
POSITIONAL DATA
TOUCH PANEL
DRIVER IC
150
151
DRIVE SIGNAL
DRIVE SIGNAL
DRIVE SIGNAL
AMPLIFIER
VIBRATION ELEMENT
141A3
140A3
AMPLIFIER
VIBRATION ELEMENT
141A2
140A2
AMPLIFIER
VIBRATION ELEMENT
141A1
140A1

FIG.6

FIG.7

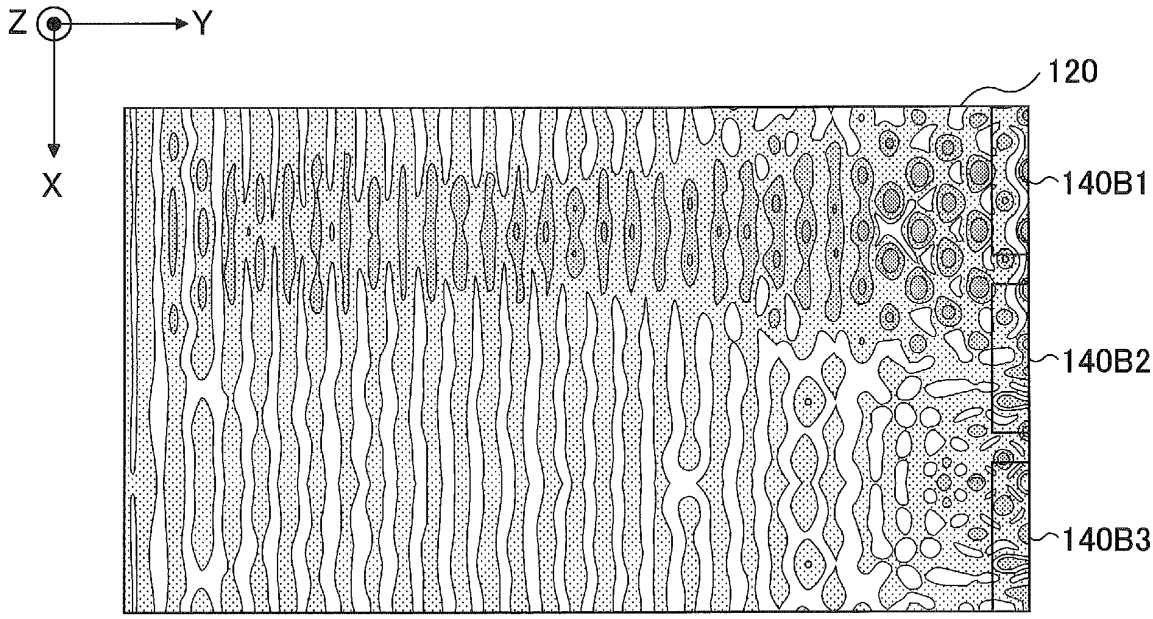


FIG.8

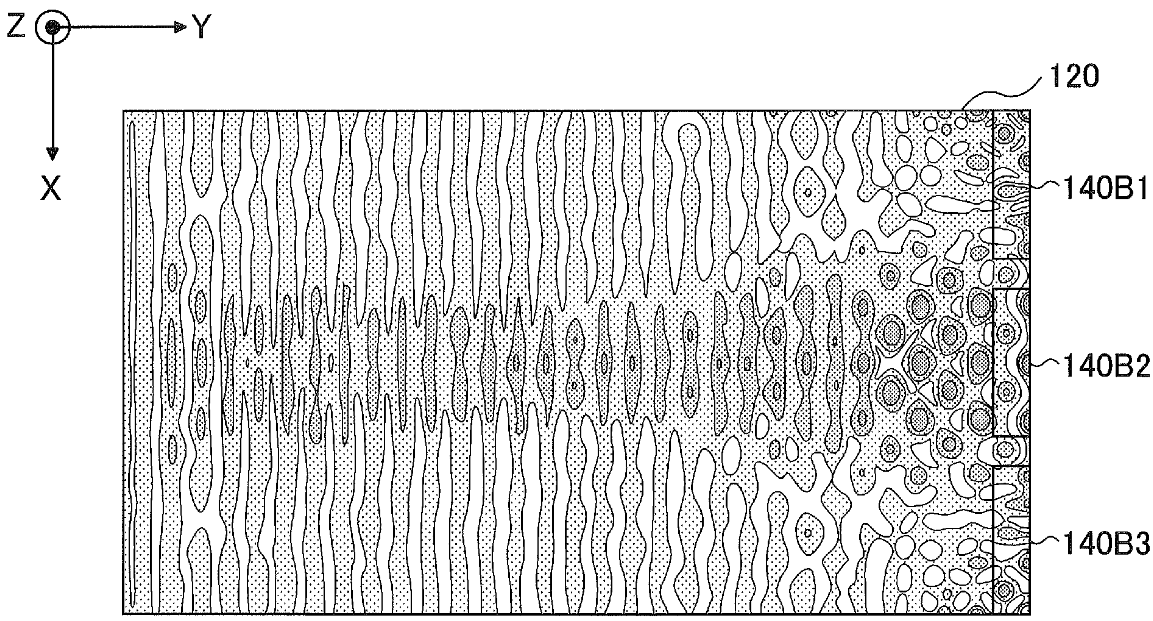

FIG.9

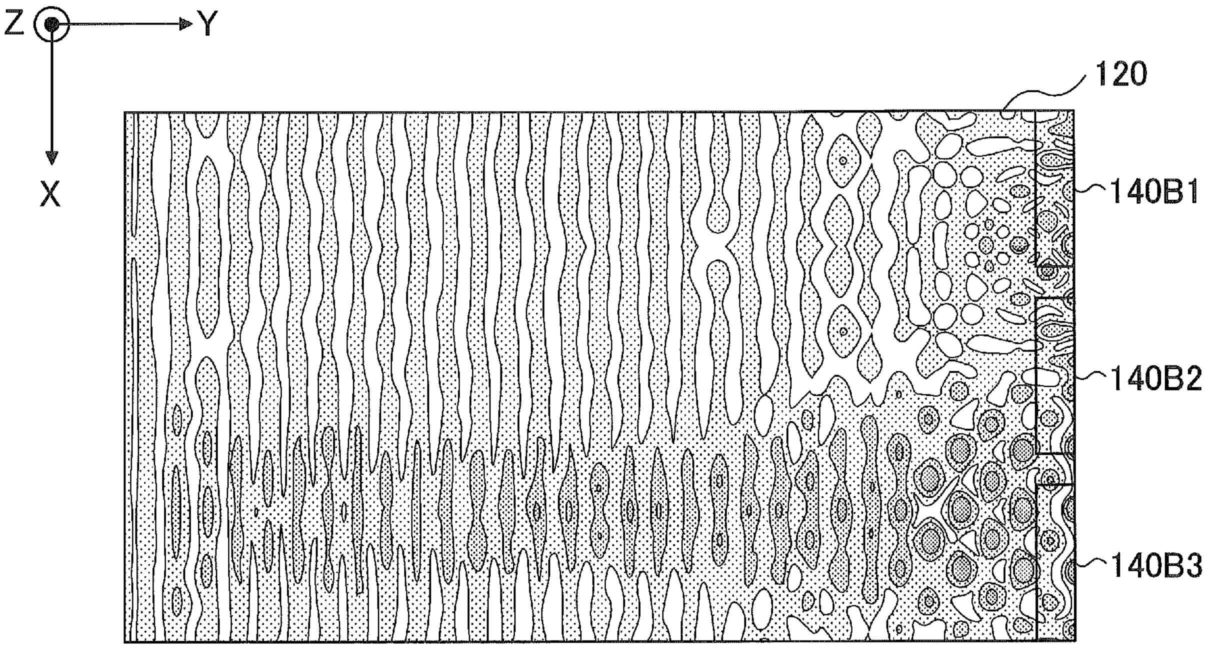

FIG.10

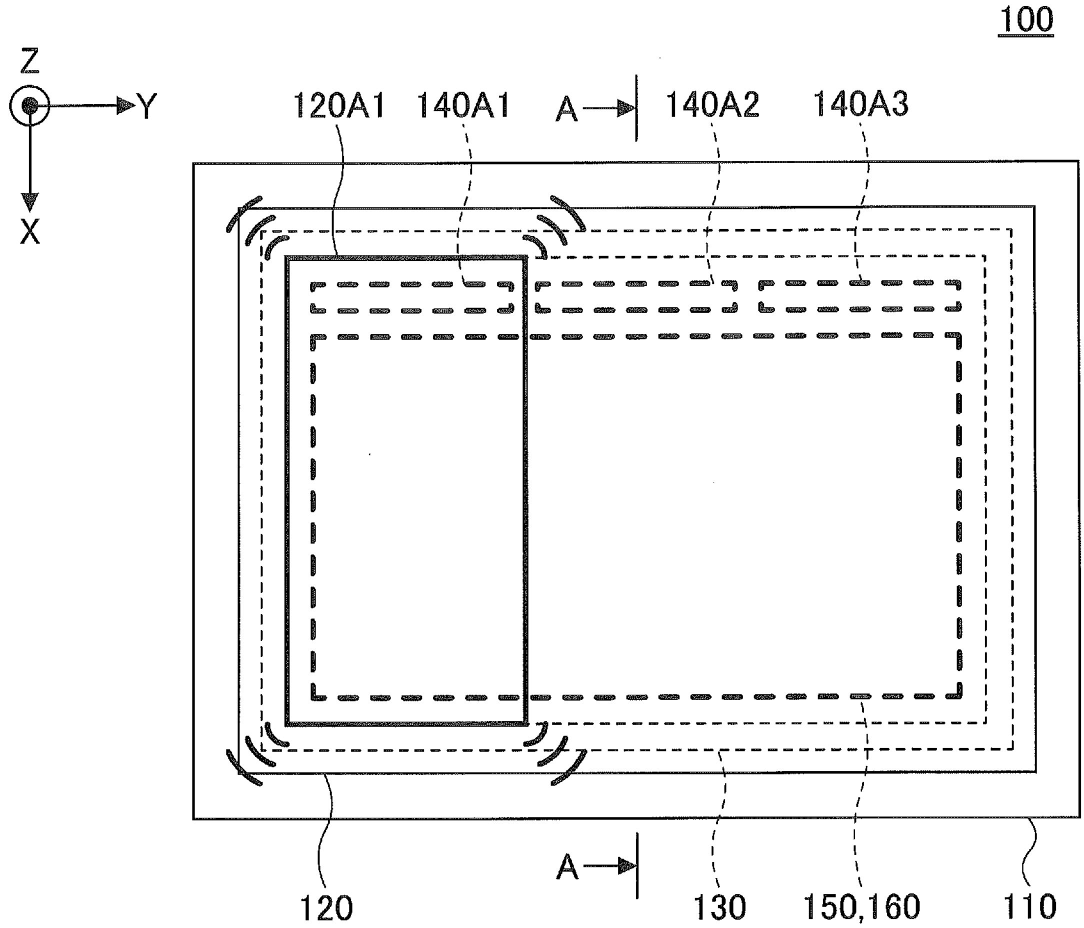

FIG.11

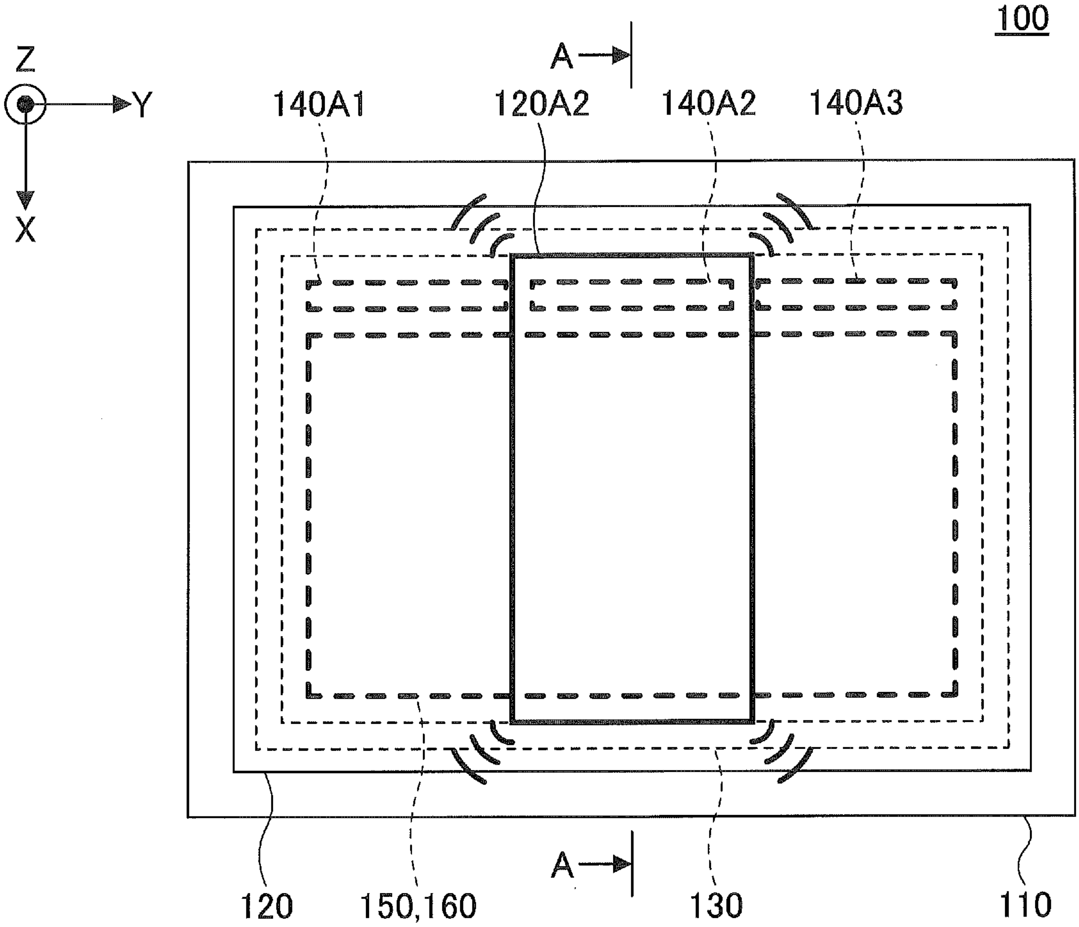

FIG.12

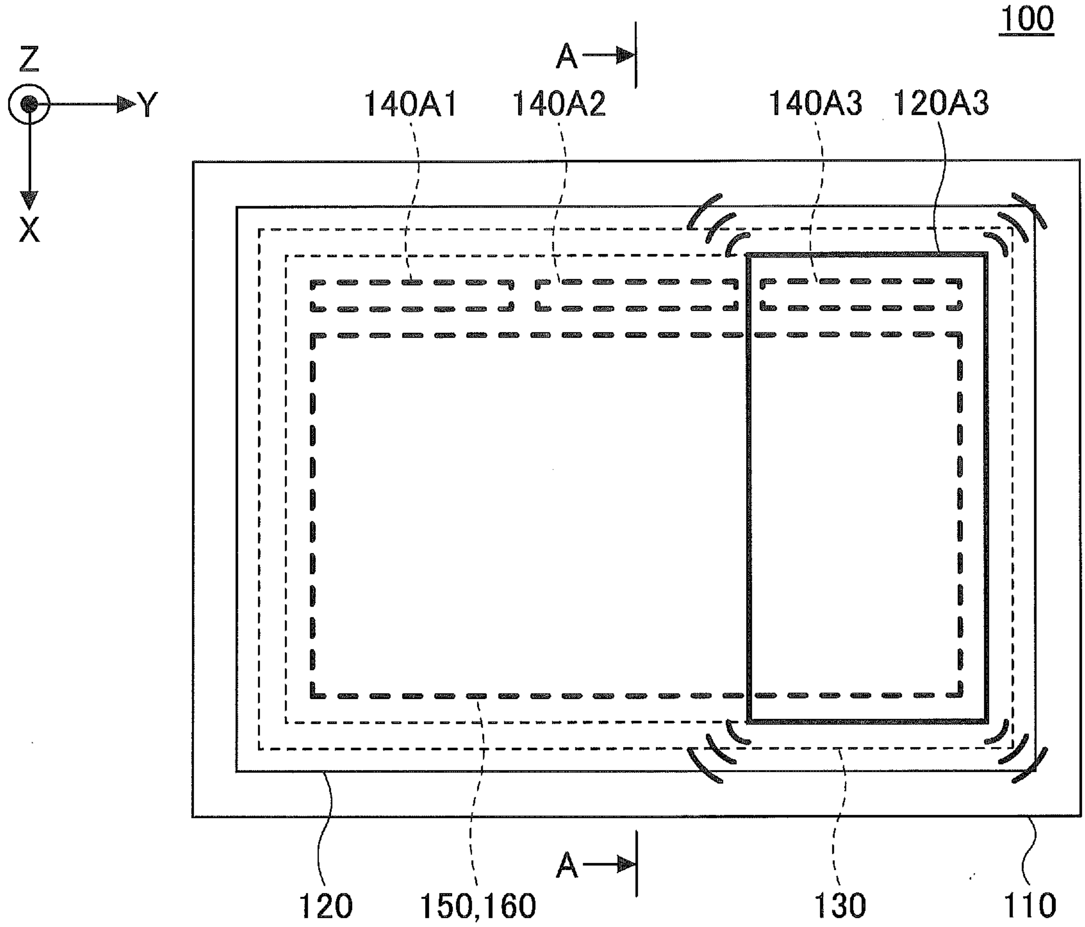

FIG.13

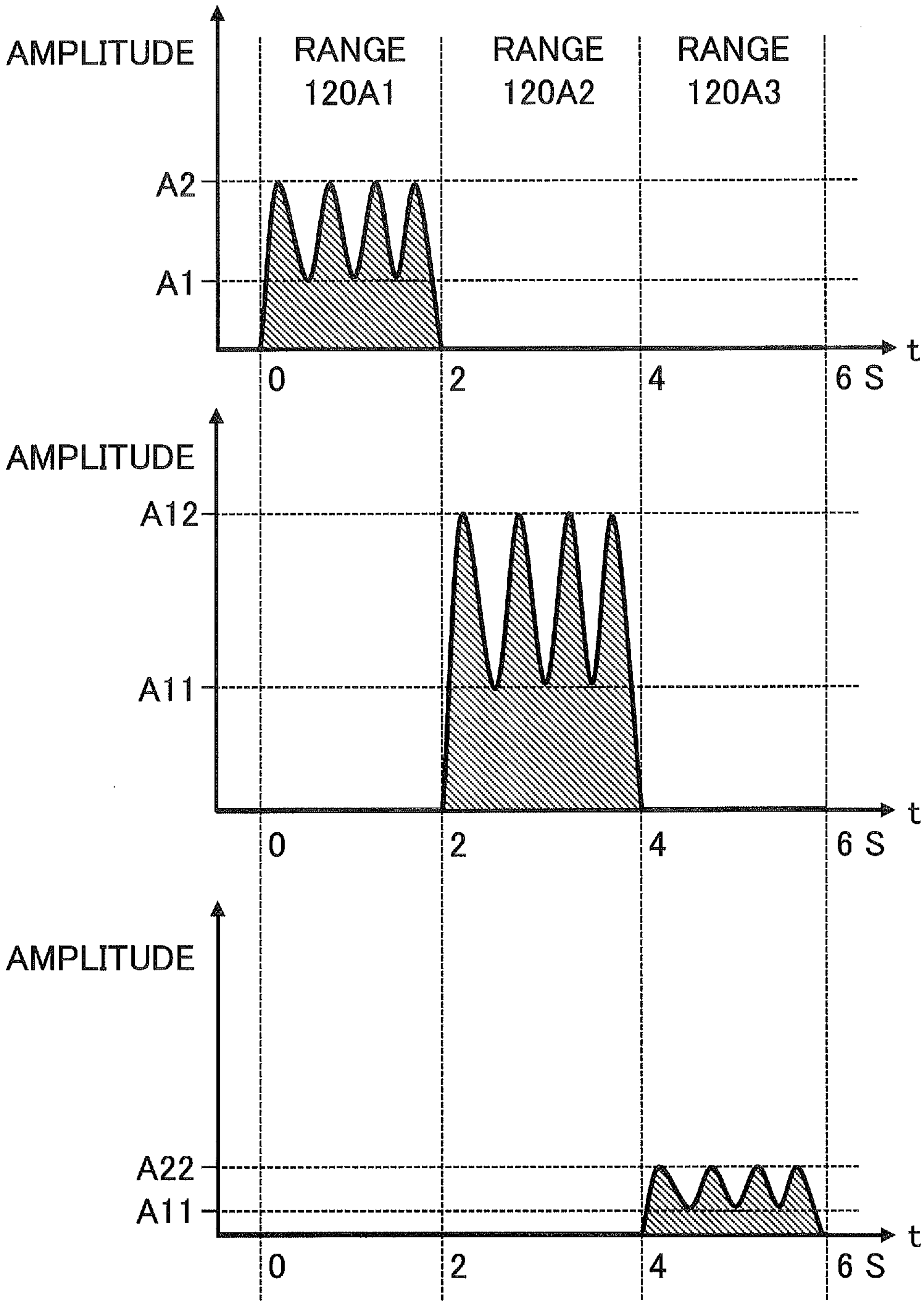
AMPLITUDE
RANGE 120A1
RANGE 120A2
RANGE 120A3
A2
A1
t
0
2
4
6 S
AMPLITUDE
A12
A11
t
0
2
4
6 S
AMPLITUDE
A22
A11
t
0
2
4
6 S

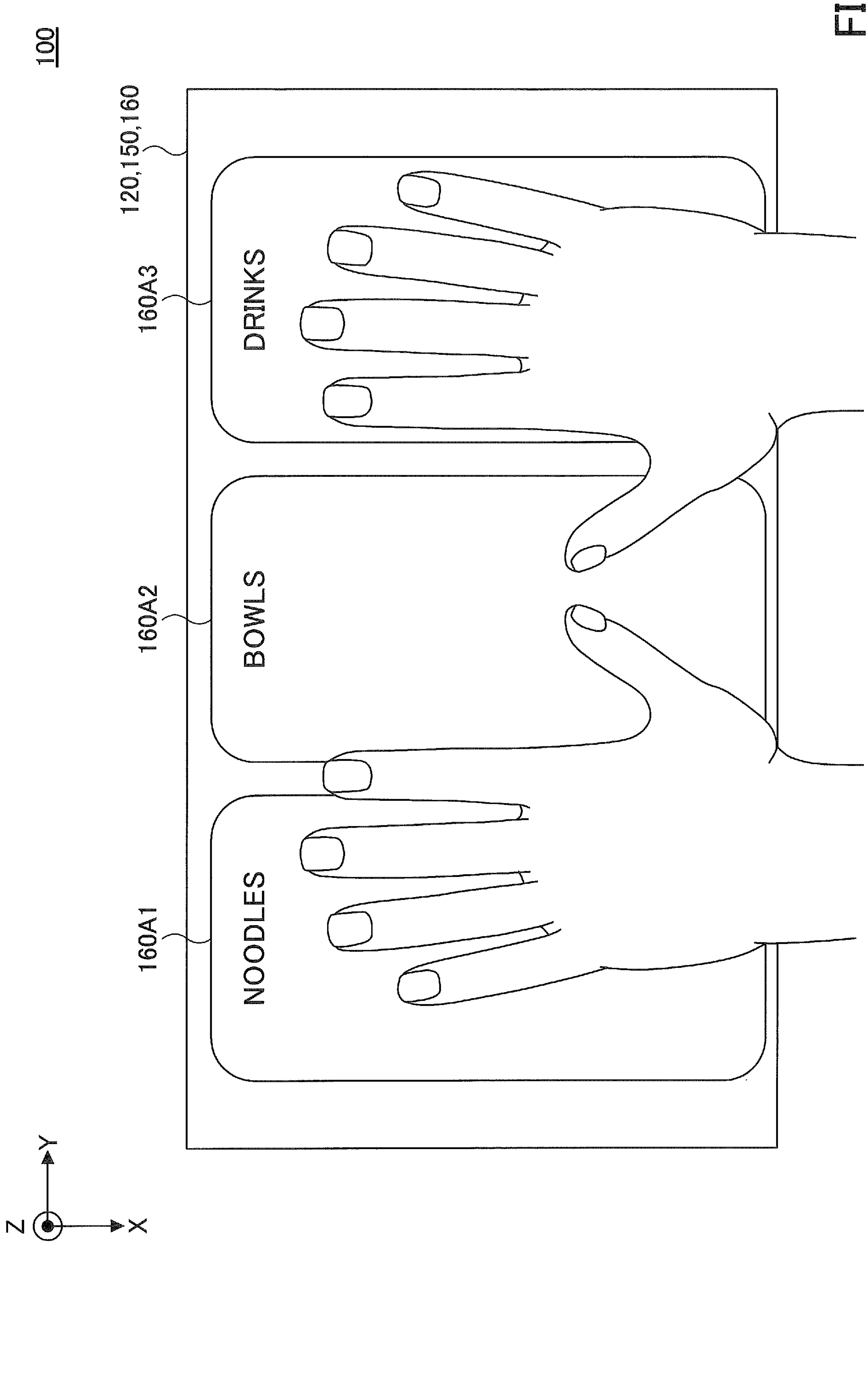


FIG.14

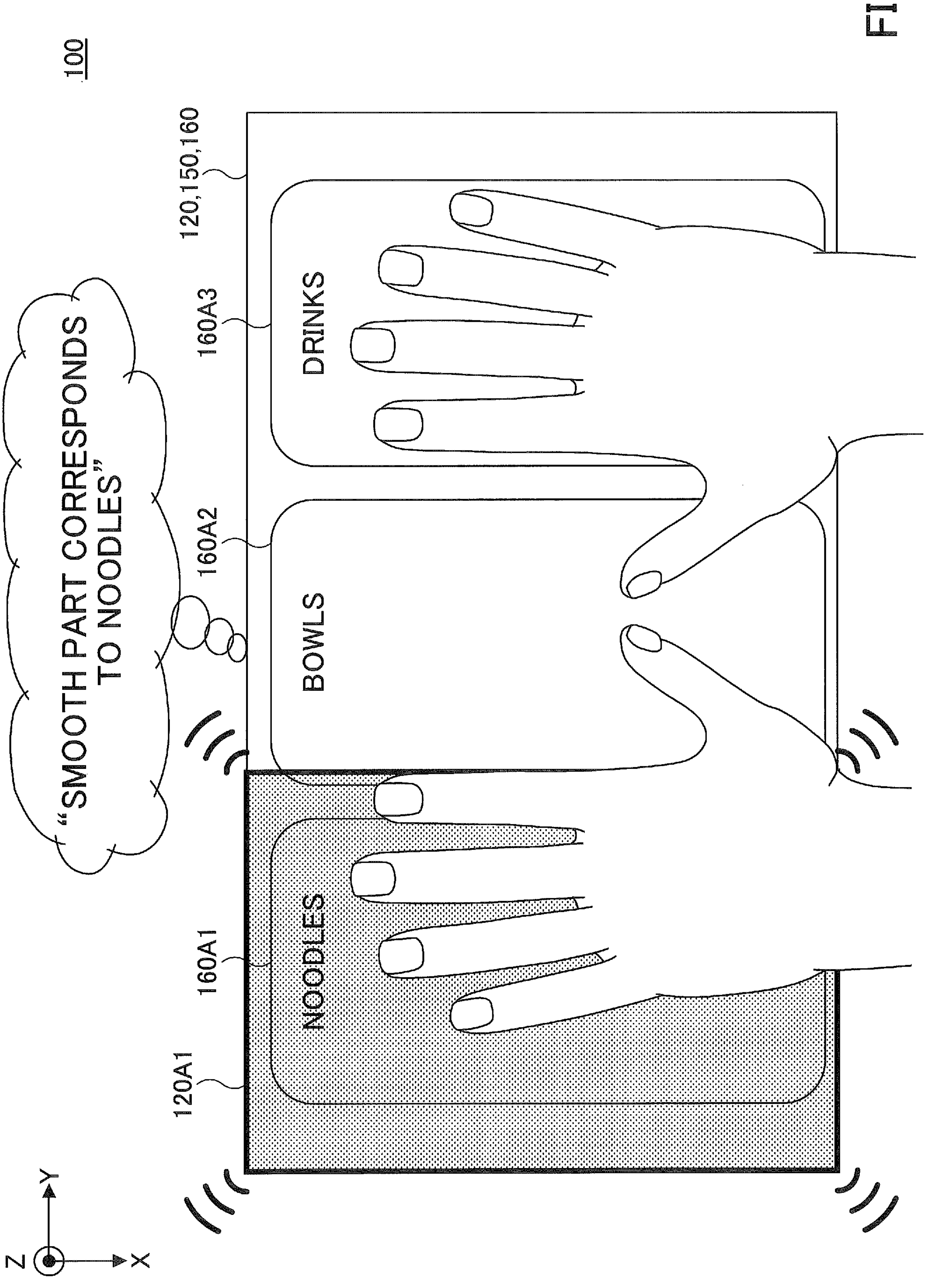
100
"SMOOTH PART CORRESPONDS TO NOODLES"
120,150,160
160A3
160A2
160A1
120A1
DRINKS
BOWLS
NOODLES
Z
Y
X

FIG.15

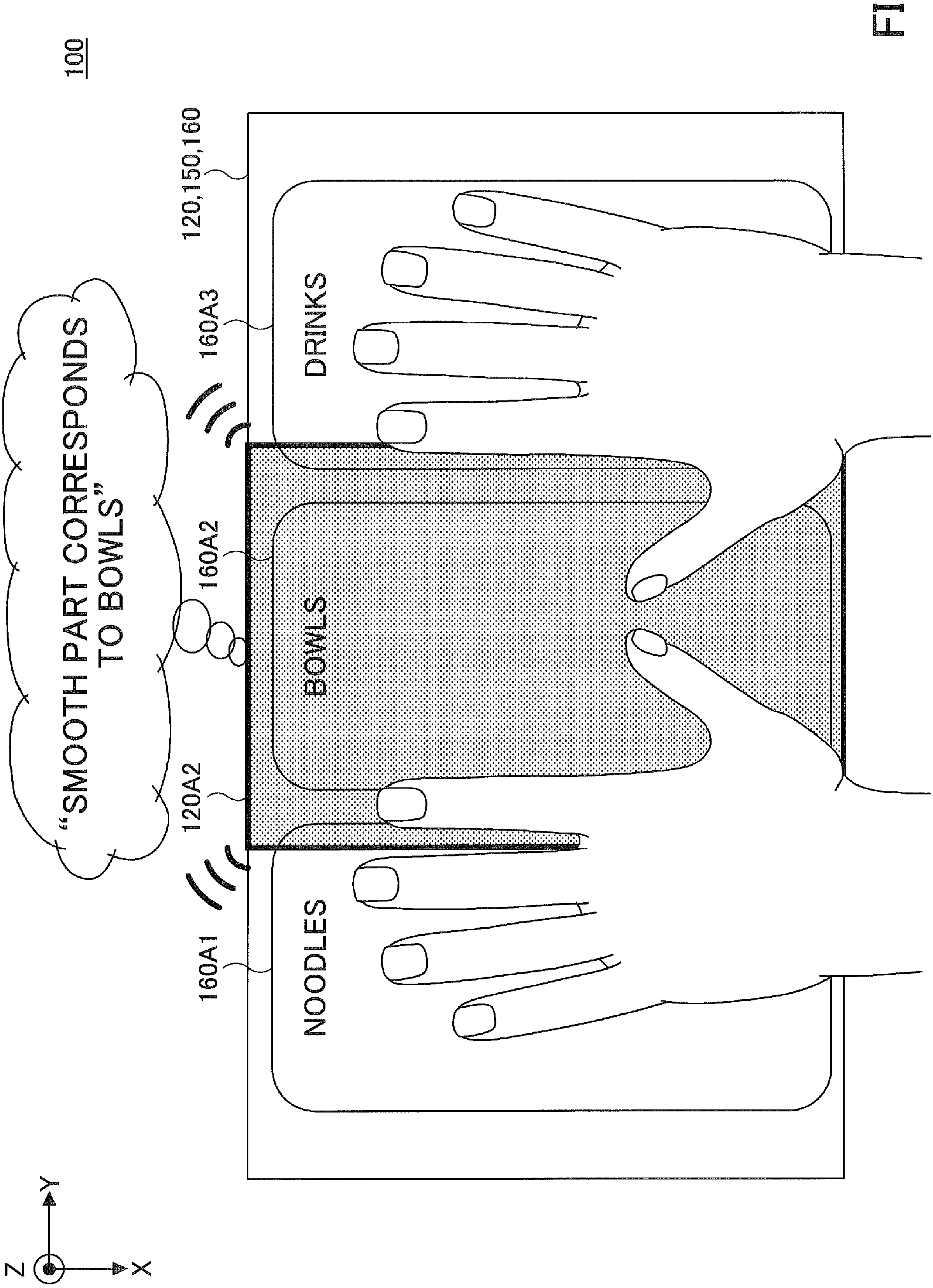

100
"SMOOTH PART CORRESPONDS TO BOWLS"
120,150,160
160A3
160A2
120A2
160A1
DRINKS
BOWLS
NOODLES
Z
Y
X


FIG.16

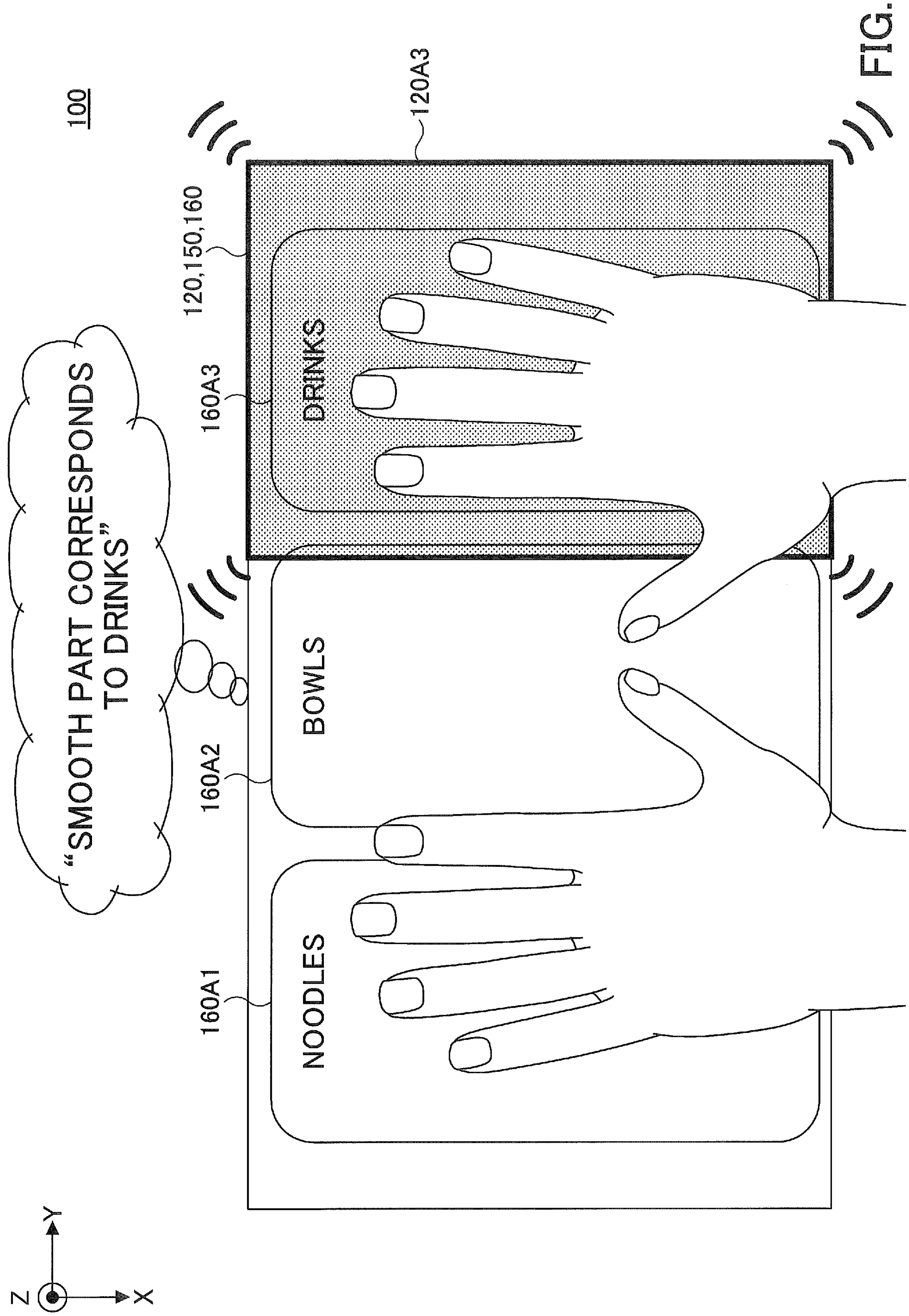
100
120A3
120,150,160
160A3
160A2
160A1
DRINKS
BOWLS
NOODLES
"SMOOTH PART CORRESPONDS TO DRINKS"
Y
Z
X

FIG.17

FIG.18

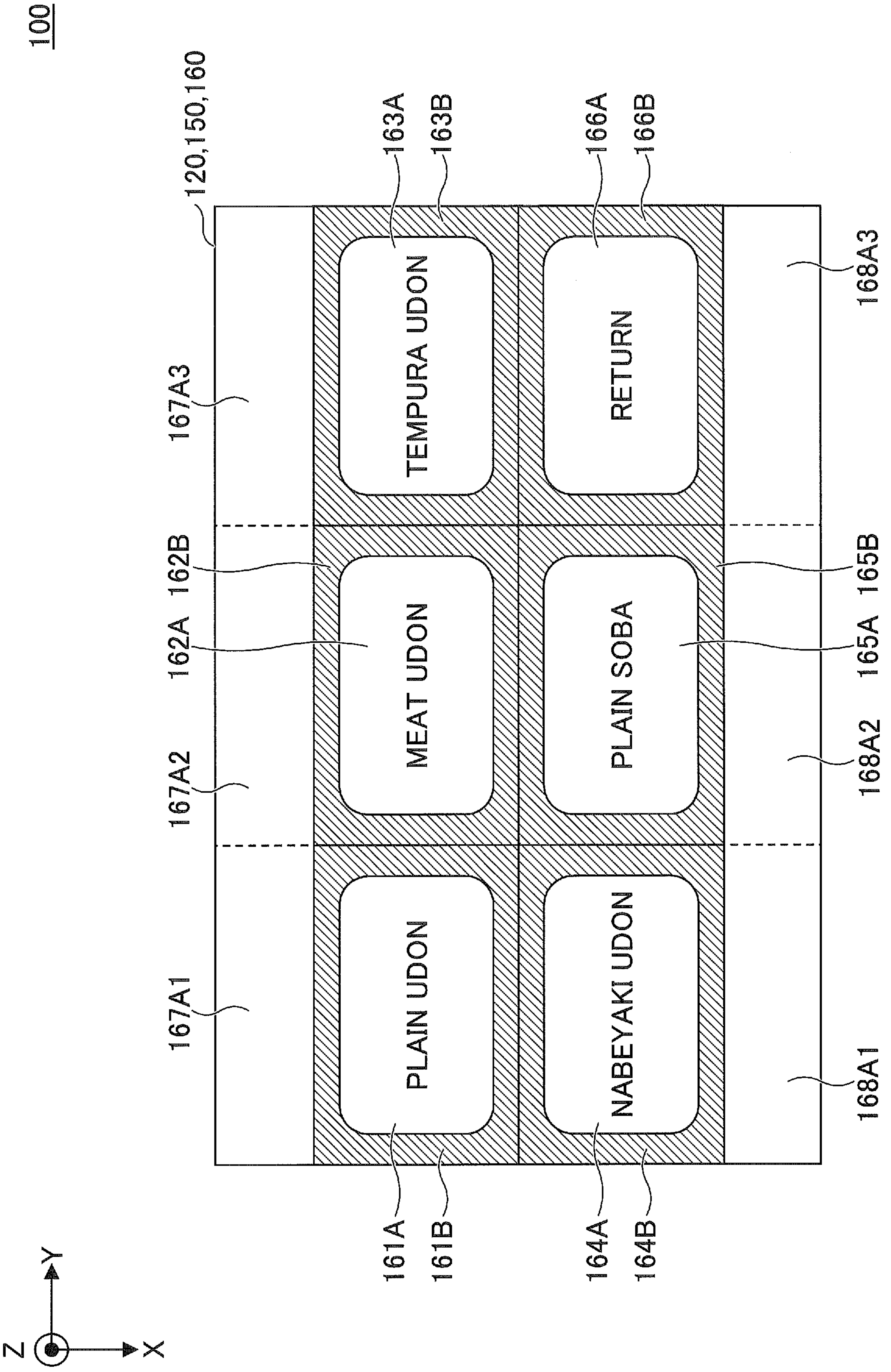
100
120,150,160
163A
163B
166A
166B
167A3
168A3
TEMPURA UDON
RETURN
162B
162A
167A2
MEAT UDON
PLAIN SOBA
165B
165A
168A2
167A1
PLAIN UDON
NABEYAKI UDON
168A1
161A
161B
164A
164B
Y
Z
X

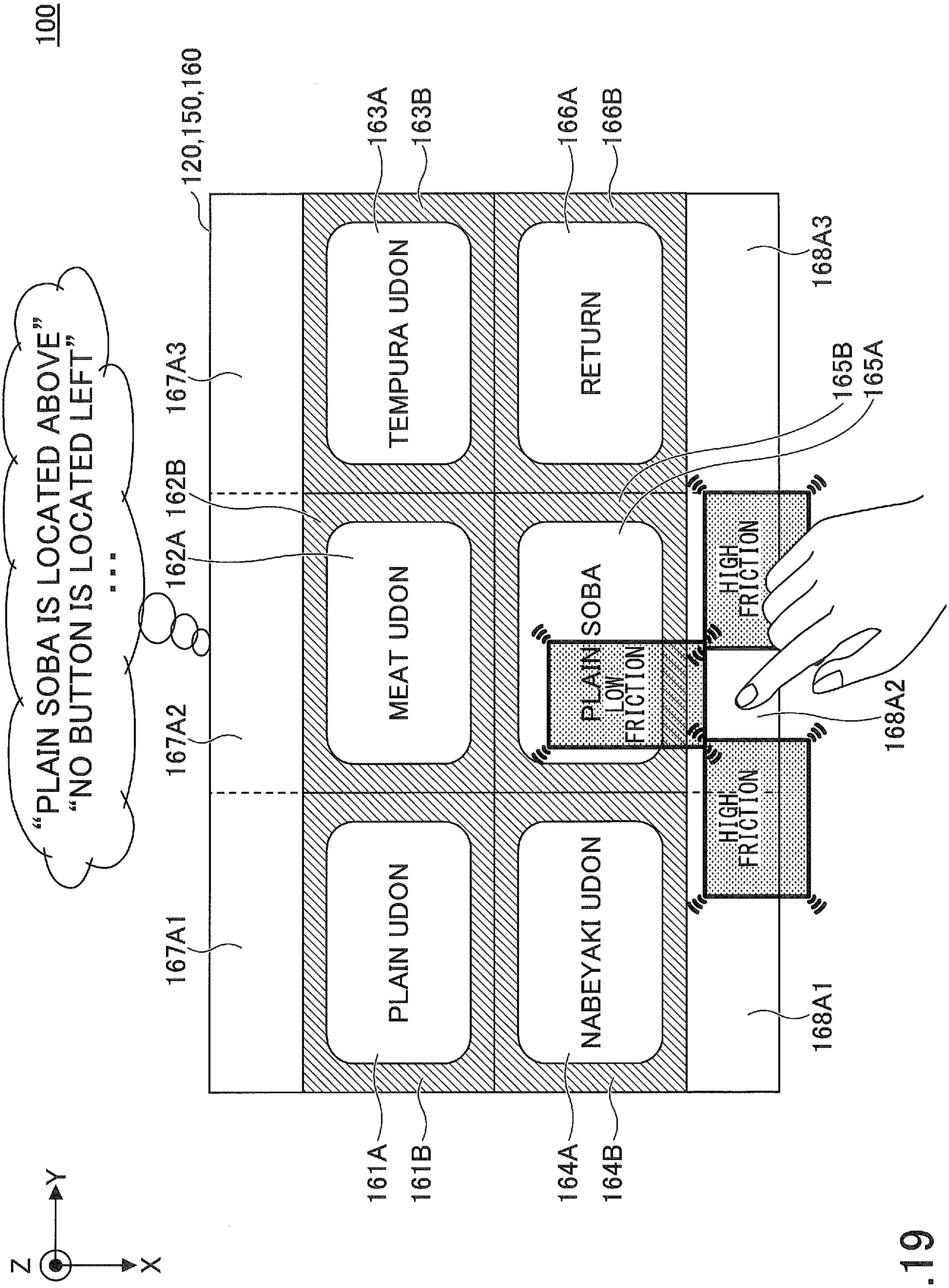
100
120,150,160
"PLAIN SOBA IS LOCATED ABOVE"
"NO BUTTON IS LOCATED LEFT"
...
167A1
167A2
167A3
162A 162B
163A
163B
166A
166B
TEMPURA UDON
MEAT UDON
PLAIN UDON
RETURN
PLAIN SOBA
NABEYAKI UDON
LOW FRICTION
HIGH FRICTION
HIGH FRICTION
165B
165A
168A1
168A2
168A3
161A
161B
164A
164B
Z
Y
X

FIG.19

FIG.20

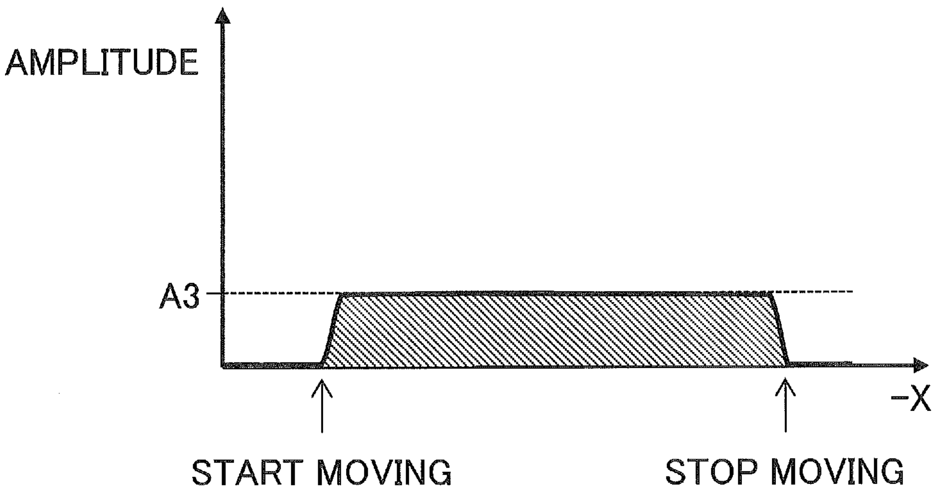
AMPLITUDE
A3
-X
START MOVING
STOP MOVING

FIG.21

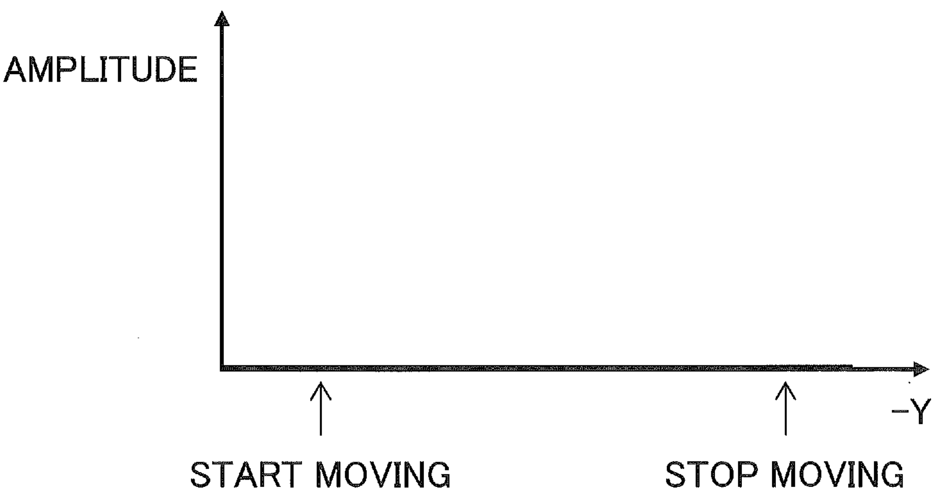
AMPLITUDE
-Y
START MOVING
STOP MOVING

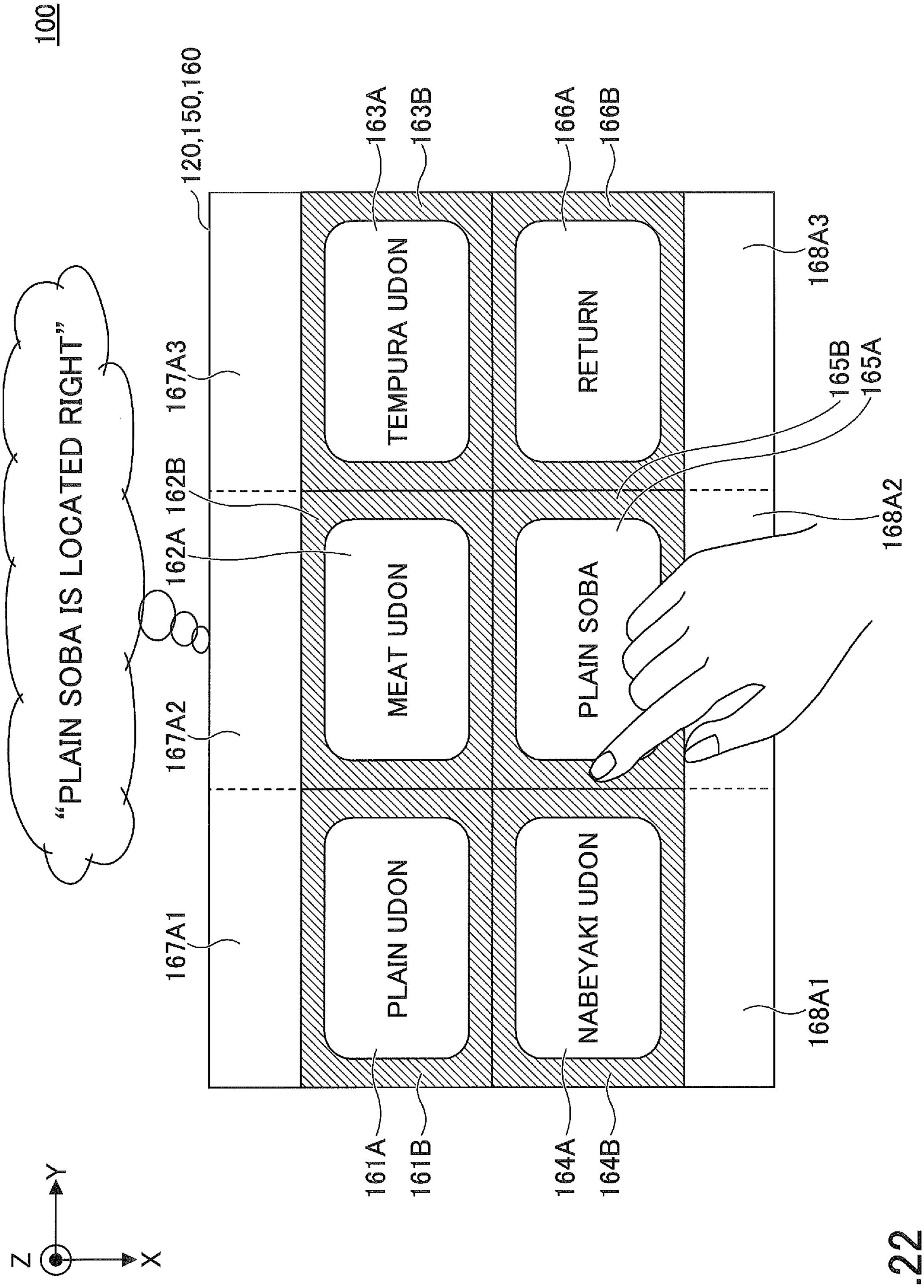
100
120,150,160
"PLAIN SOBA IS LOCATED RIGHT"
167A1
167A2
167A3
162A 162B
163A
163B
166A
166B
165B
165A
168A1
168A2
168A3
161A
161B
164A
164B
PLAIN UDON
MEAT UDON
TEMPURA UDON
NABEYAKI UDON
PLAIN SOBA
RETURN
Z
Y
X

FIG.22

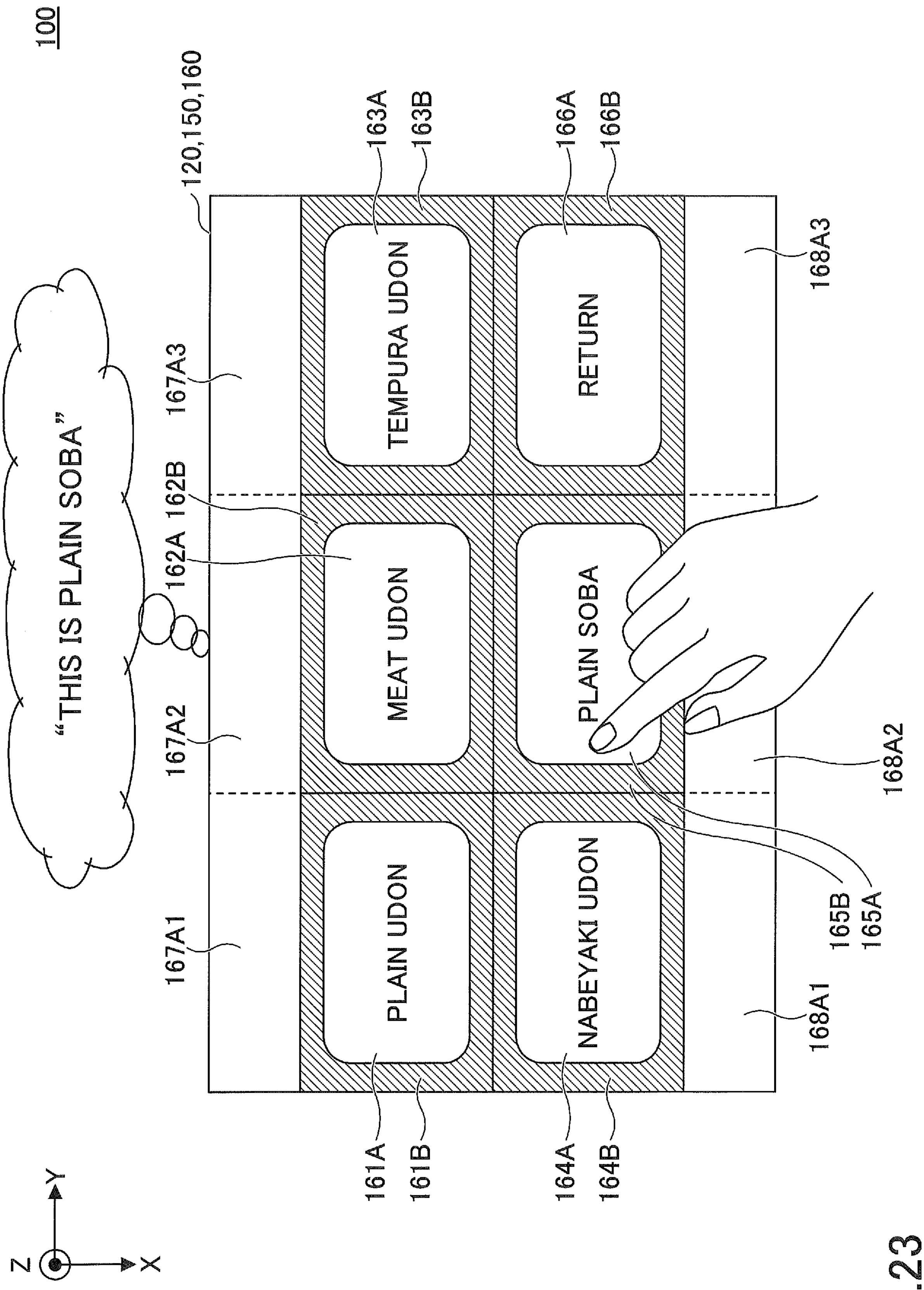
100
120,150,160
"THIS IS PLAIN SOBA"
PLAIN UDON
MEAT UDON
TEMPURA UDON
NABEYAKI UDON
PLAIN SOBA
RETURN
161A
161B
162A
162B
163A
163B
164A
164B
165A
165B
166A
166B
167A1
167A2
167A3
168A1
168A2
168A3
X
Y
Z

FIG.23

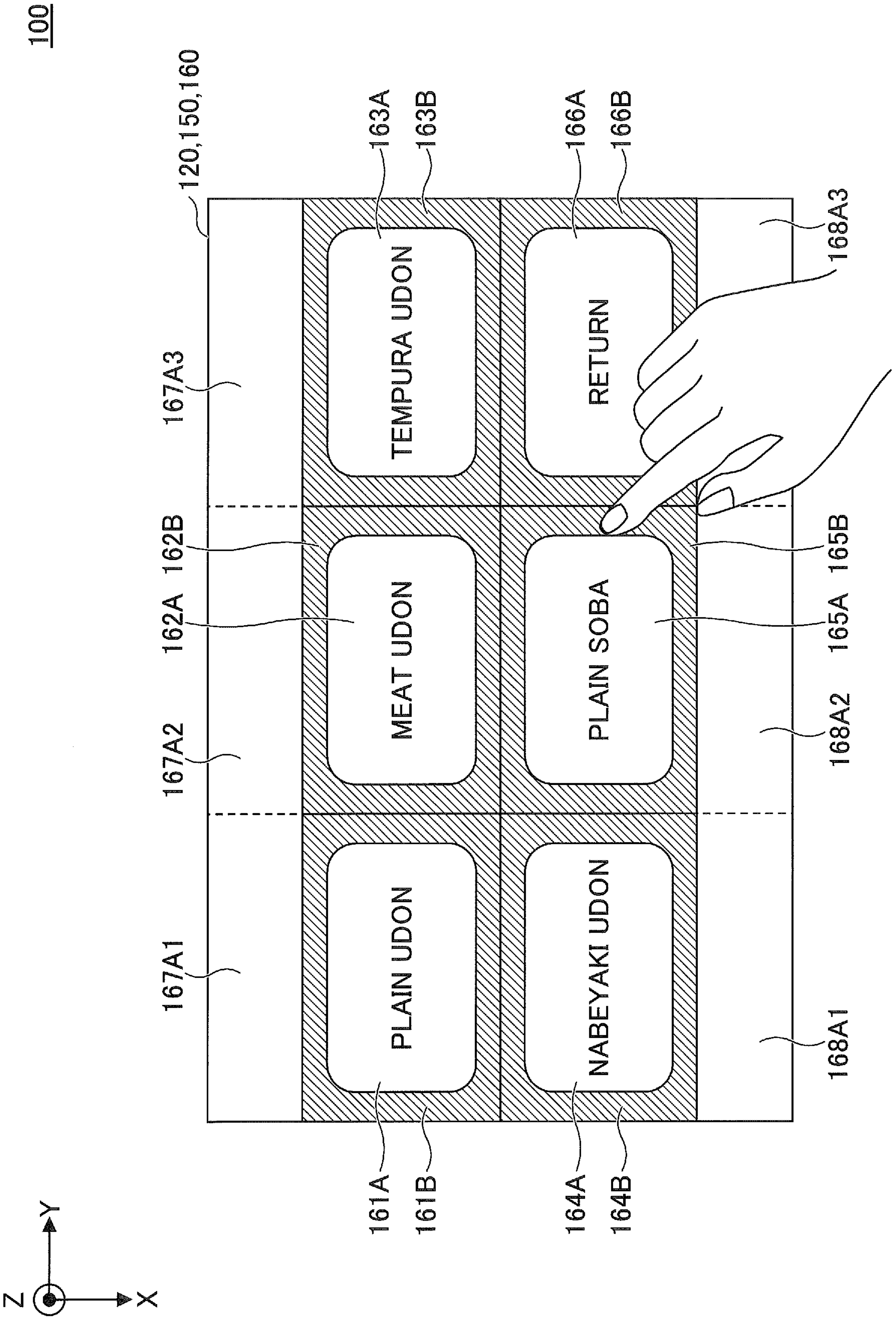
100
120,150,160
167A1
167A2
167A3
162A
162B
161A
161B
163A
163B
PLAIN UDON
MEAT UDON
TEMPURA UDON
NABEYAKI UDON
PLAIN SOBA
RETURN
164A
164B
165A
165B
166A
166B
168A1
168A2
168A3
Z
Y
X

FIG.24

FIG.25

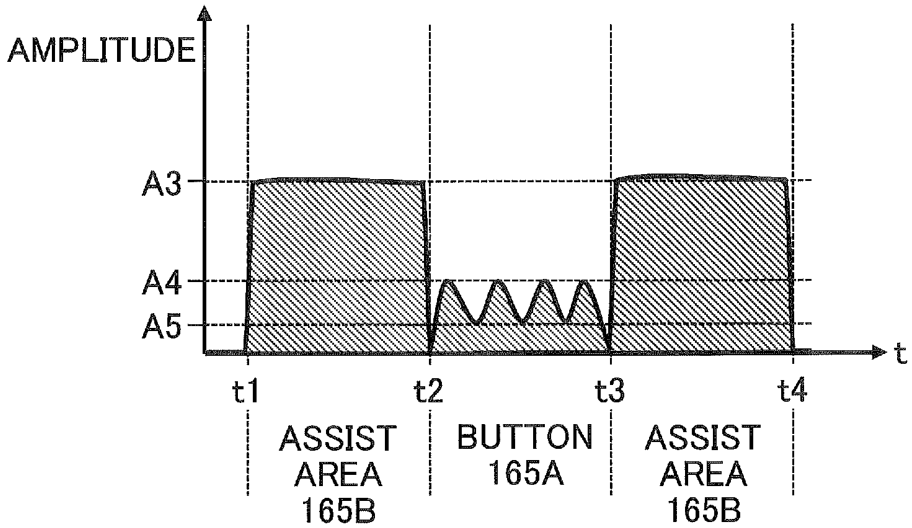


FIG.26

| COORDINATES | VIBRATION ELEMENT ID | DRIVING PATTERN | IMAGE ID | AUDIO DATA |
|---|---|---|---|---|
| f1(X,Y) | 140A1 | P1 | 160A1 | “SMOOTH PART CORRESPONDS TO NOODLES” |
| f2(X,Y) | 140A2 | P1 | 160A2 | “SMOOTH PART CORRESPONDS TO BOWLS” |
| f3(X,Y) | 140A3 | P1 | 160A3 | “SMOOTH PART CORRESPONDS TO DRINKS” |

FIG.27

| COORDINATES | VIBRATION ELEMENT ID | MOVING DIRECTION | DRIVING PATTERN | IMAGE ID | VOICE DATA |
|---|---|---|---|---|---|
| f11(X,Y) | 140A1-A3 | NOT MOVING | P11 | 161A | "SMOOTH PART CORRESPONDS TO NOODLES" |
| f12(X,Y) | 140A1-A3<br>140A1-A3<br>140A1-A3<br>140A1-A3 | APPROACHING 161A FROM THE LEFT<br>APPROACHING 161A FROM THE RIGHT<br>APPROACHING 161A FROM THE BOTTOM<br>APPROACHING 161A FROM THE TOP | P12<br>P12<br>P12<br>P12 | 161B | "PLAIN UDON IS LOCATED RIGHT"<br>"PLAIN UDON IS LOCATED LEFT"<br>"PLAIN UDON IS LOCATED ABOVE"<br>"PLAIN UDON IS LOCATED BELOW" |
| ⋮ | ⋮ | ⋮ | ⋮ | ⋮ | ⋮ |
| f21(X,Y) | 140A1-A3 | NOT MOVING | P21 | 166A | "THIS IS RETURN BUTTON" |
| f22(X,Y) | 140A1-A3<br>140A1-A3<br>140A1-A3<br>140A1-A3 | APPROACHING 166A FROM THE LEFT<br>APPROACHING 166A FROM THE RIGHT<br>APPROACHING 166A FROM THE BOTTOM<br>APPROACHING 166A FROM THE TOP | P22<br>P22<br>P22<br>P22 | 166B | "RETURN BUTTON IS LOCATED RIGHT"<br>"RETURN BUTTON IS LOCATED LEFT"<br>"RETURN BUTTON IS LOCATED ABOVE"<br>"RETURN BUTTON IS LOCATED BELOW" |
| f23(X,Y) | -<br>-<br>140A1-A3 | RIGHT<br>LEFT<br>APPROACHING 161A FROM THE TOP | -<br>-<br>P23 | 167A1 | "NO BUTTON IS LOCATED RIGHT"<br>"NO BUTTON IS LOCATED LEFT"<br>"PLAIN UDON IS LOCATED BELOW" |
| ⋮ | ⋮ | ⋮ | ⋮ | ⋮ | ⋮ |

FIG.28

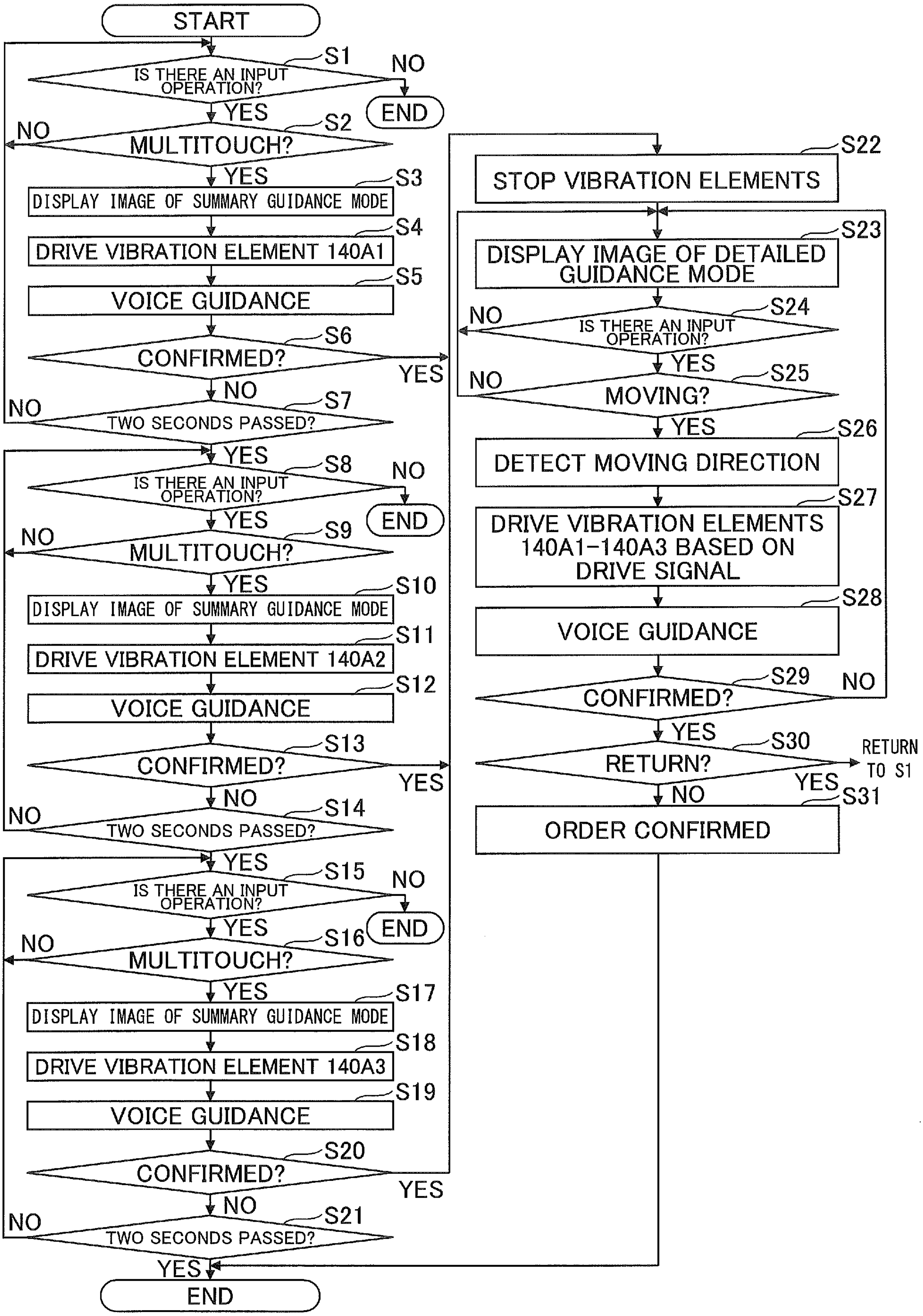
START
IS THERE AN INPUT OPERATION?
S1
NO
END
YES
MULTITOUCH?
S2
NO
YES
DISPLAY IMAGE OF SUMMARY GUIDANCE MODE
S3
DRIVE VIBRATION ELEMENT 140A1
S4
VOICE GUIDANCE
S5
CONFIRMED?
S6
YES
NO
TWO SECONDS PASSED?
S7
NO
YES
IS THERE AN INPUT OPERATION?
S8
NO
END
YES
MULTITOUCH?
S9
NO
YES
DISPLAY IMAGE OF SUMMARY GUIDANCE MODE
S10
DRIVE VIBRATION ELEMENT 140A2
S11
VOICE GUIDANCE
S12
CONFIRMED?
S13
YES
NO
TWO SECONDS PASSED?
S14
NO
YES
IS THERE AN INPUT OPERATION?
S15
NO
END
YES
MULTITOUCH?
S16
NO
YES
DISPLAY IMAGE OF SUMMARY GUIDANCE MODE
S17
DRIVE VIBRATION ELEMENT 140A3
S18
VOICE GUIDANCE
S19
CONFIRMED?
S20
YES
NO
TWO SECONDS PASSED?
S21
NO
YES
END
STOP VIBRATION ELEMENTS
S22
DISPLAY IMAGE OF DETAILED GUIDANCE MODE
S23
IS THERE AN INPUT OPERATION?
S24
NO
YES
MOVING?
S25
NO
YES
DETECT MOVING DIRECTION
S26
DRIVE VIBRATION ELEMENTS 140A1-140A3 BASED ON DRIVE SIGNAL
S27
VOICE GUIDANCE
S28
CONFIRMED?
S29
NO
YES
RETURN?
S30
YES
RETURN TO S1
NO
ORDER CONFIRMED
S31

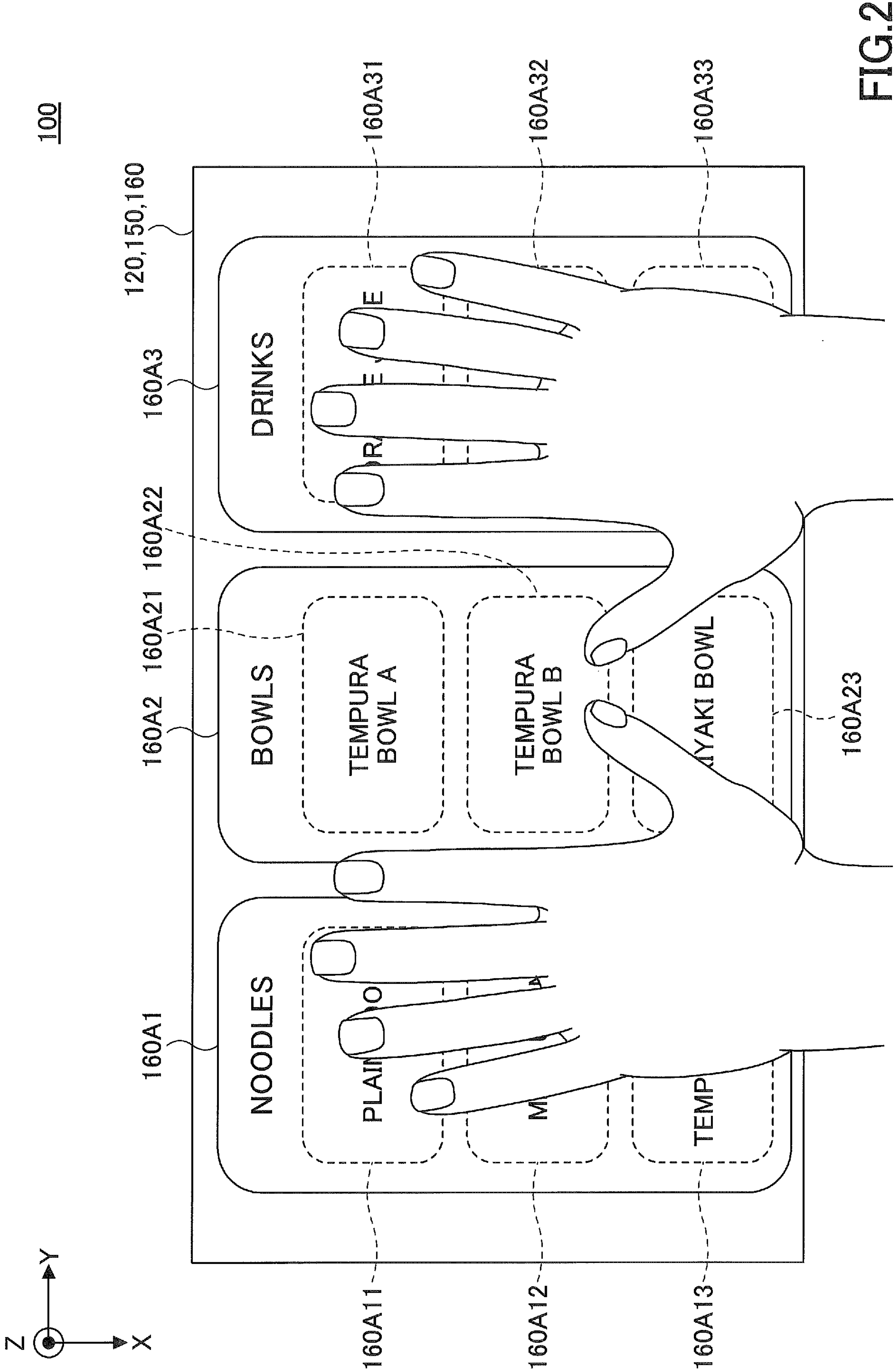
100
120,150,160
160A3
160A22
160A21
160A2
160A1
160A31
160A32
160A33
DRINKS
BOWLS
NOODLES
TEMPURA
BOWL A
TEMPURA
BOWL B
160A23
160A11
160A12
160A13
Z
Y
X

FIG.29

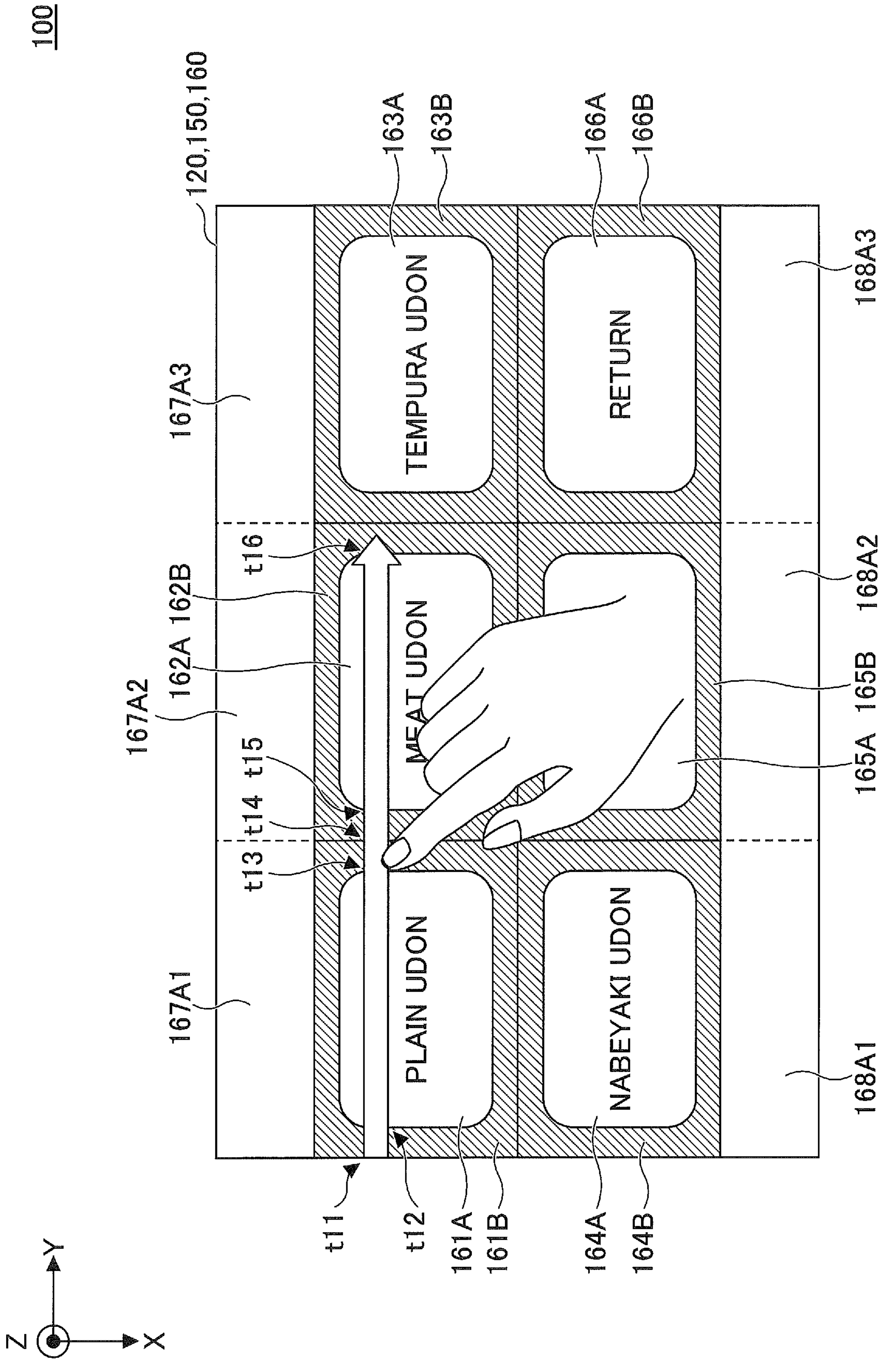
100
120,150,160
167A1
167A2
167A3
162A 162B
163A
163B
166A
166B
168A1
168A2
168A3
165A 165B
161A
161B
164A
164B
t11
t12
t13 t14 t15
t16
PLAIN UDON
MEAT UDON
TEMPURA UDON
NABEYAKI UDON
RETURN
Z
X
Y

FIG.30

FIG.31

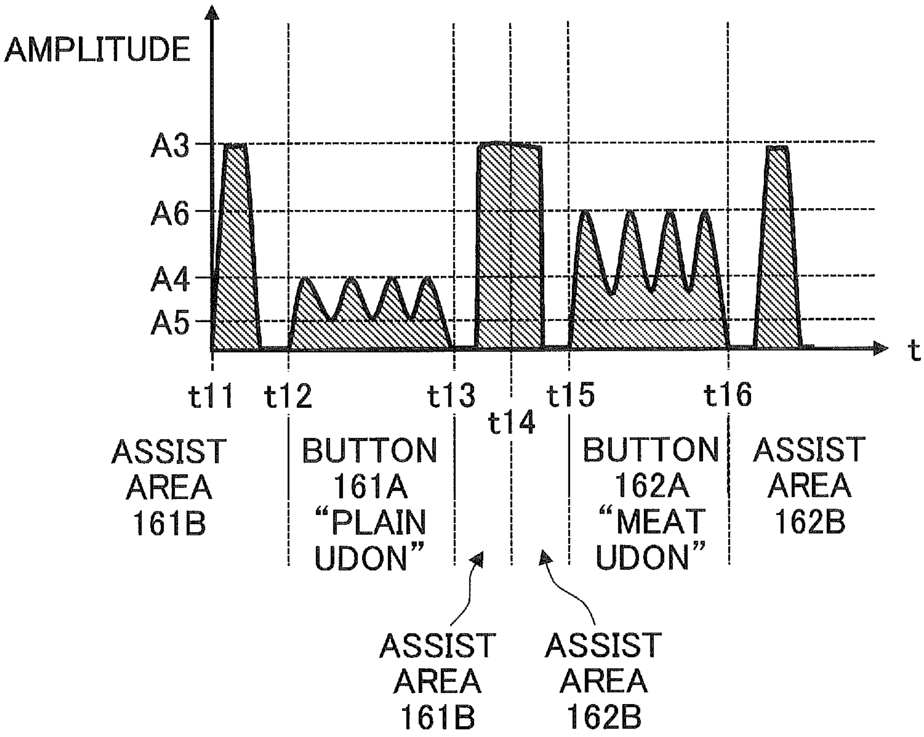
AMPLITUDE
A3
A6
A4
A5
t
t11
t12
t13
t14
t15
t16
ASSIST AREA 161B
BUTTON 161A "PLAIN UDON"
BUTTON 162A "MEAT UDON"
ASSIST AREA 162B
ASSIST AREA 161B
ASSIST AREA 162B

FIG.32

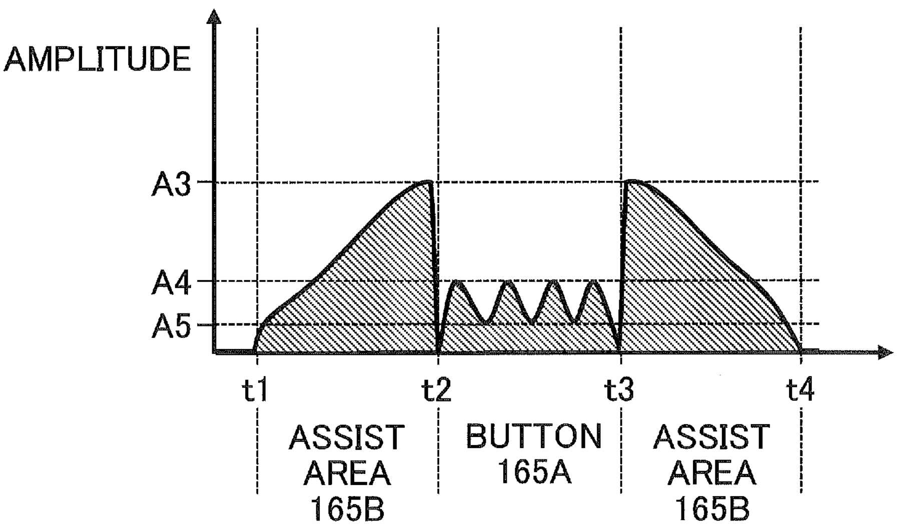
AMPLITUDE
A3
A4
A5
t1
t2
t3
t4
ASSIST AREA 165B
BUTTON 165A
ASSIST AREA 165B

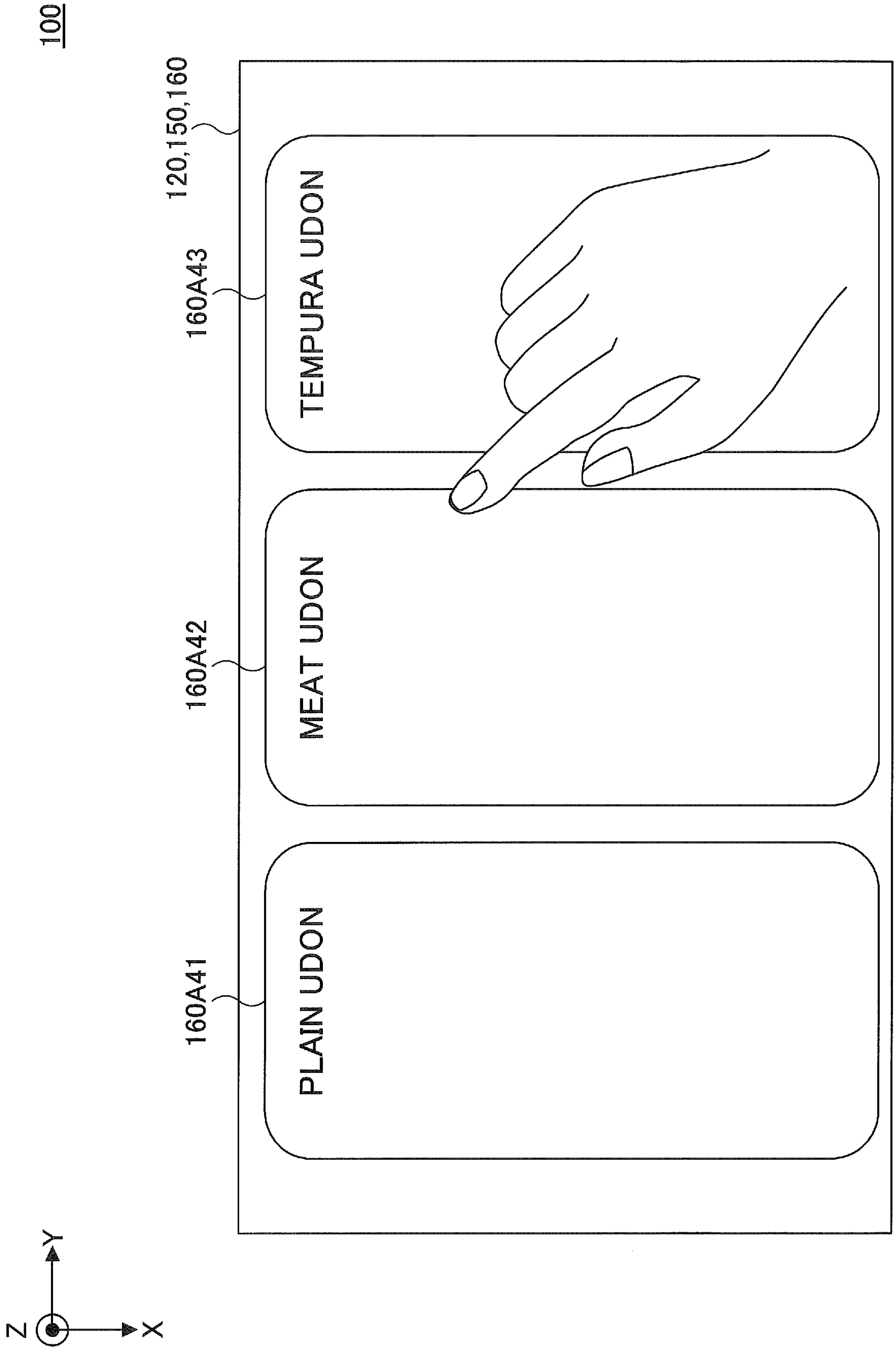
100
120,150,160
160A43
160A42
160A41
TEMPURA UDON
MEAT UDON
PLAIN UDON
Y
Z
X

FIG.33

FIG.34

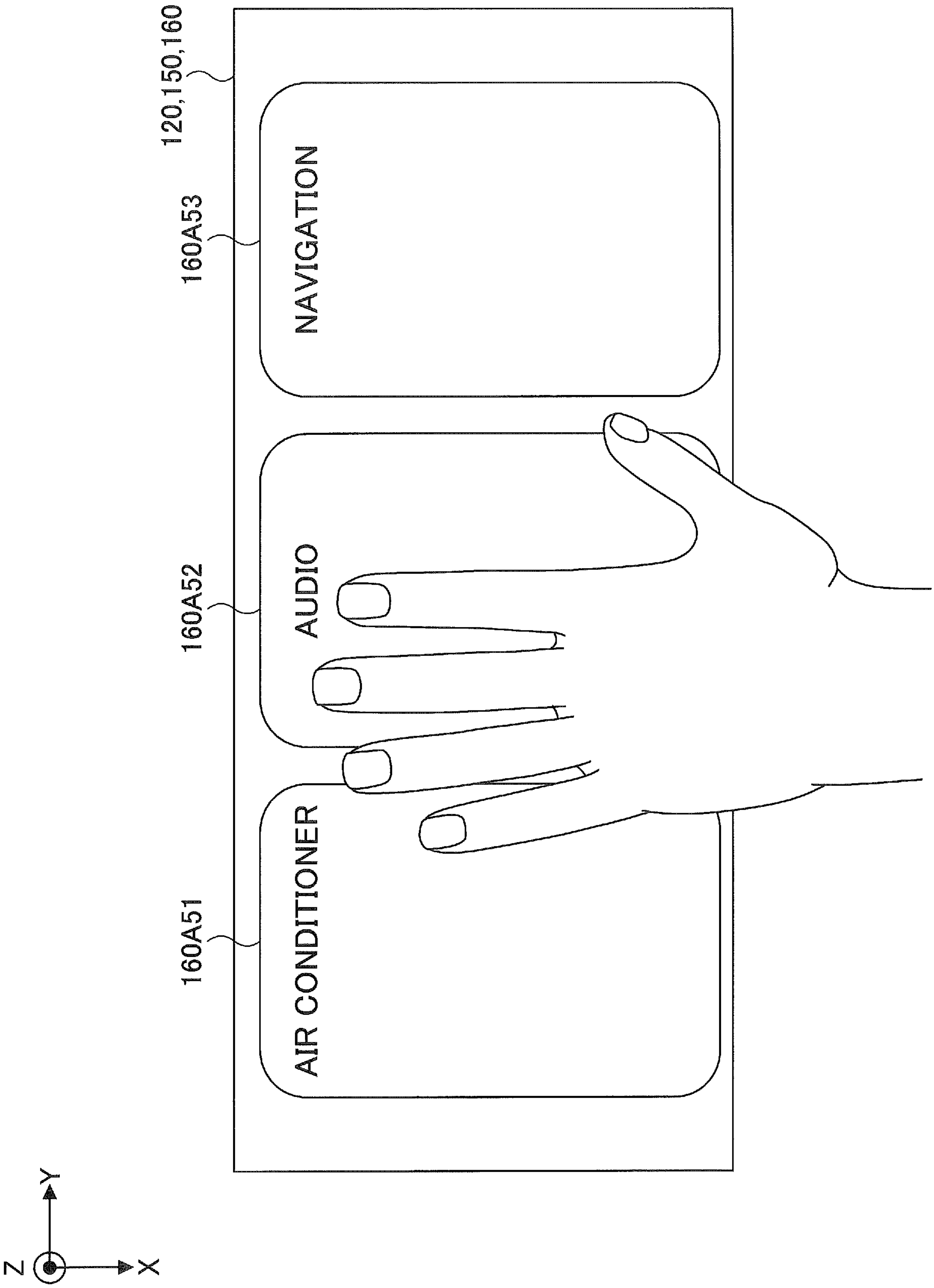
120,150,160
160A53
NAVIGATION
160A52
AUDIO
160A51
AIR CONDITIONER
Y
Z
X

FIG.35

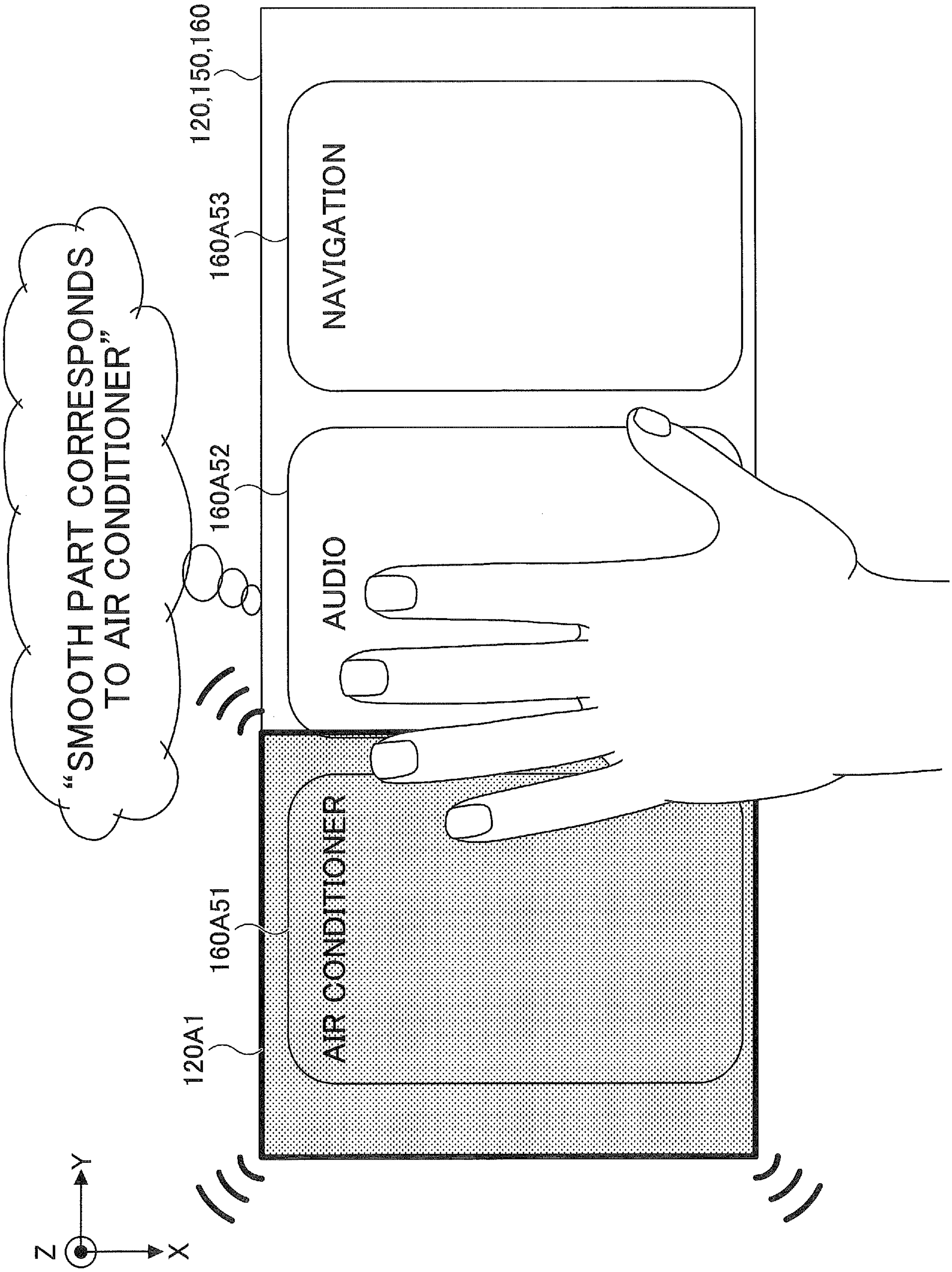
"SMOOTH PART CORRESPONDS TO AIR CONDITIONER"
120,150,160
160A53
160A52
160A51
120A1
NAVIGATION
AUDIO
AIR CONDITIONER
Z
Y
X

FIG.36

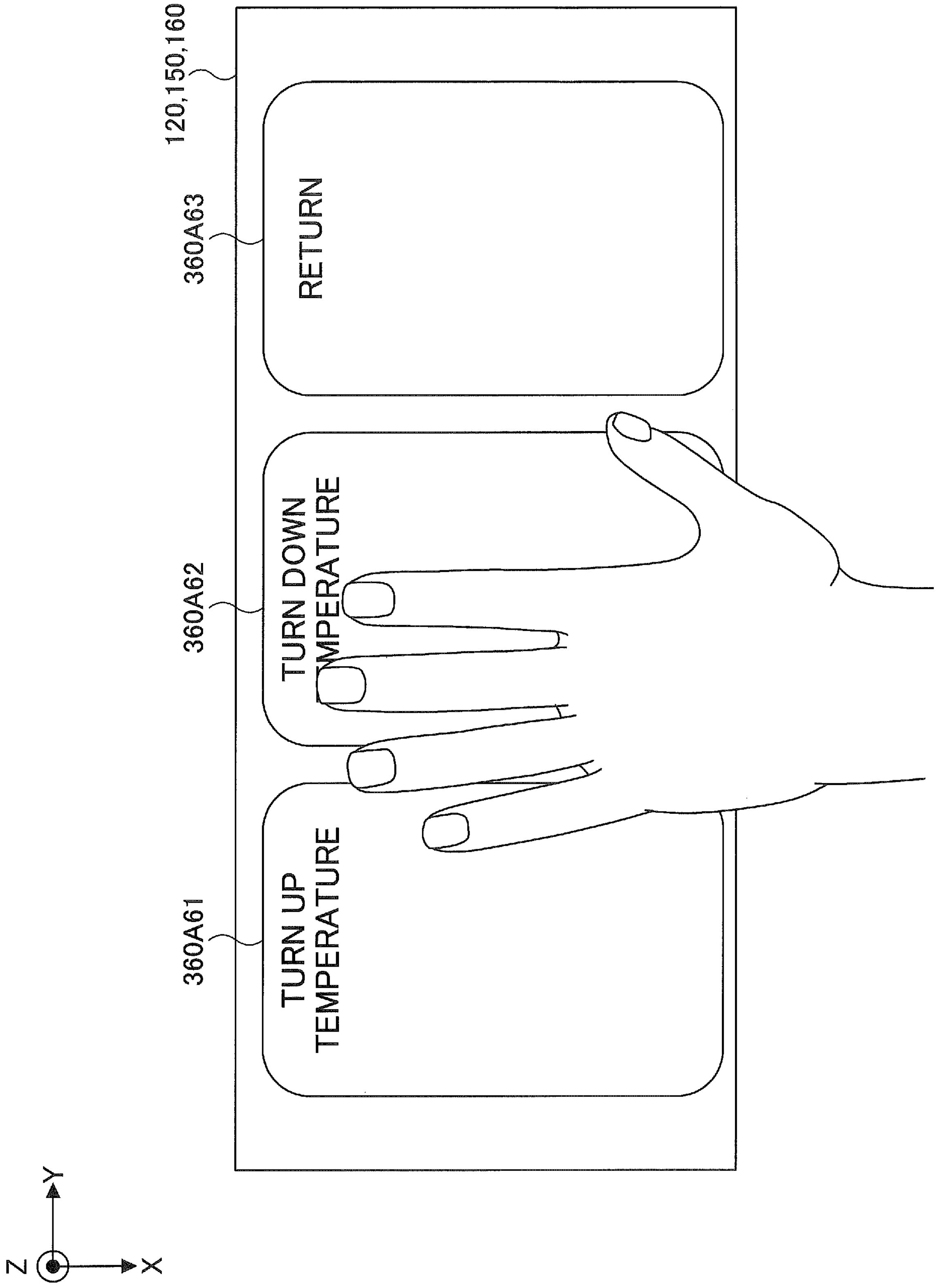
120,150,160
360A63
RETURN
360A62
TURN DOWN
TEMPERATURE
360A61
TURN UP
TEMPERATURE
Y
Z
X

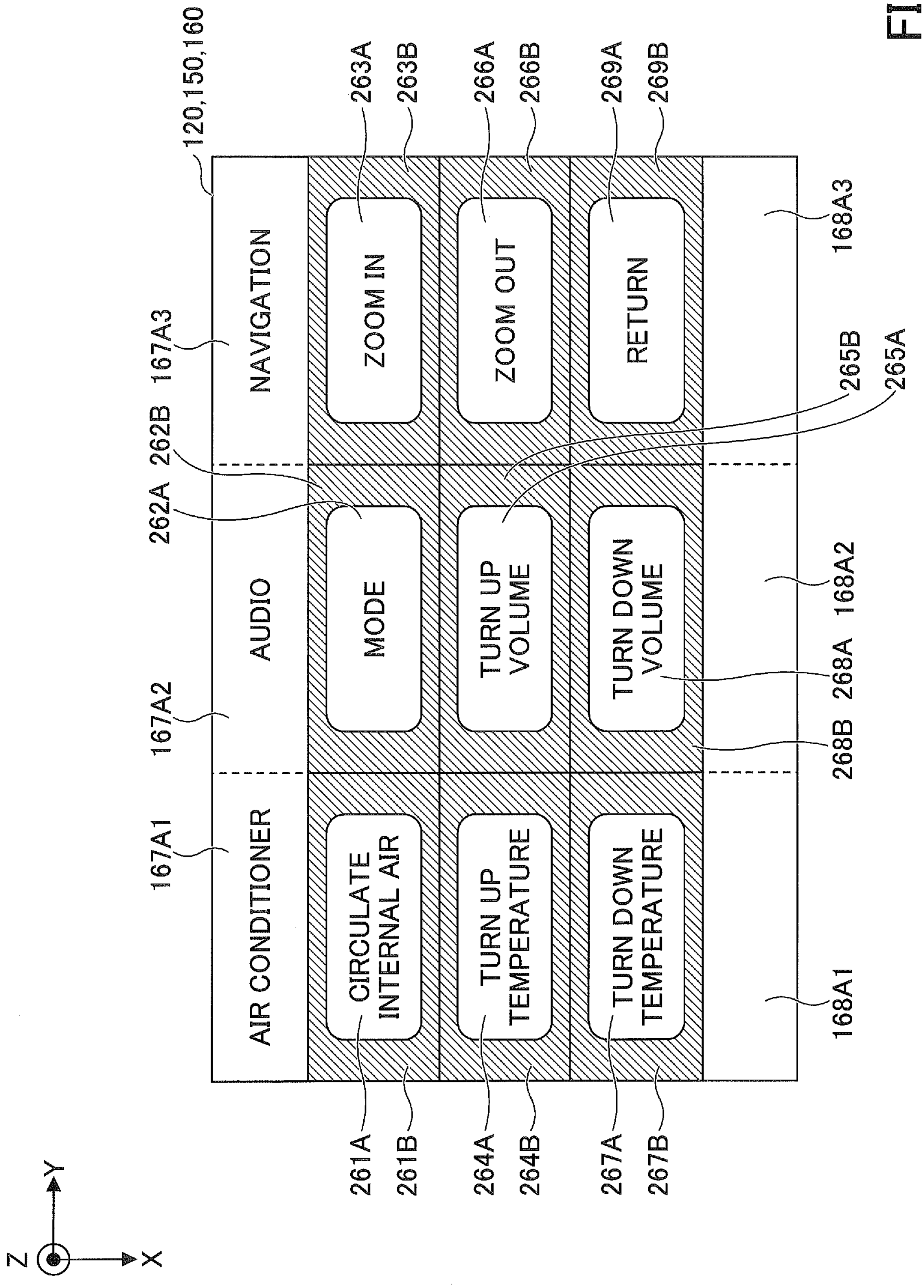

120,150,160
AIR CONDITIONER
AUDIO
NAVIGATION
CIRCULATE INTERNAL AIR
MODE
ZOOM IN
TURN UP TEMPERATURE
TURN UP VOLUME
ZOOM OUT
TURN DOWN TEMPERATURE
TURN DOWN VOLUME
RETURN
167A1
167A2
167A3
262A
262B
263A
263B
266A
266B
269A
269B
265B
265A
168A3
168A2
168A1
268A
268B
261A
261B
264A
264B
267A
267B
X
Y
Z


FIG.37

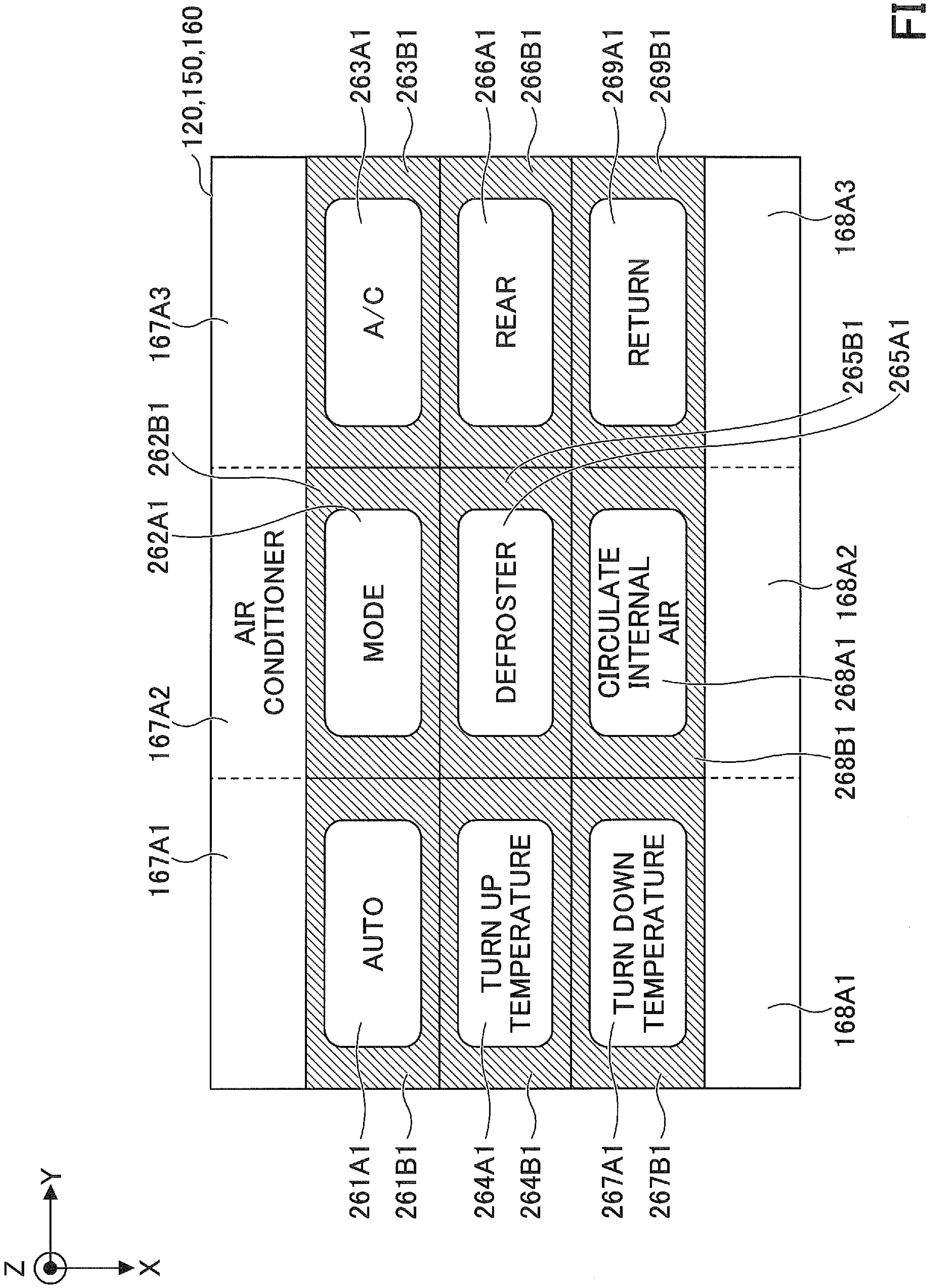
120,150,160
167A1
167A2
167A3
AIR CONDITIONER
262A1
262B1
263A1
263B1
266A1
266B1
269A1
269B1
AUTO
MODE
A/C
TURN UP TEMPERATURE
DEFROSTER
REAR
TURN DOWN TEMPERATURE
CIRCULATE INTERNAL AIR
RETURN
265B1
265A1
168A1
268B1
268A1
168A2
168A3
261A1
261B1
264A1
264B1
267A1
267B1
Y
X
Z

FIG.38

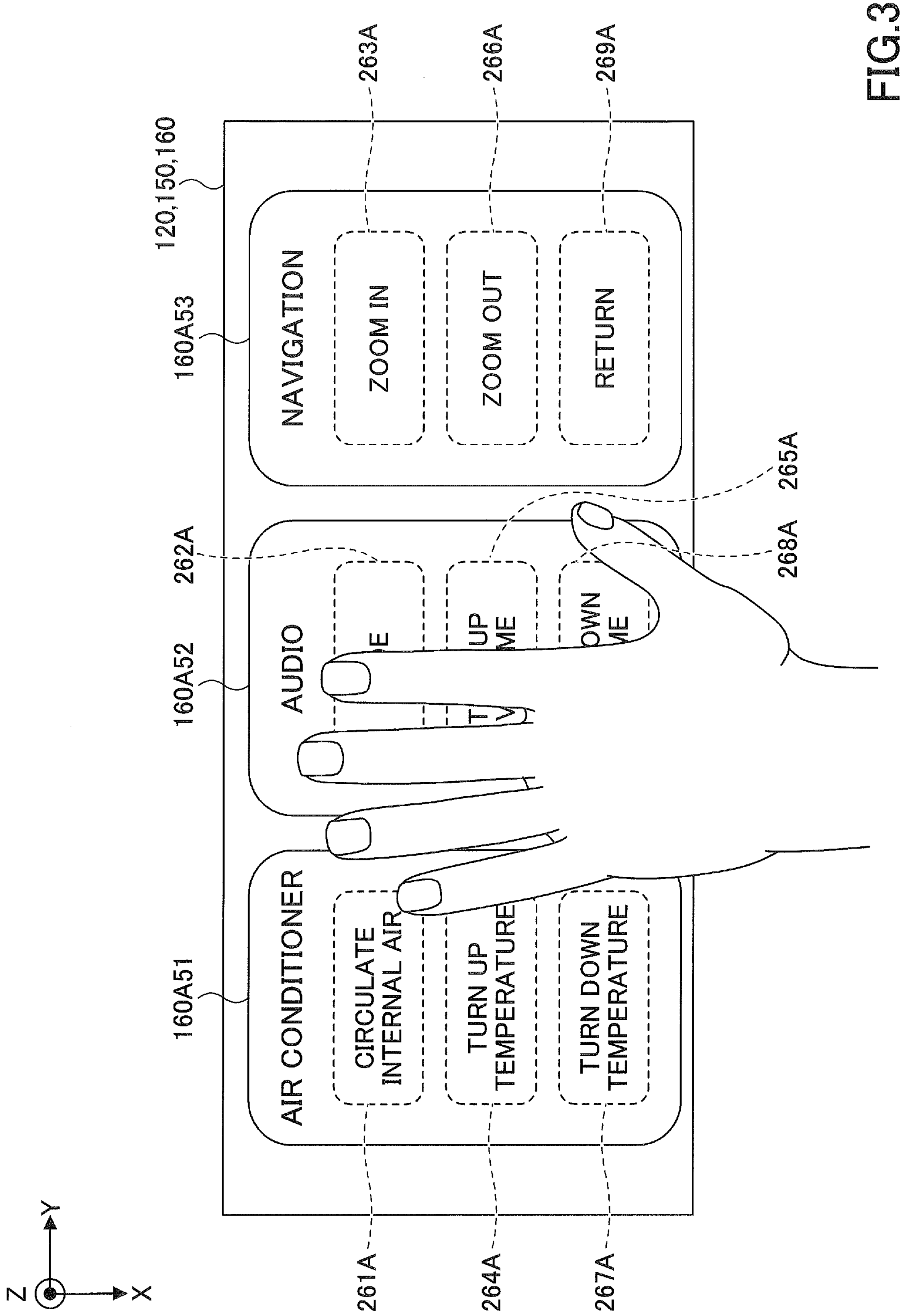
120,150,160
160A51
160A52
160A53
AIR CONDITIONER
CIRCULATE INTERNAL AIR
TURN UP TEMPERATURE
TURN DOWN TEMPERATURE
AUDIO
NAVIGATION
ZOOM IN
ZOOM OUT
RETURN
261A
262A
263A
264A
265A
266A
267A
268A
269A
X
Y
Z

FIG.39

FIG.40

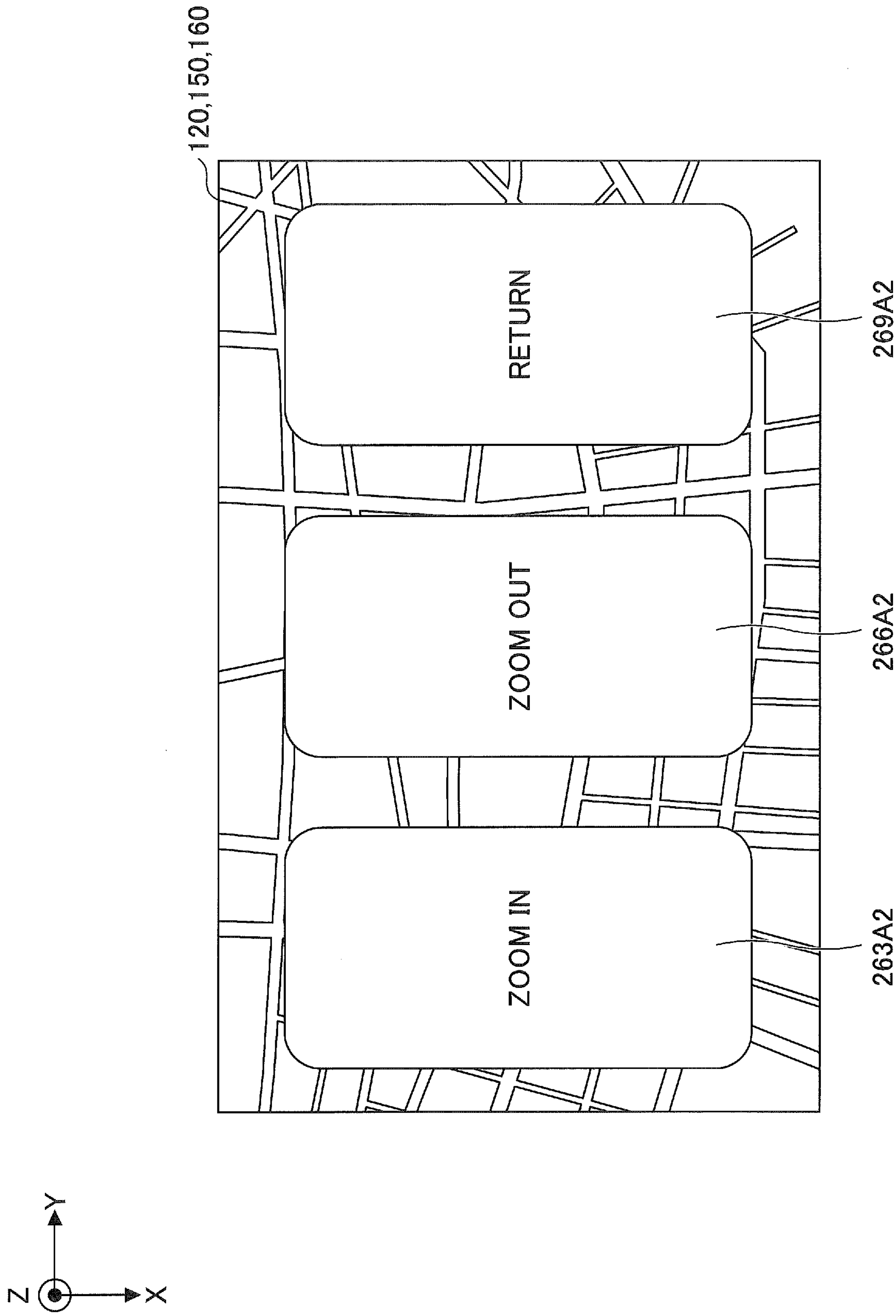

FIG.41

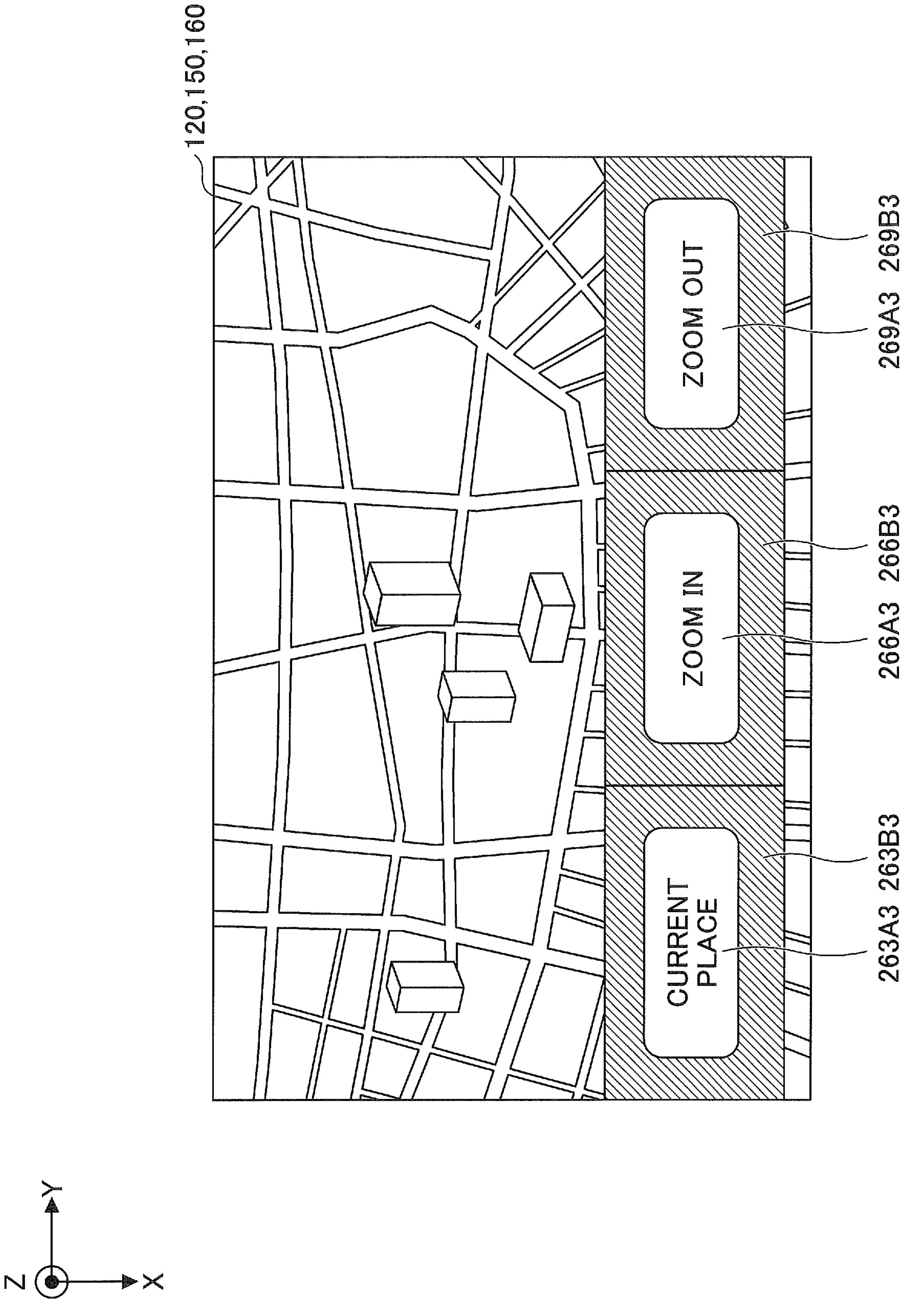
120,150,160
ZOOM OUT
ZOOM IN
CURRENT PLACE
269A3
269B3
266A3
266B3
263A3
263B3
Z
Y
X

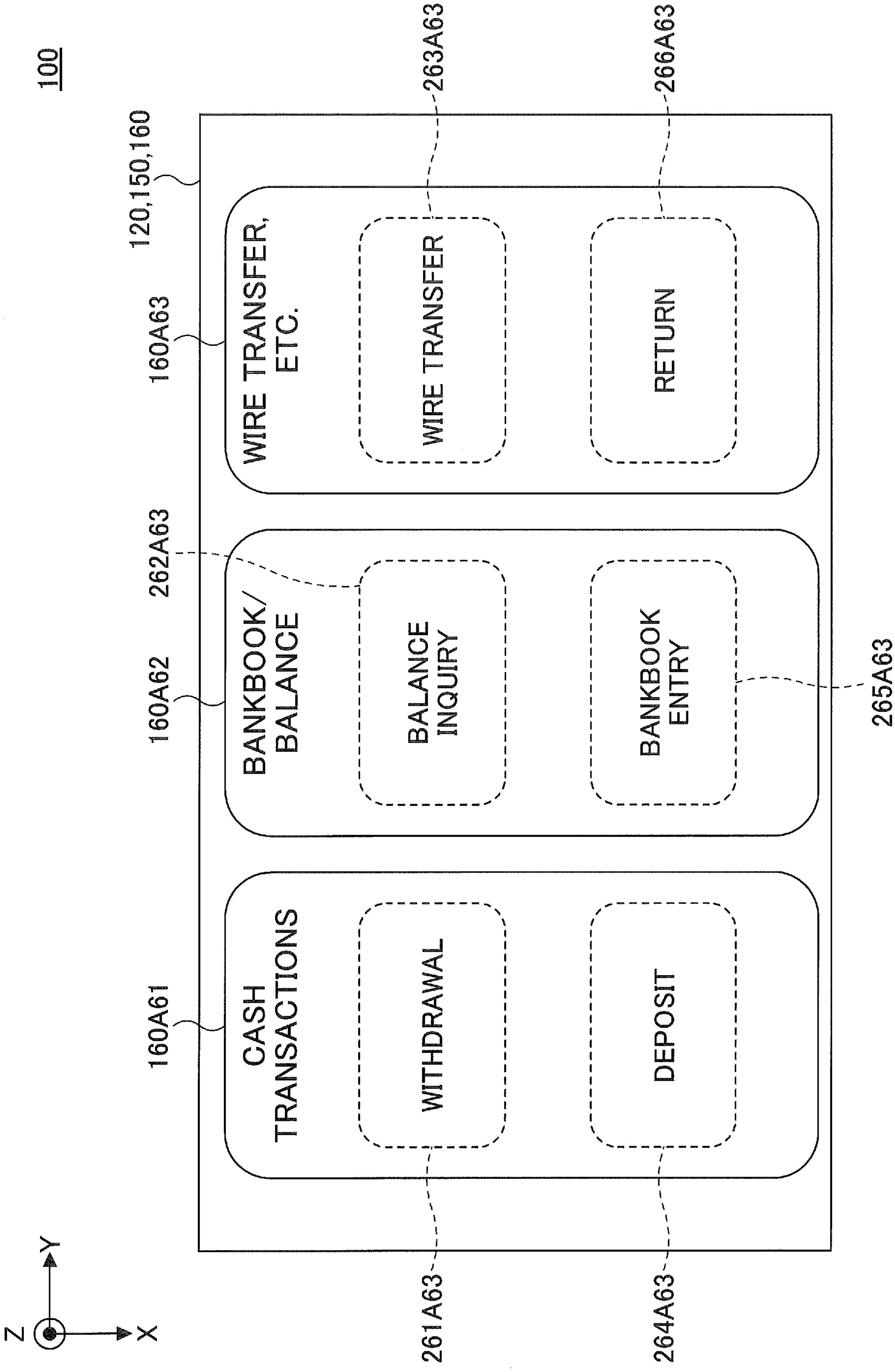
100
120,150,160
160A61
CASH TRANSACTIONS
WITHDRAWAL
DEPOSIT
160A62
BANKBOOK/ BALANCE
BALANCE INQUIRY
BANKBOOK ENTRY
160A63
WIRE TRANSFER, ETC.
WIRE TRANSFER
RETURN
261A63
262A63
263A63
264A63
265A63
266A63
Z
X
Y

FIG.42

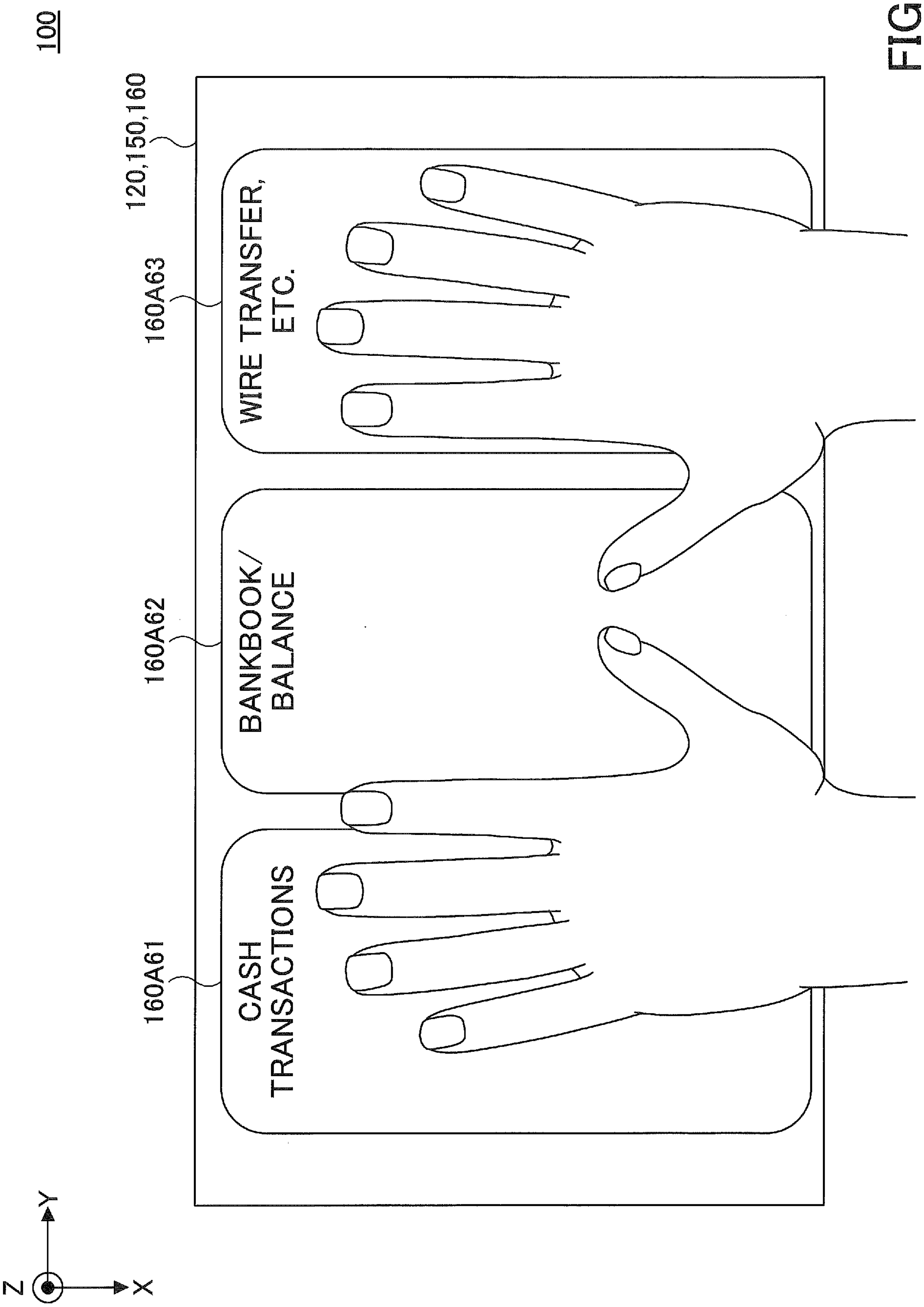
100
120,150,160
160A63
160A62
160A61
WIRE TRANSFER, ETC.
BANKBOOK/ BALANCE
CASH TRANSACTIONS
X
Y
Z

FIG.43

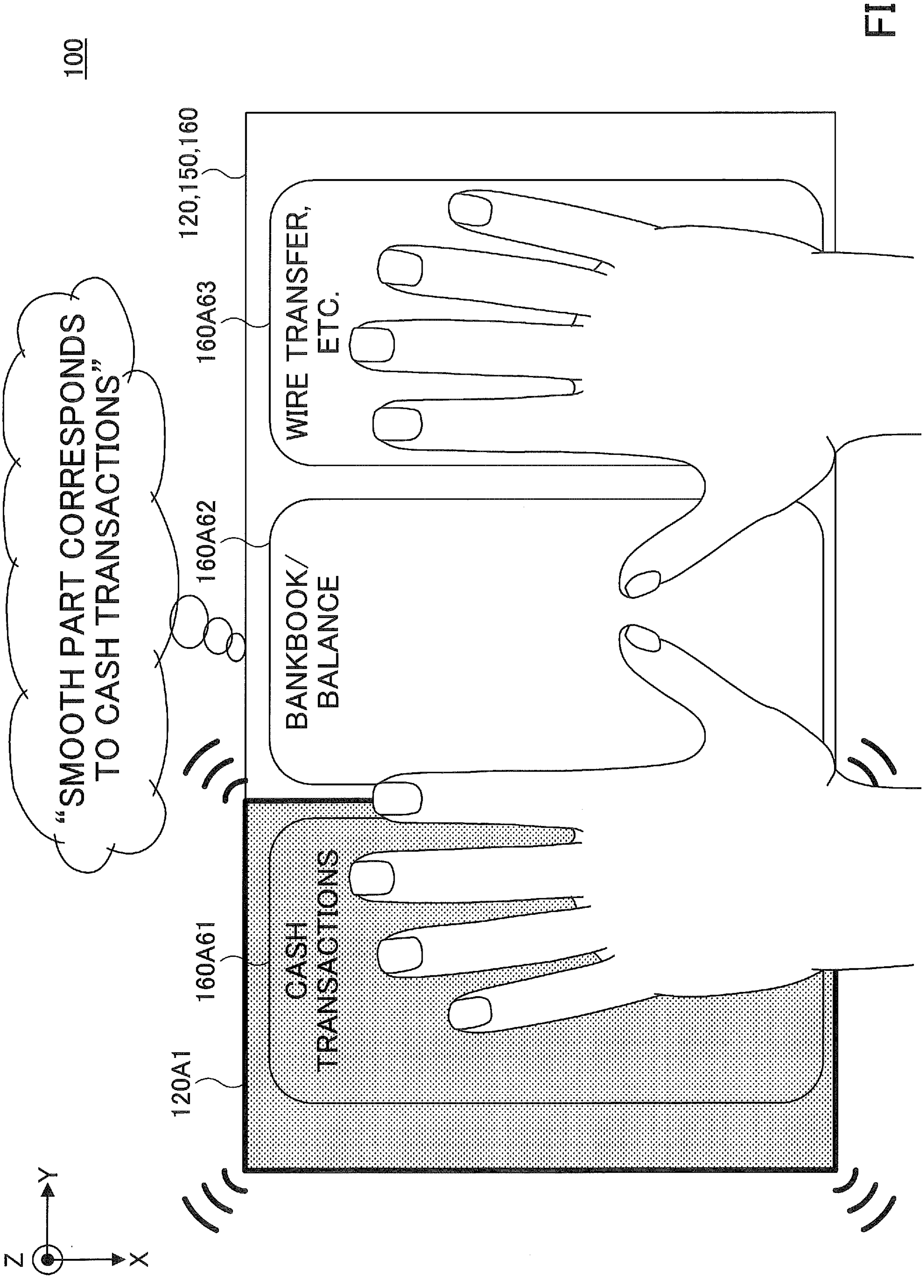
100
"SMOOTH PART CORRESPONDS TO CASH TRANSACTIONS"
120,150,160
160A63
160A62
160A61
120A1
WIRE TRANSFER, ETC.
BANKBOOK/ BALANCE
CASH TRANSACTIONS
Z
Y
X

FIG.44

FIG.45

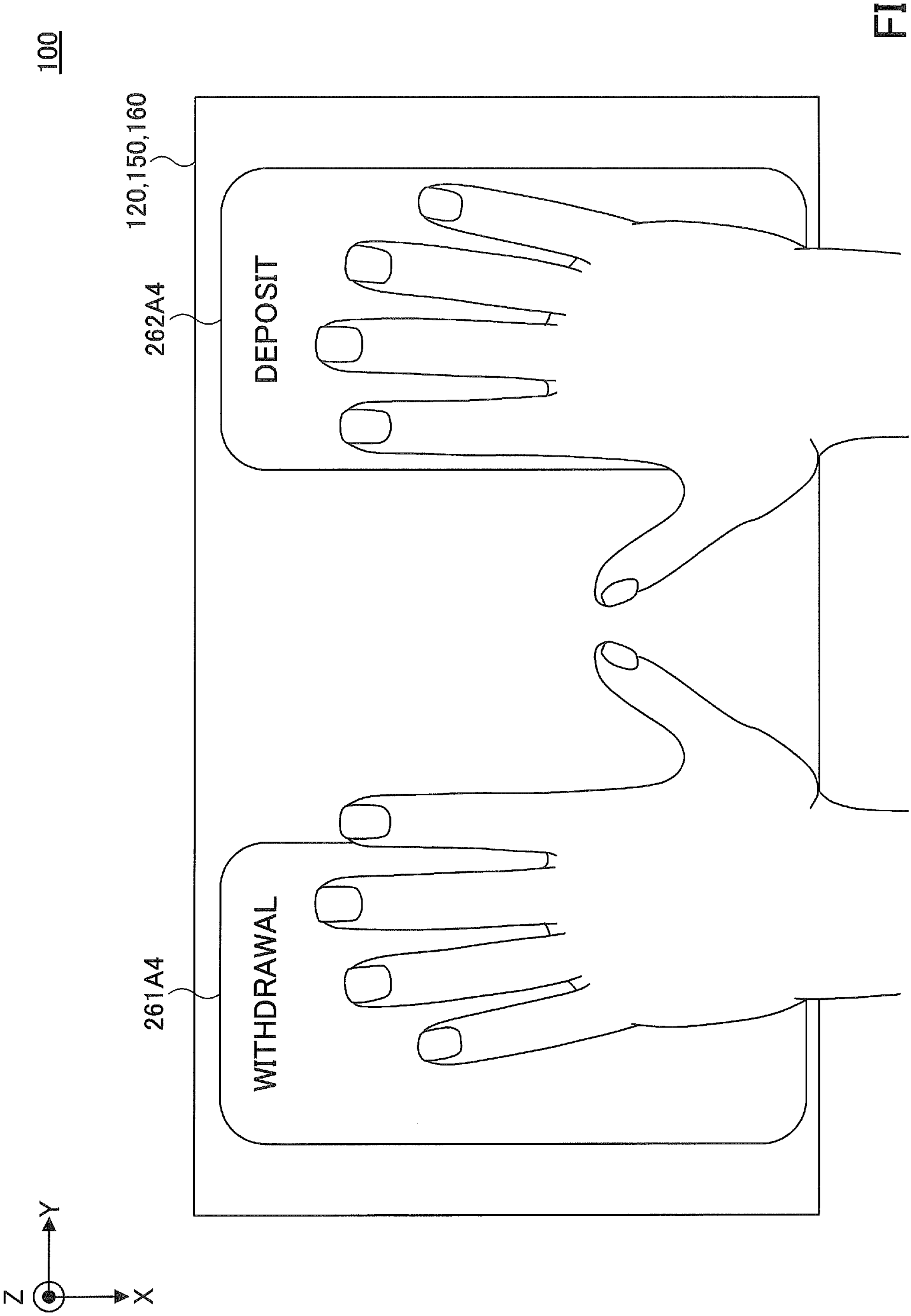

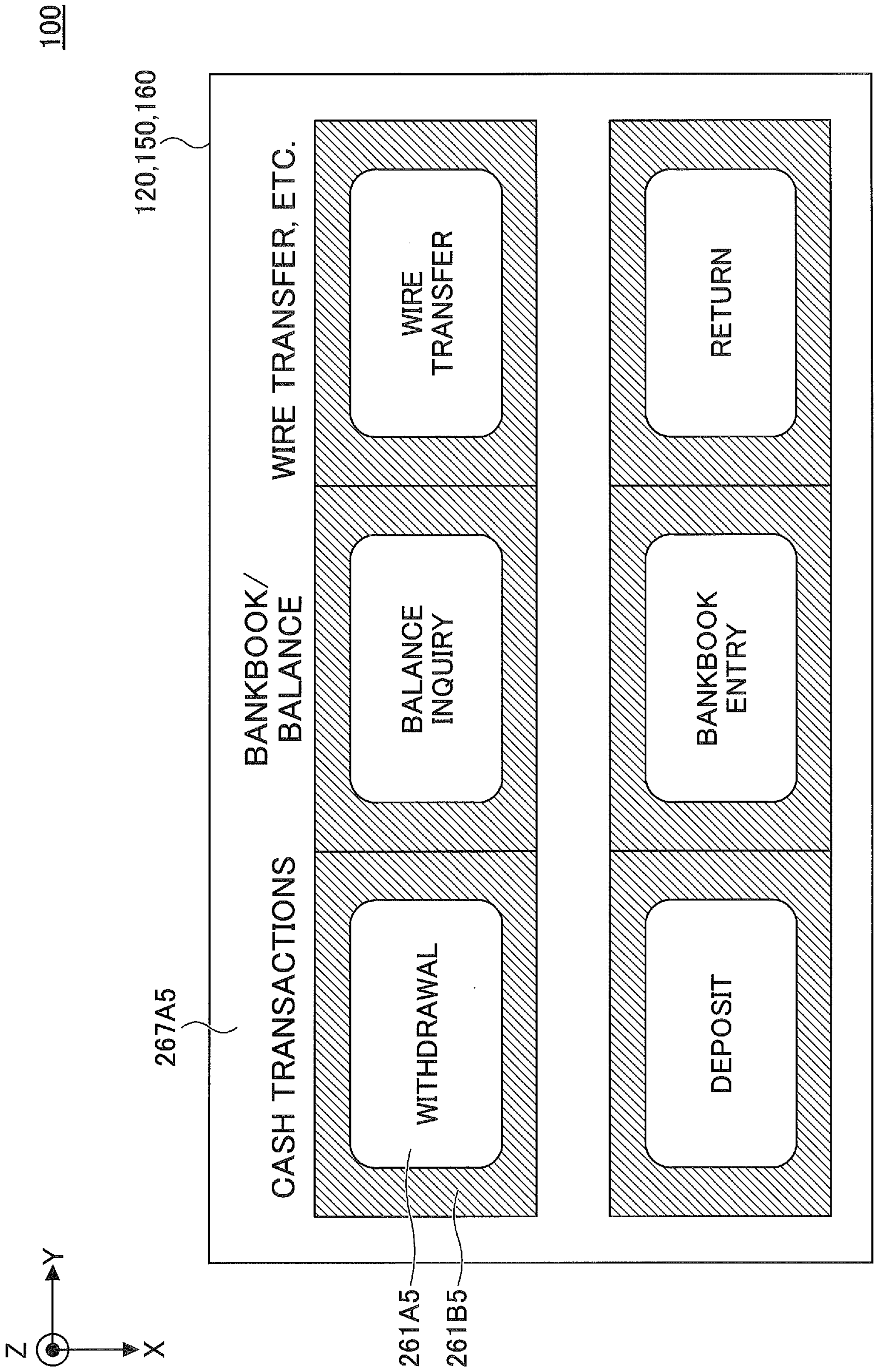
100
120,150,160
267A5
CASH TRANSACTIONS
BANKBOOK/
BALANCE
WIRE TRANSFER, ETC.
WITHDRAWAL
BALANCE
INQUIRY
WIRE
TRANSFER
DEPOSIT
BANKBOOK
ENTRY
RETURN
261A5
261B5
Z
Y
X

FIG.46

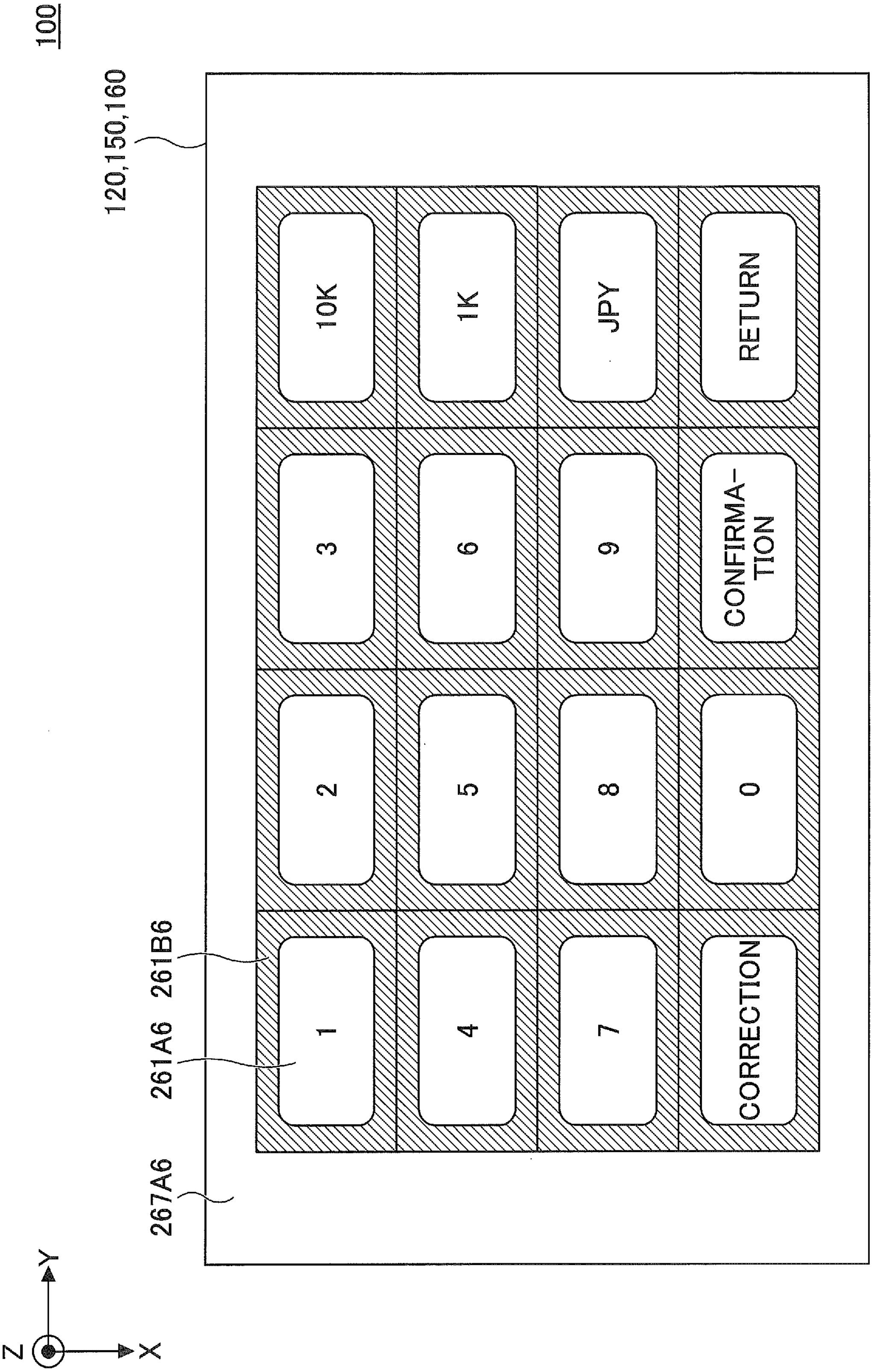
100
120,150,160
267A6
261A6
261B6
10K
1K
JPY
RETURN
3
6
9
CONFIRMA-
TION
2
5
8
0
1
4
7
CORRECTION
Z
Y
X

FIG.47

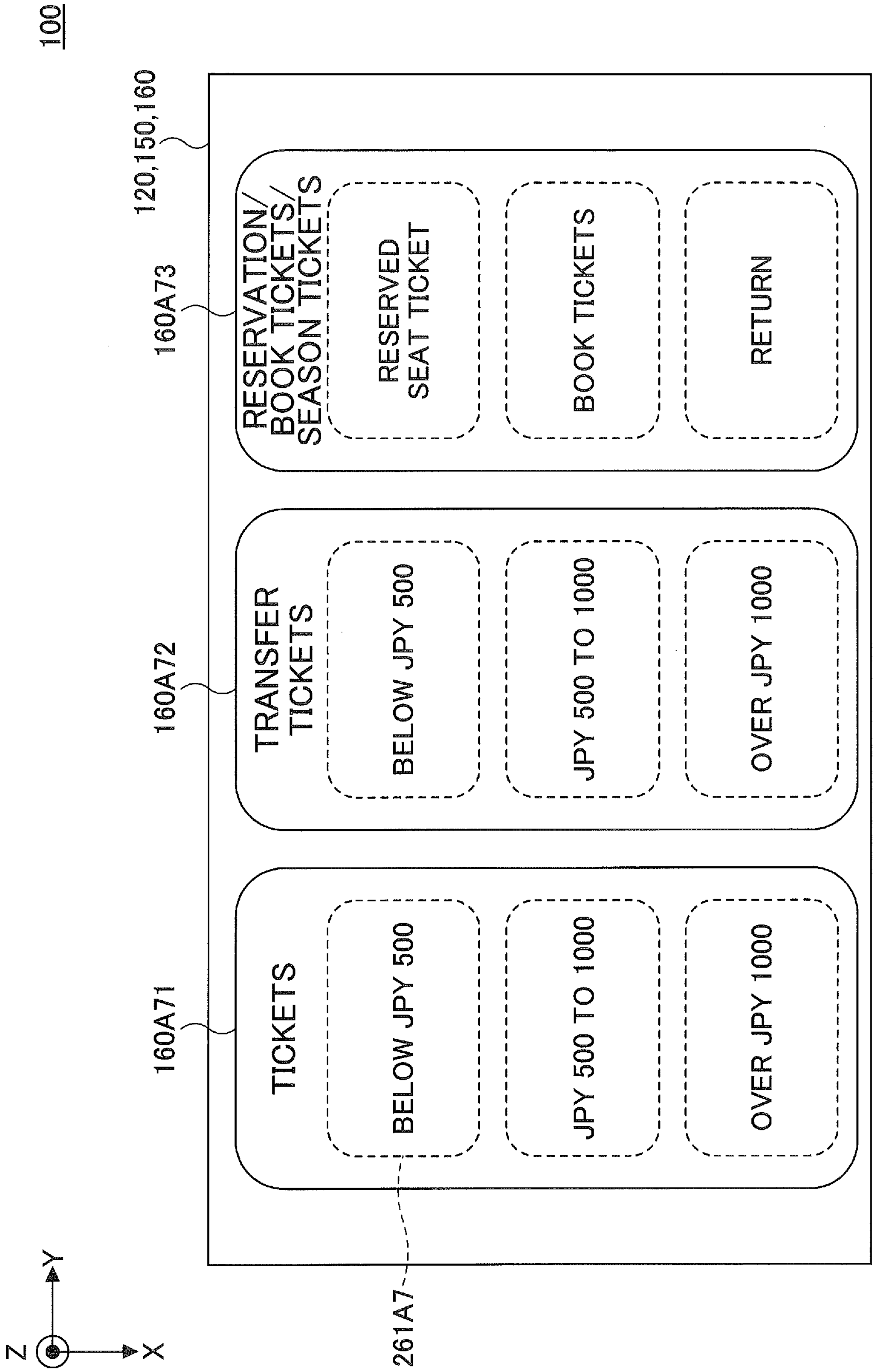
100
120,150,160
160A71
160A72
160A73
TICKETS
BELOW JPY 500
JPY 500 TO 1000
OVER JPY 1000
TRANSFER TICKETS
BELOW JPY 500
JPY 500 TO 1000
OVER JPY 1000
RESERVATION/ BOOK TICKETS/ SEASON TICKETS
RESERVED SEAT TICKET
BOOK TICKETS
RETURN
261A7
X
Y
Z

FIG.48

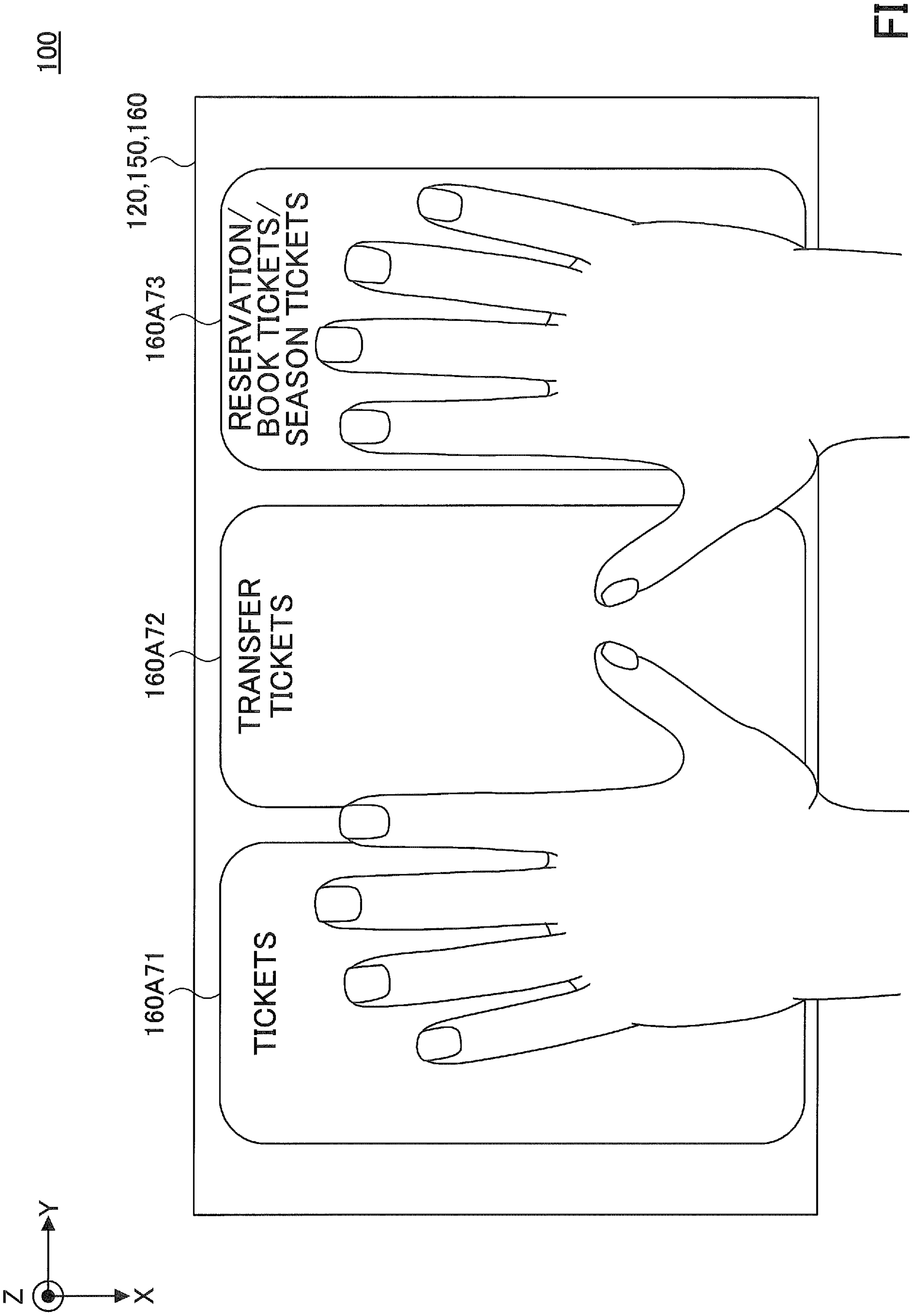
100
120,150,160
160A73
160A72
160A71
RESERVATION/
BOOK TICKETS/
SEASON TICKETS
TRANSFER
TICKETS
TICKETS
Z
Y
X

FIG.49

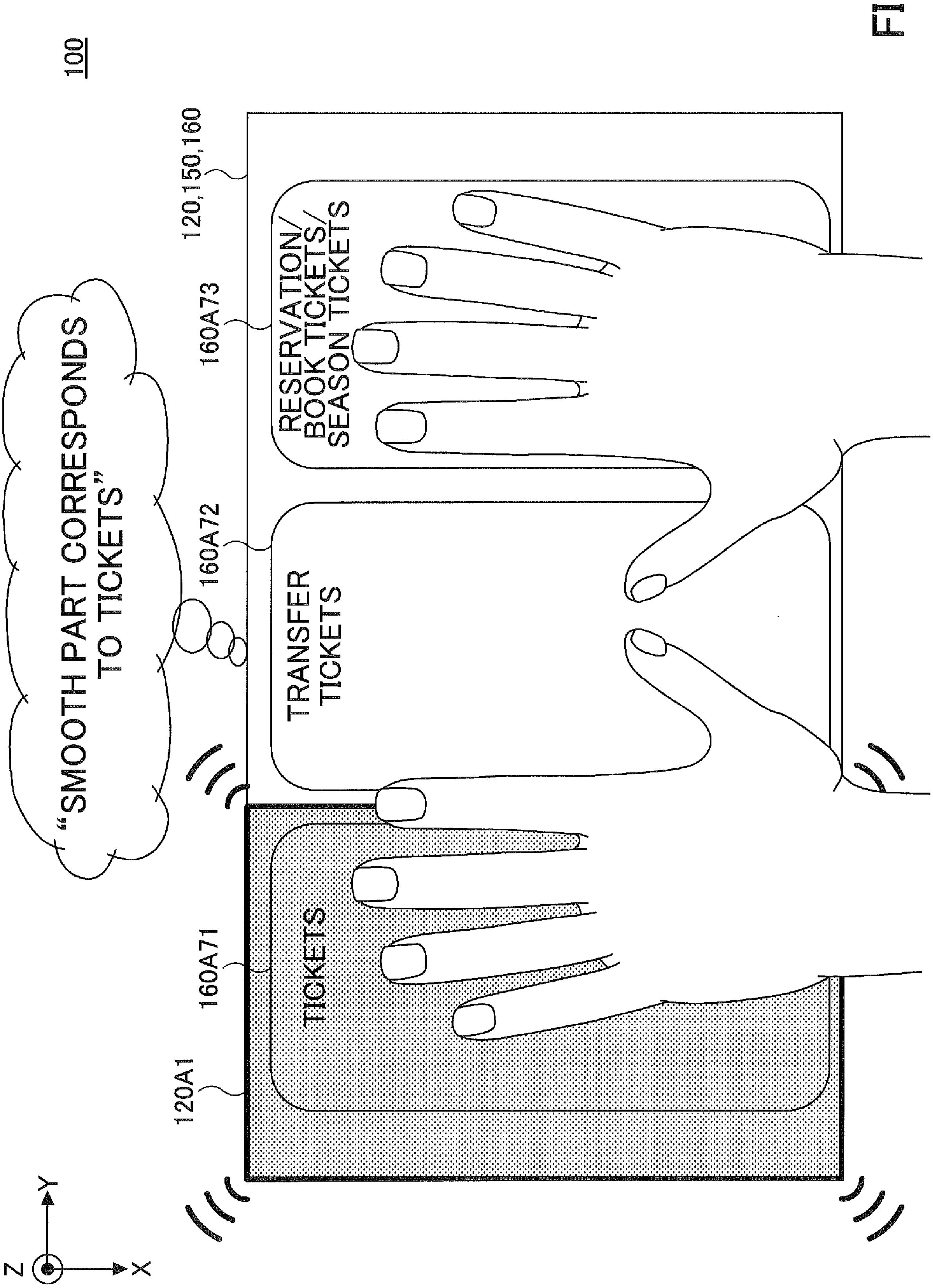
100
"SMOOTH PART CORRESPONDS TO TICKETS"
120,150,160
160A73
160A72
160A71
120A1
RESERVATION/ BOOK TICKETS/ SEASON TICKETS
TRANSFER TICKETS
TICKETS
Z
Y
X

FIG.50

FIG.51

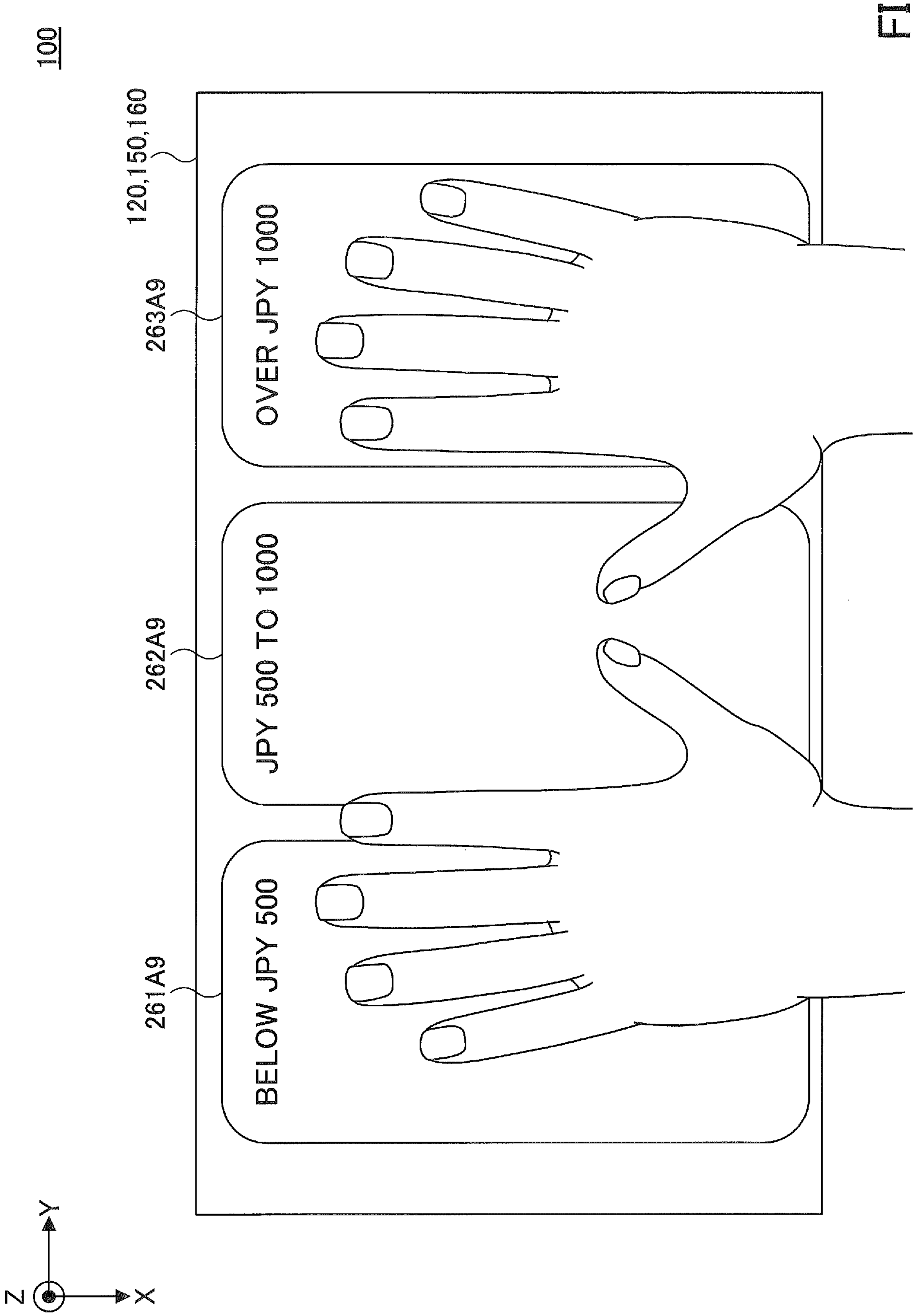
100
120,150,160
263A9
262A9
261A9
OVER JPY 1000
JPY 500 TO 1000
BELOW JPY 500
Y
Z
X

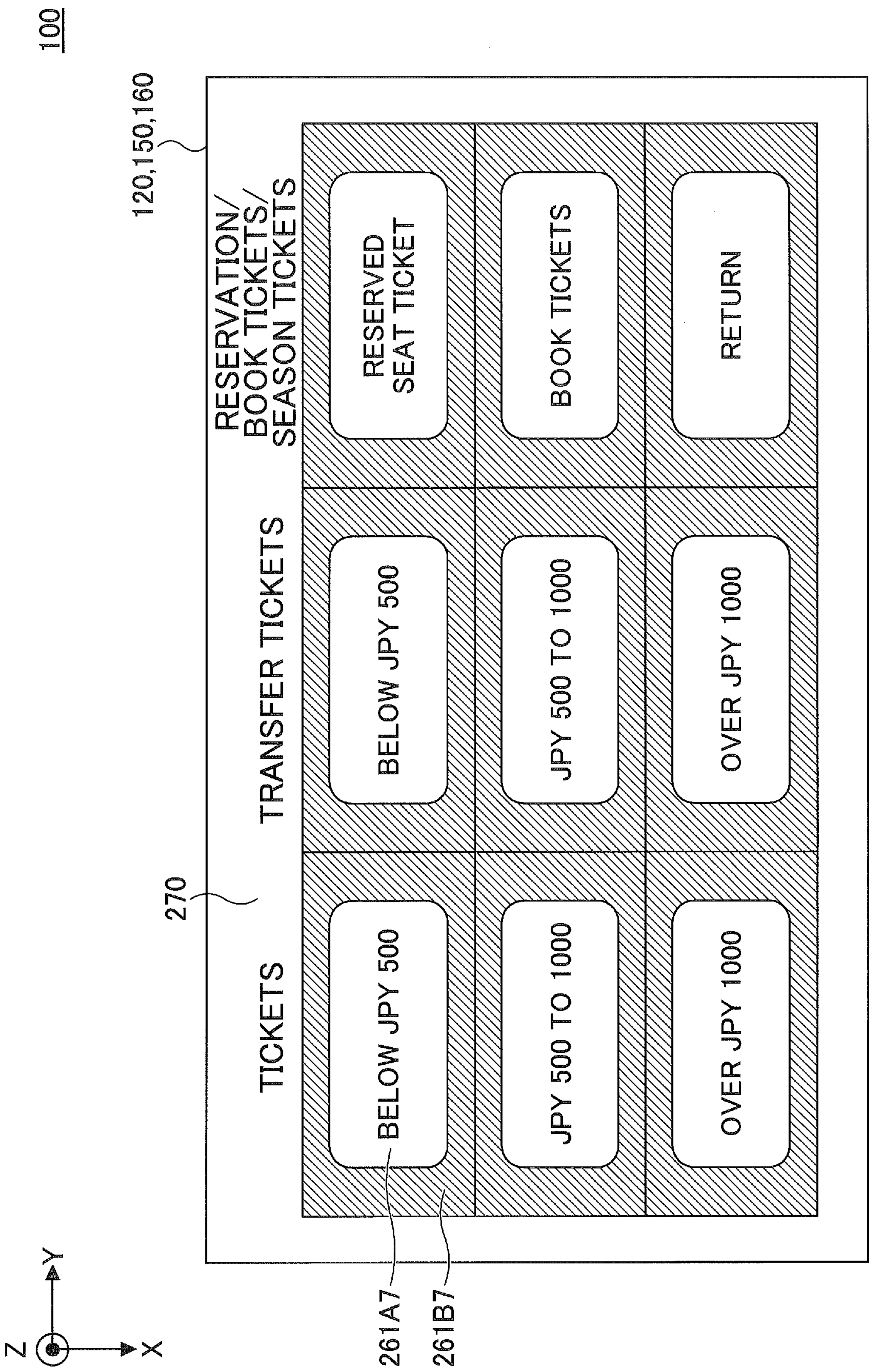
100
120,150,160
270
RESERVATION/
BOOK TICKETS/
SEASON TICKETS
TRANSFER TICKETS
TICKETS
RESERVED
SEAT TICKET
BOOK TICKETS
RETURN
BELOW JPY 500
JPY 500 TO 1000
OVER JPY 1000
BELOW JPY 500
JPY 500 TO 1000
OVER JPY 1000
261A7
261B7
Z
Y
X

FIG.52

FIG.53

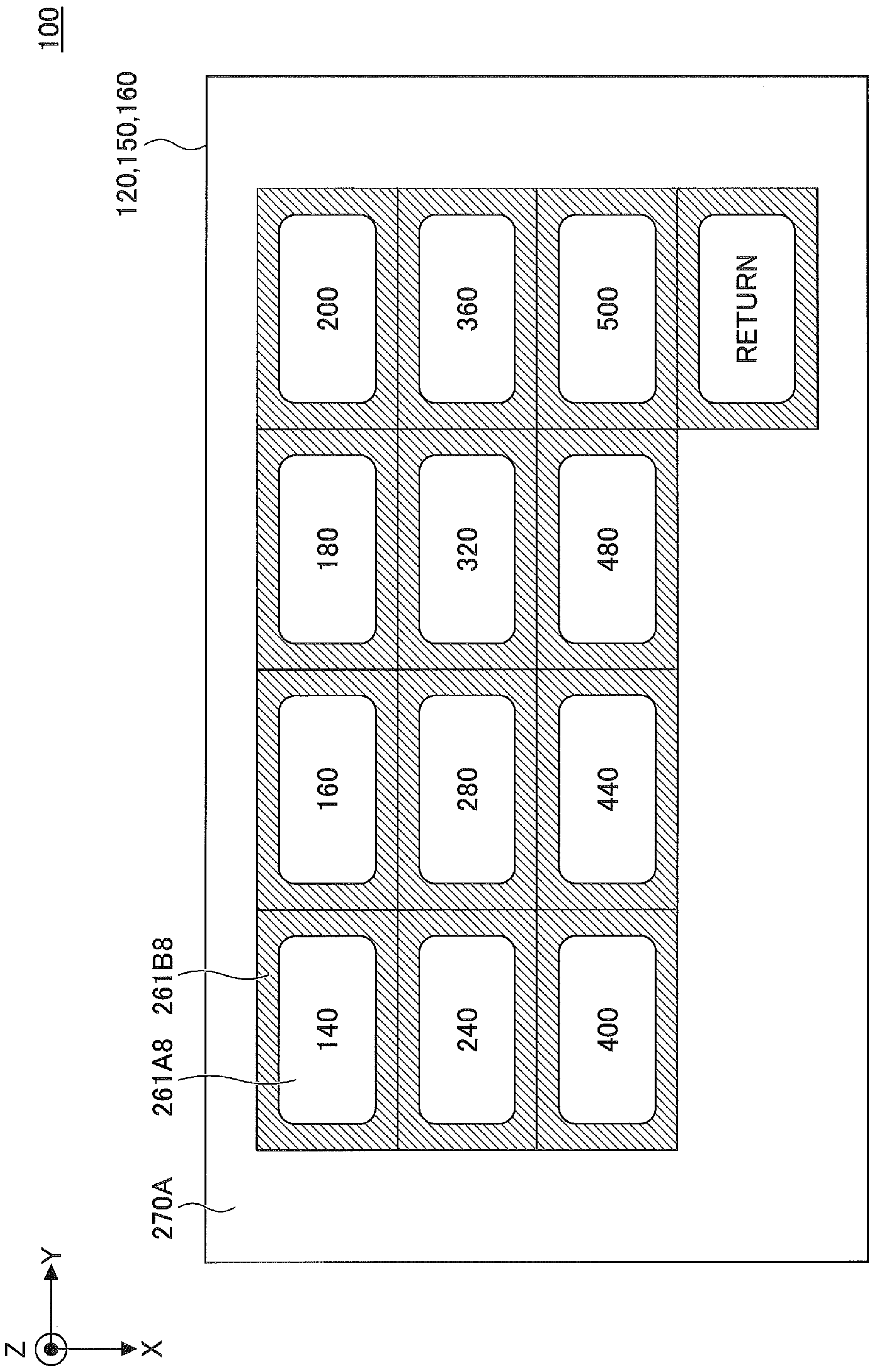
100
120,150,160
200
360
500
RETURN
180
320
480
160
280
440
261B8
261A8
140
240
400
270A
Y
Z
X

# FIG.54

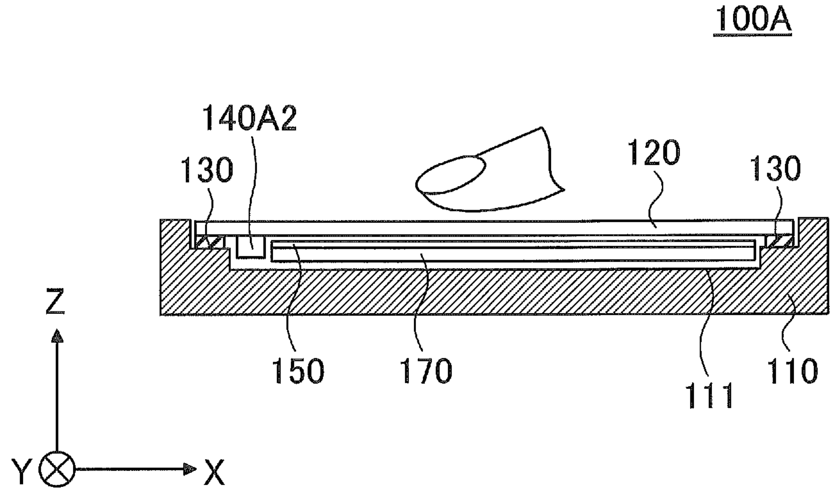
100A
140A2
130
120
130
Z
150
170
111
110
Y
X

# FIG.55

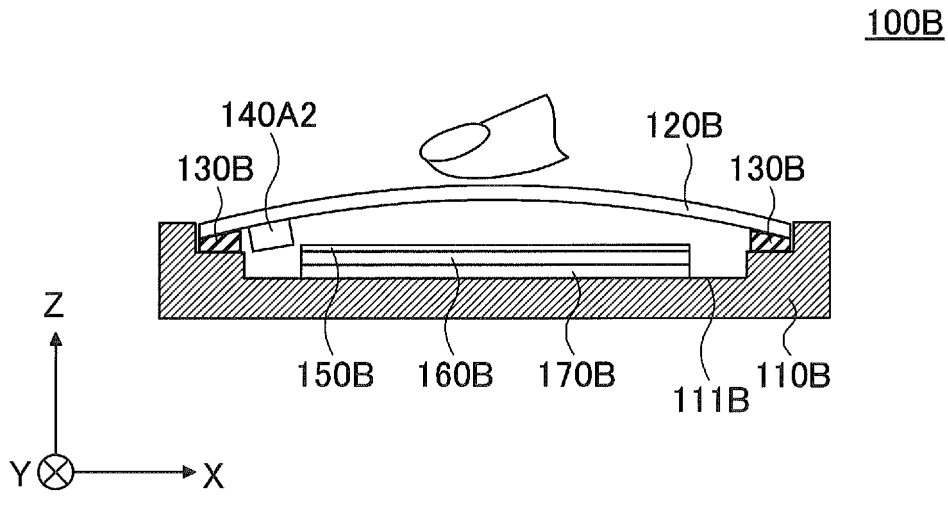
100B
140A2
130B
120B
130B
Z
150B
160B
170B
111B
110B
Y
X

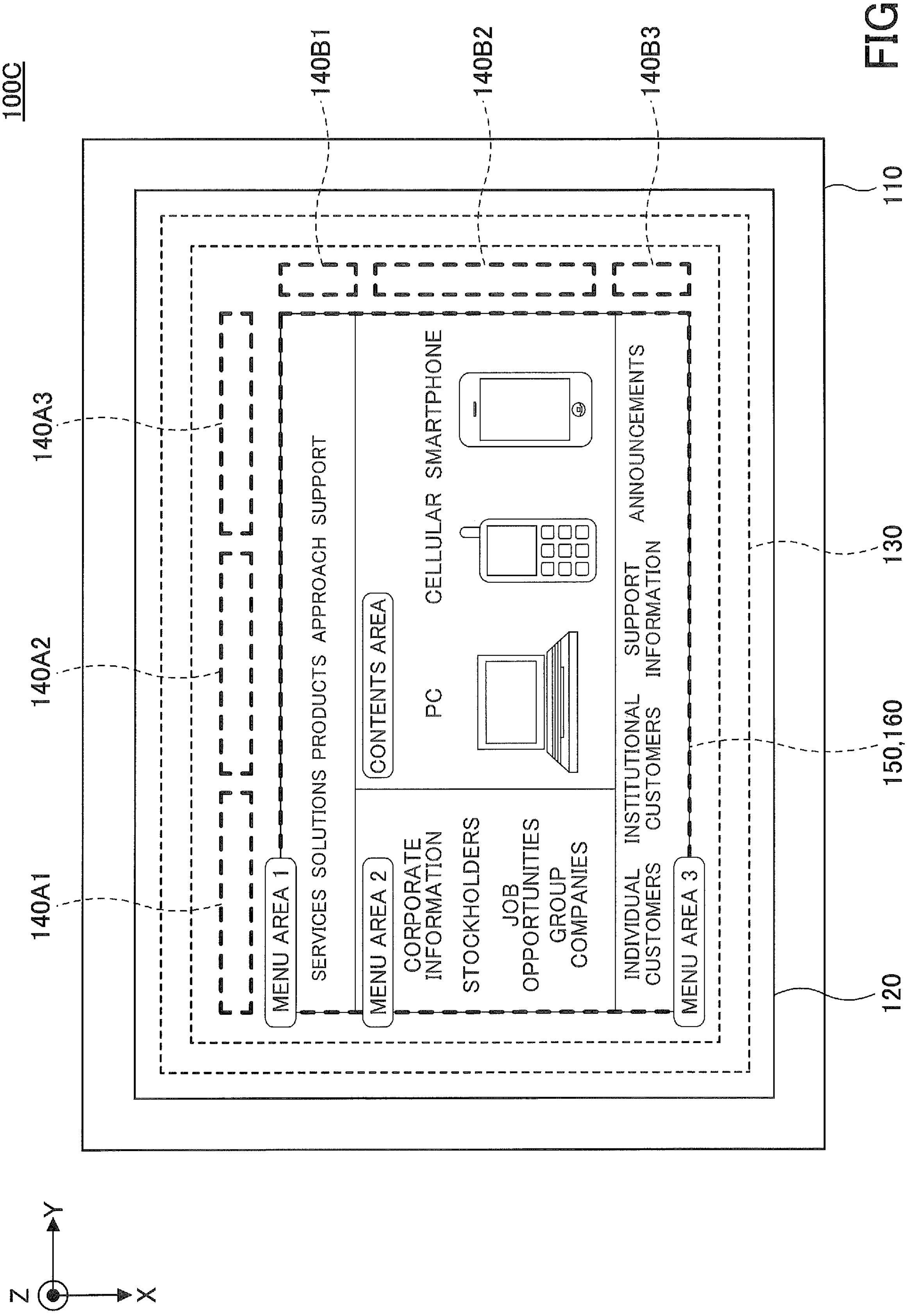
100C
140A1
140A2
140A3
140B1
140B2
140B3
110
120
130
150,160
MENU AREA 1
SERVICES SOLUTIONS PRODUCTS APPROACH SUPPORT
MENU AREA 2
CORPORATE INFORMATION
STOCKHOLDERS
JOB OPPORTUNITIES
GROUP COMPANIES
CONTENTS AREA
PC
CELLULAR
SMARTPHONE
MENU AREA 3
INDIVIDUAL CUSTOMERS
INSTITUTIONAL CUSTOMERS
SUPPORT INFORMATION
ANNOUNCEMENTS
Z
Y
X

FIG.56

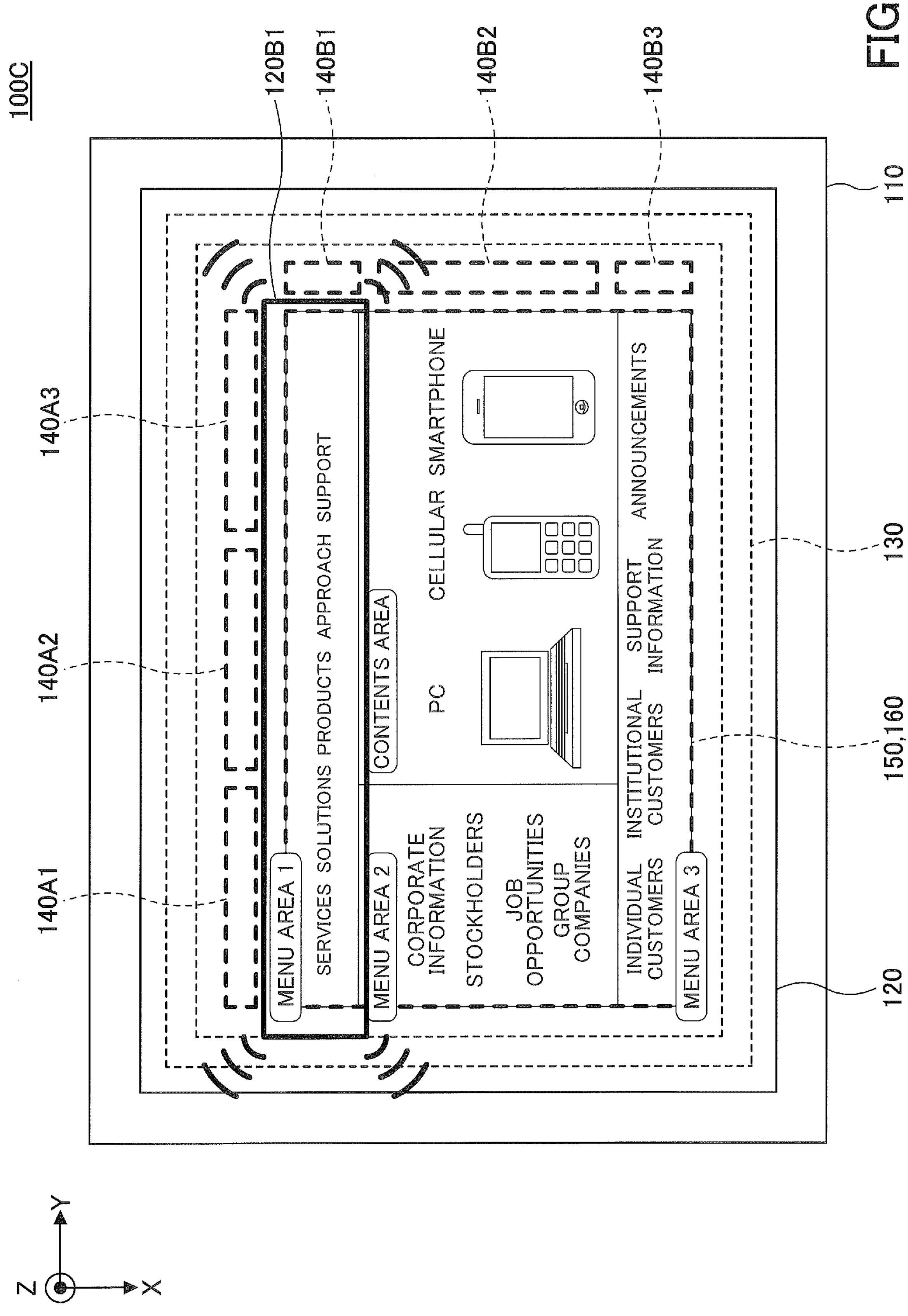
100C
120B1
140B1
140B2
140B3
140A1
140A2
140A3
110
120
130
150,160
MENU AREA 1
SERVICES SOLUTIONS PRODUCTS APPROACH SUPPORT
MENU AREA 2
CORPORATE INFORMATION
STOCKHOLDERS
JOB OPPORTUNITIES
GROUP COMPANIES
CONTENTS AREA
PC
CELLULAR
SMARTPHONE
MENU AREA 3
INDIVIDUAL CUSTOMERS
INSTITUTIONAL CUSTOMERS
SUPPORT INFORMATION
ANNOUNCEMENTS
Z
Y
X

FIG.57

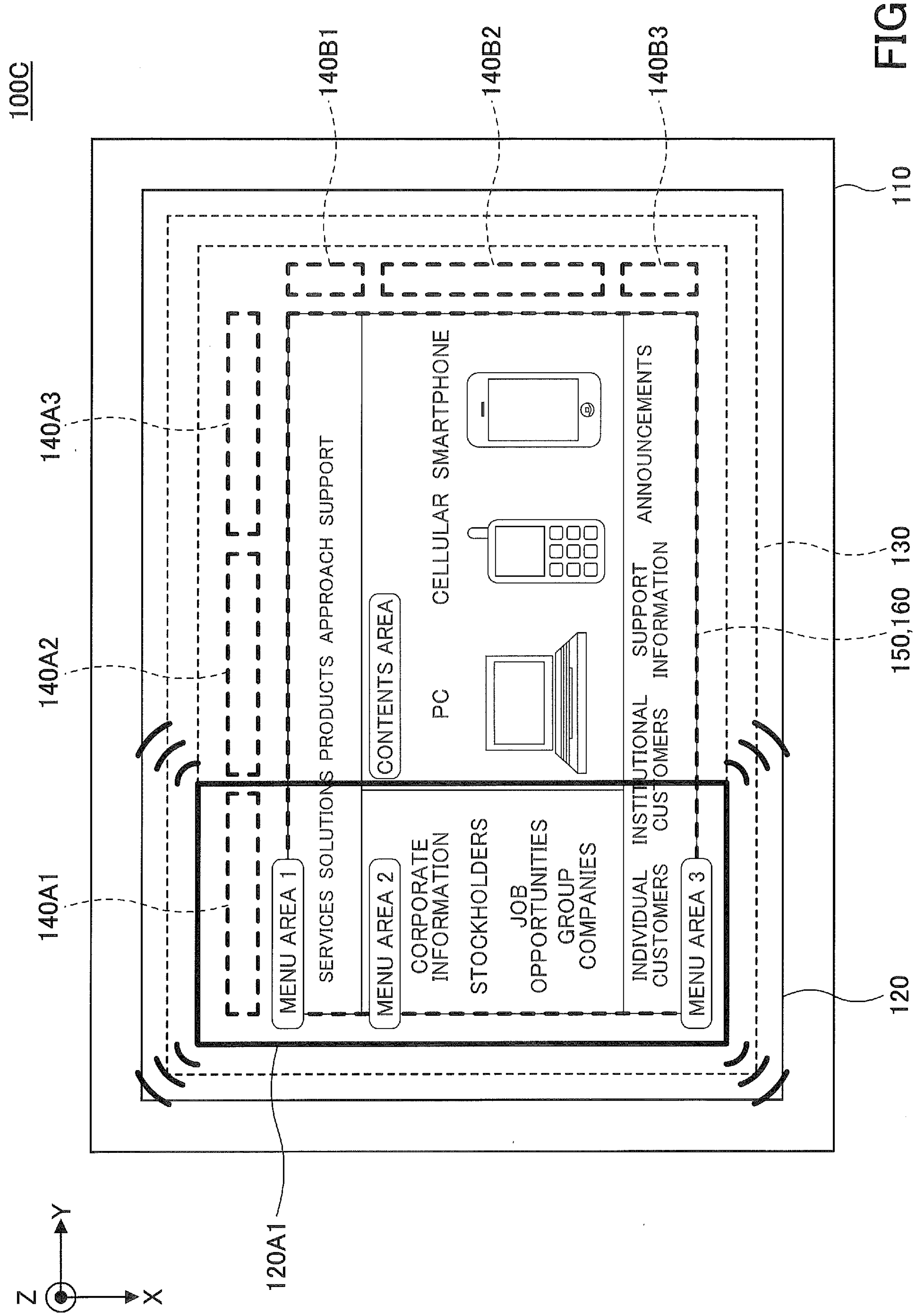
100C
140A1
140A2
140A3
140B1
140B2
140B3
110
130
150,160
120
120A1
MENU AREA 1
SERVICES SOLUTIONS PRODUCTS APPROACH SUPPORT
MENU AREA 2
CORPORATE INFORMATION
STOCKHOLDERS
JOB OPPORTUNITIES
GROUP COMPANIES
CONTENTS AREA
PC
CELLULAR
SMARTPHONE
MENU AREA 3
INDIVIDUAL CUSTOMERS
INSTITUTIONAL CUSTOMERS
SUPPORT INFORMATION
ANNOUNCEMENTS
Z
Y
X

FIG.58

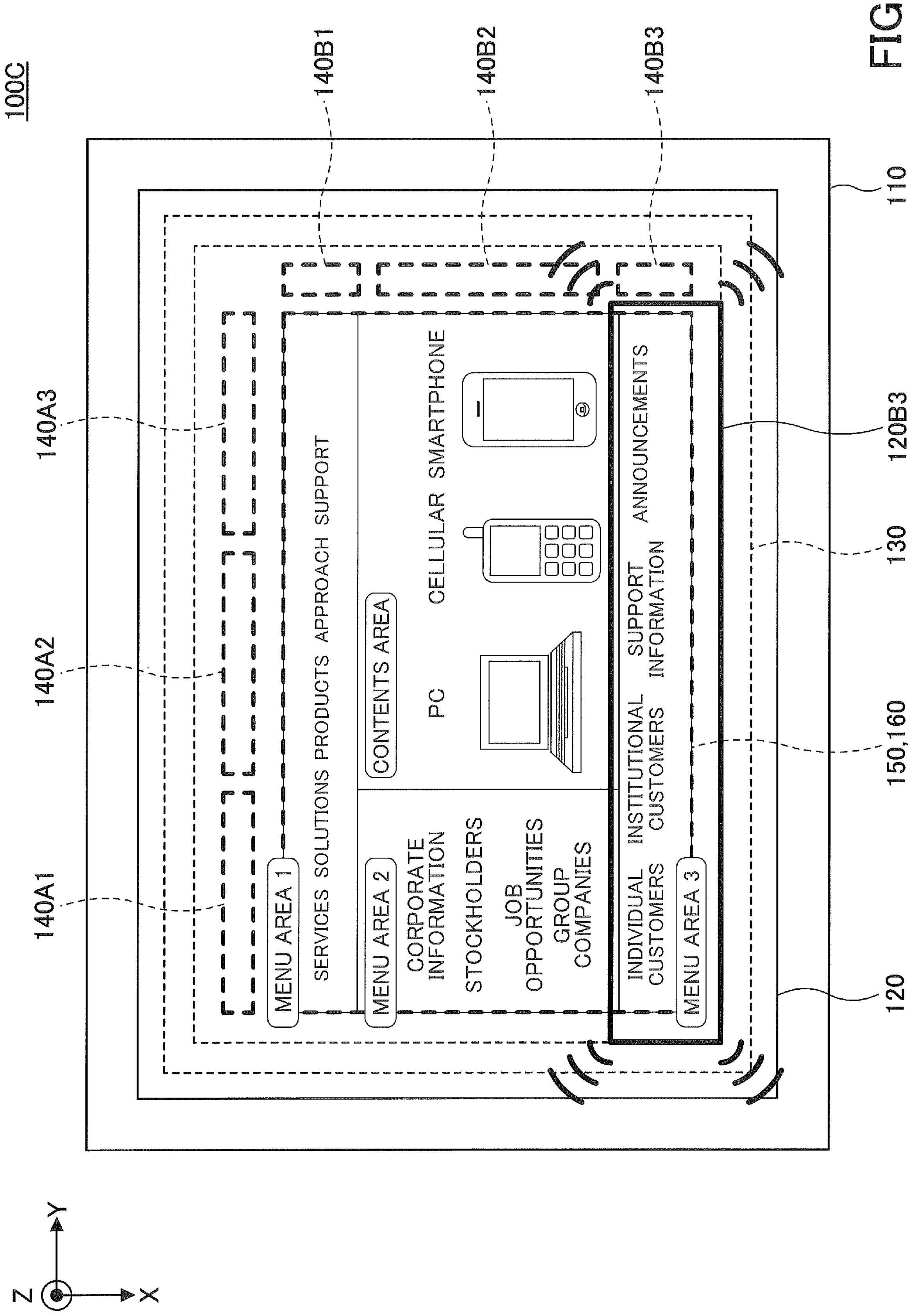
100C
140A1
140A2
140A3
140B1
140B2
140B3
MENU AREA 1
SERVICES SOLUTIONS PRODUCTS APPROACH SUPPORT
MENU AREA 2
CORPORATE INFORMATION
STOCKHOLDERS
JOB OPPORTUNITIES
GROUP COMPANIES
CONTENTS AREA
PC
CELLULAR
SMARTPHONE
INDIVIDUAL CUSTOMERS
INSTITUTIONAL CUSTOMERS
SUPPORT INFORMATION
ANNOUNCEMENTS
MENU AREA 3
110
120B3
130
150,160
120
Z
Y
X

FIG.59

FIG.60

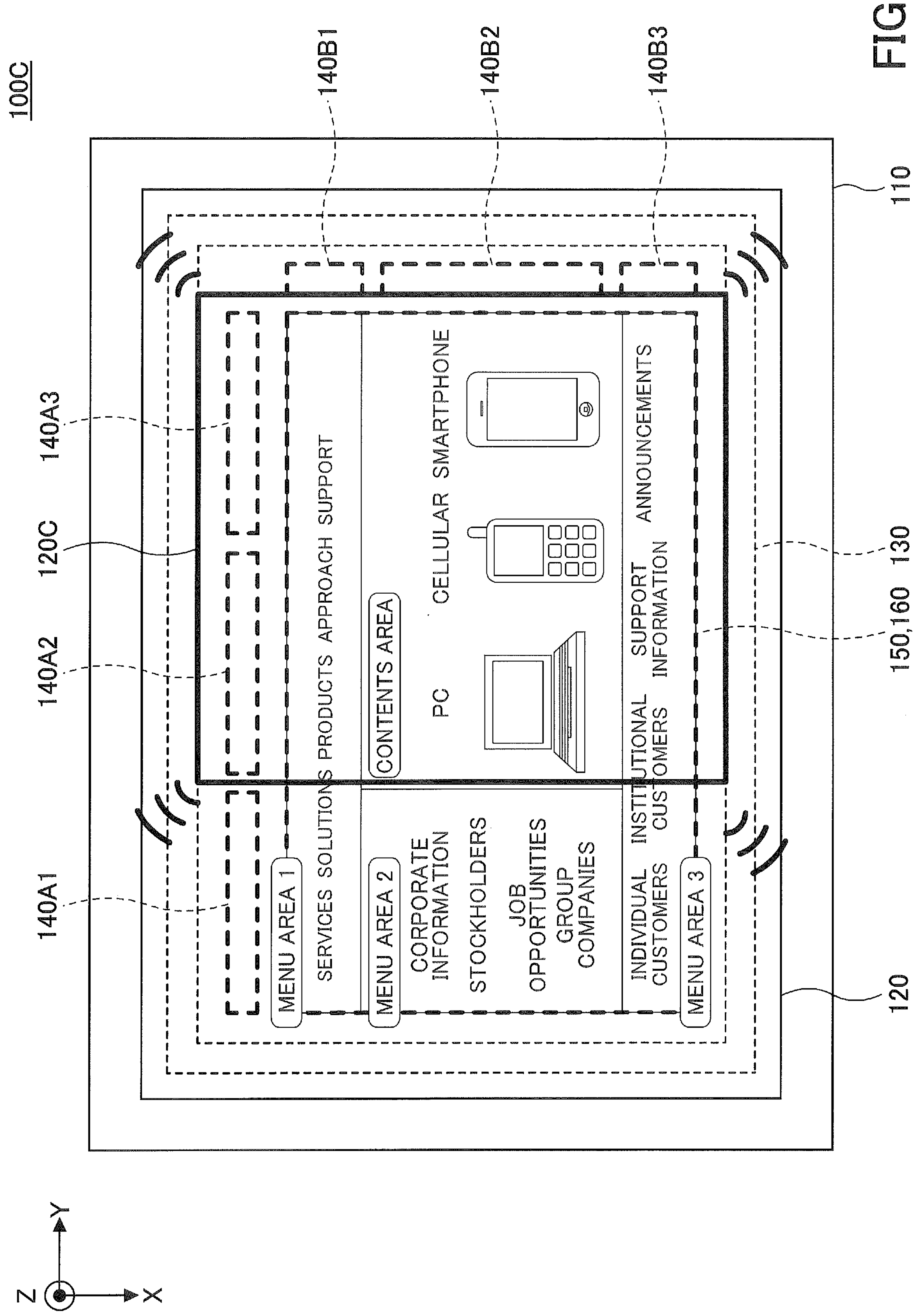
100C
140A1
140A2
120C
140A3
140B1
140B2
140B3
110
130
150,160
120
MENU AREA 1
SERVICES SOLUTIONS PRODUCTS APPROACH SUPPORT
MENU AREA 2
CORPORATE INFORMATION
STOCKHOLDERS
JOB OPPORTUNITIES
GROUP COMPANIES
CONTENTS AREA
PC
CELLULAR
SMARTPHONE
MENU AREA 3
INDIVIDUAL CUSTOMERS
INSTITUTIONAL CUSTOMERS
SUPPORT INFORMATION
ANNOUNCEMENTS
Z
X
Y

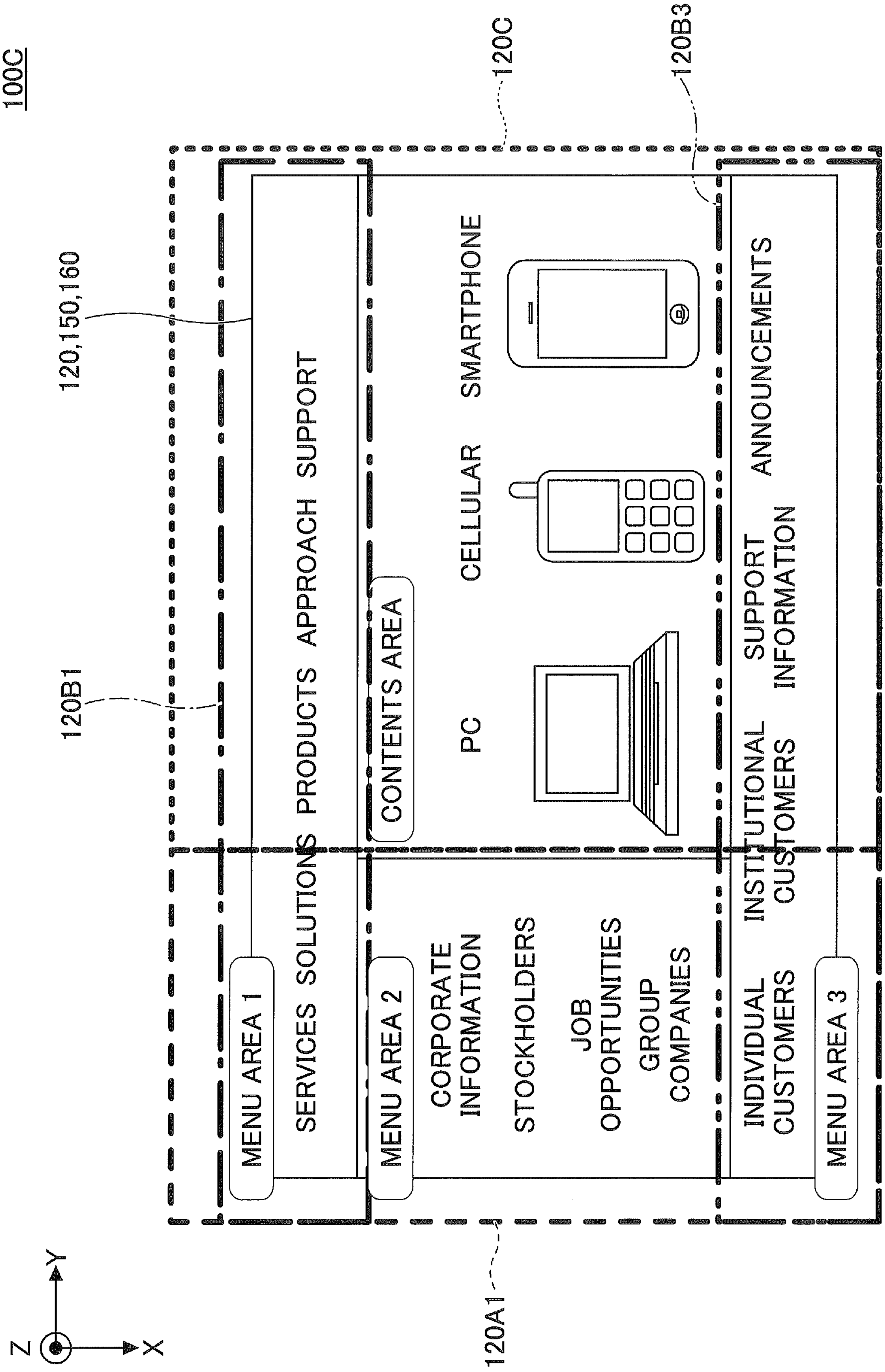

100C
120,150,160
120B1
120C
120B3
120A1
MENU AREA 1
SERVICES SOLUTIONS PRODUCTS APPROACH SUPPORT
MENU AREA 2
CORPORATE INFORMATION
STOCKHOLDERS
JOB OPPORTUNITIES
GROUP COMPANIES
CONTENTS AREA
PC
CELLULAR
SMARTPHONE
MENU AREA 3
INDIVIDUAL CUSTOMERS
INSTITUTIONAL CUSTOMERS
SUPPORT INFORMATION
ANNOUNCEMENTS
Z
Y
X


FIG.61

FIG.62

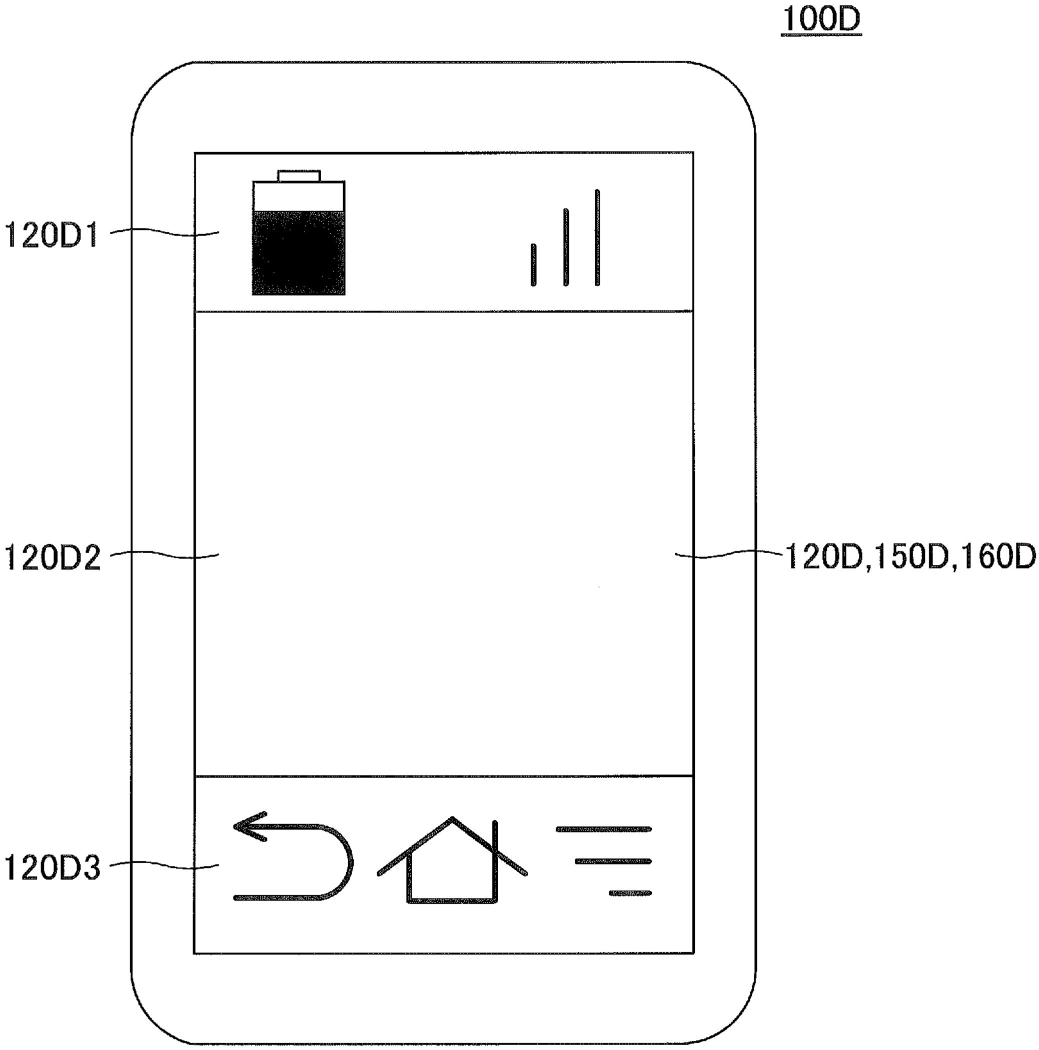

FIG.63

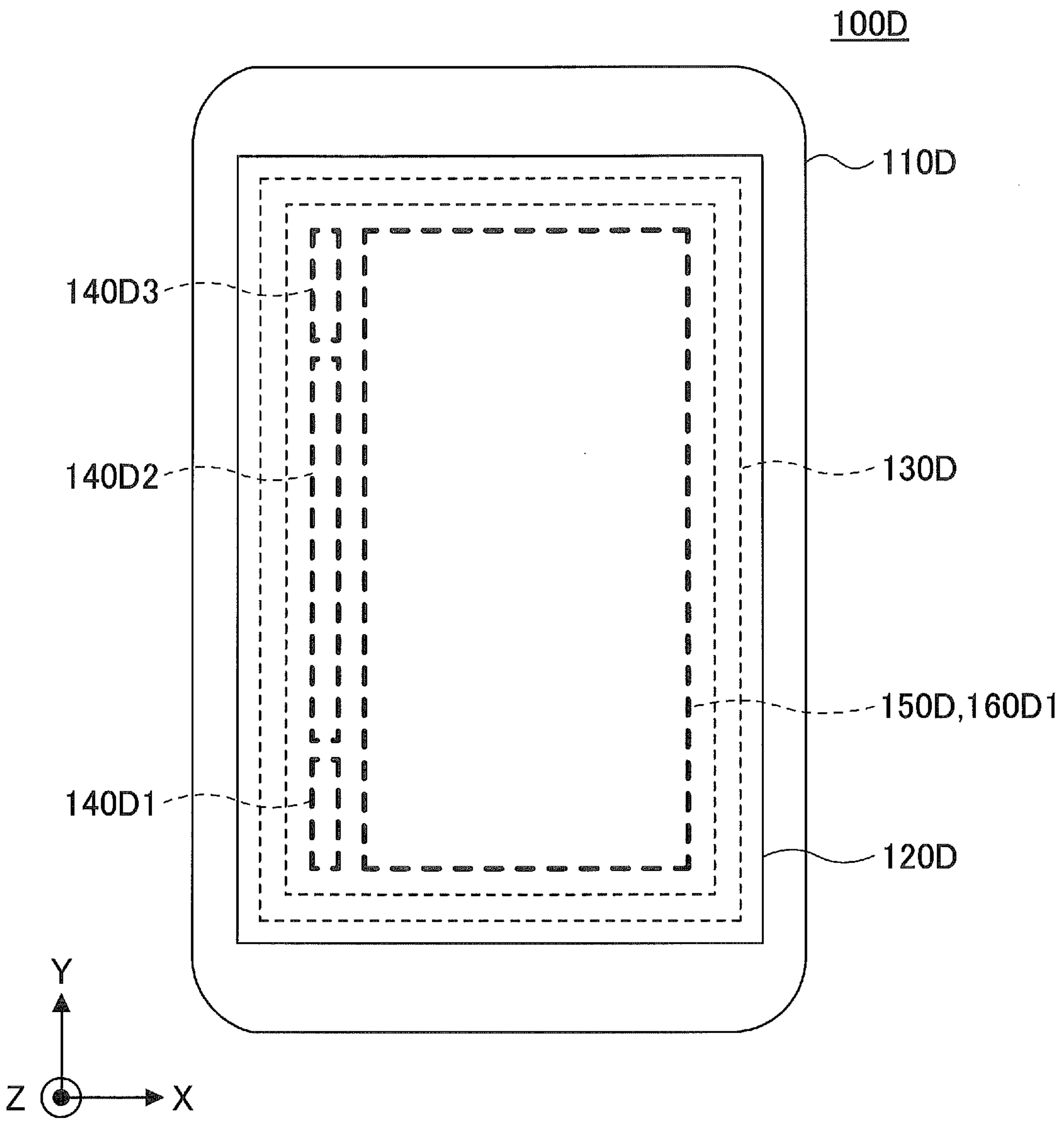

FIG.64

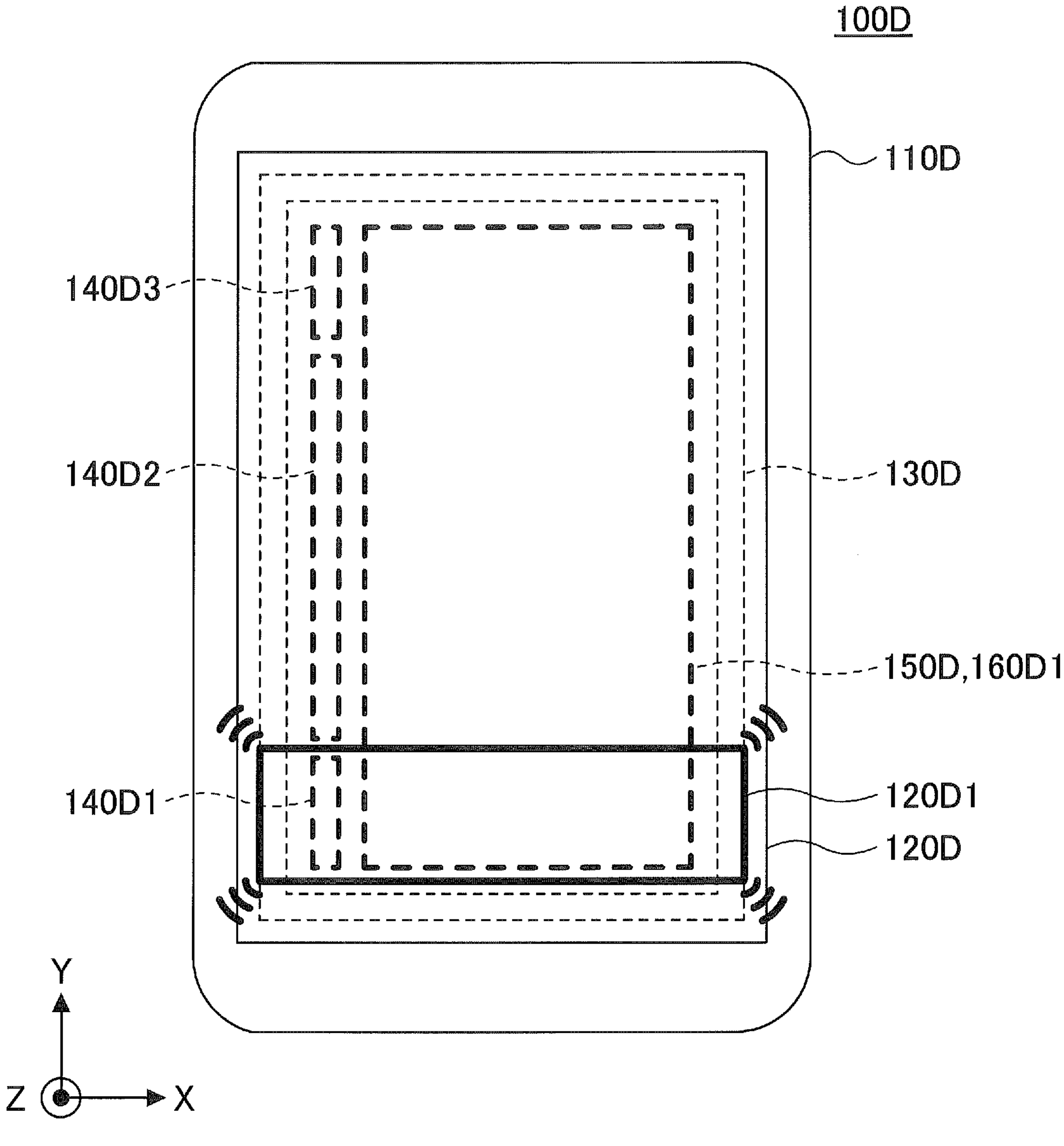

FIG.65

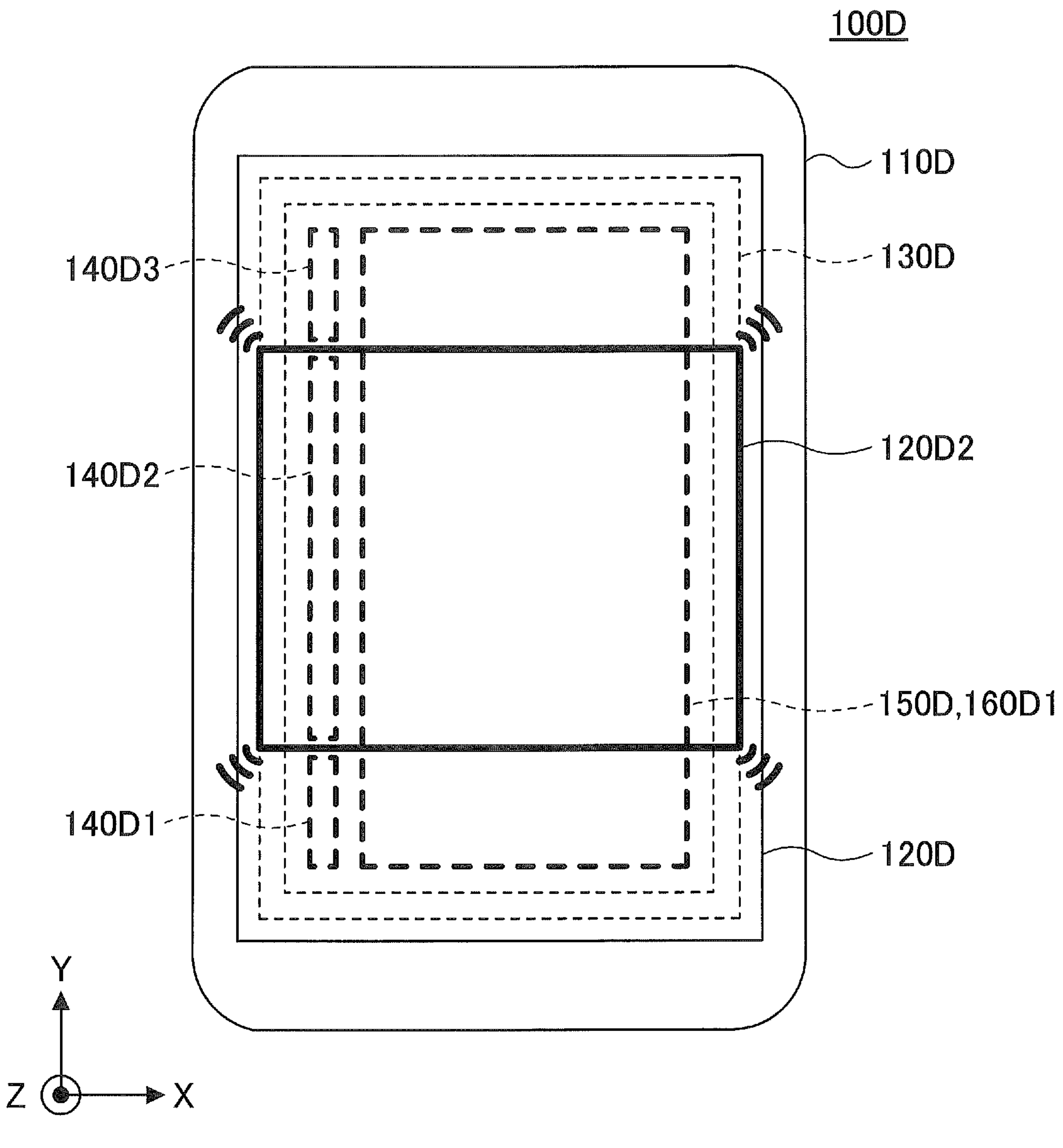

FIG.66

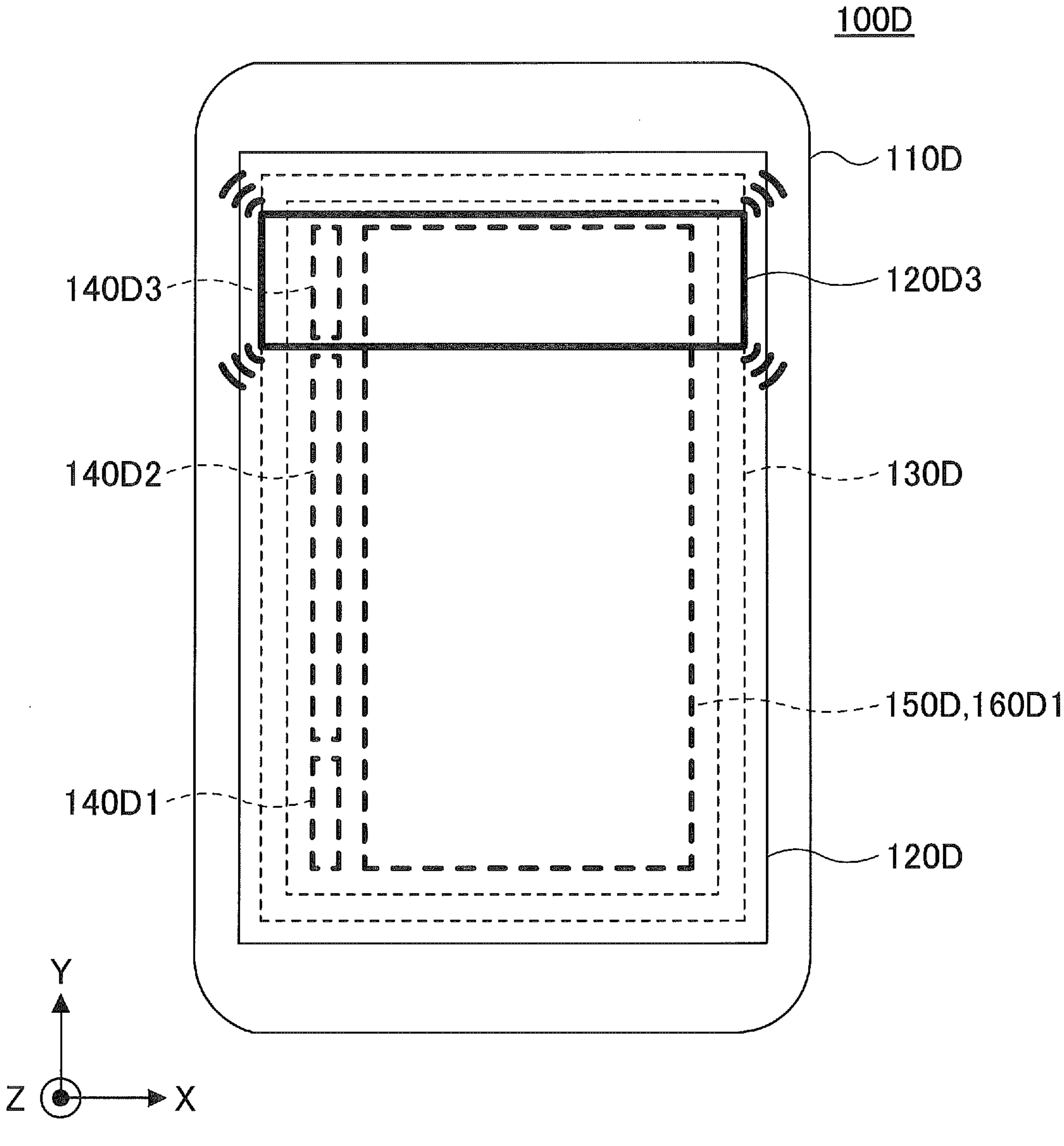

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012123689 A
- EP 2801967 A1
- EP 2590067 A2
- EP 2778856 A1


### Non-patent literature cited in the description


- Printed-matter Typecasting Method for Haptic Feel Design and Sticky-band Illusion. *Proceedings of the eleventh lecture meeting held by the system integration division of the Society of Instrument and Control Engineers (SI2010 in Sendai),* December 2010, 174-177
- Fishbone Tactile Illusion. *Proceedings of the tenth convention of the Virtual Reality Society of Japan,* September 2005